# EUROPEAN PATENT APPLICATION

(11) **EP 2 561 759 A1**
(43) Date of publication of application: **27.02.2013**
(21) Application number: 11179019.2
(22) Date of filing: 26.08.2011
(51) Int. Cl.: A01N 43/52, A01P 21/00

(54) **Fluoroalkyl-substituted 2-amidobenzimidazoles and their effect on plant growth**

(71) Applicant: Bayer CropScience AG, 40789 Monheim (DE)
(72) Inventor: The designation of the inventor has not yet been filed

(57) **Abstract**

Use of fluoroalkyl-substituted 2-amidobenzimidazoles of the formula (I), or agriculturally acceptable salts thereof, 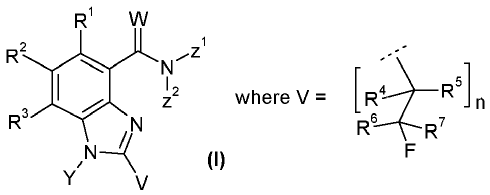 for the treatment of plants for inducing growth regulating responses on plants, on seeds from which they grow or on the locus in which they grow in their normal habitat and in the absence of extraordinary environmental conditions and which result in superior growth of these treated plants, certain parts of these plants or, more generally, crop yield.

## Description

The present invention relates to the use of fluoroalkyl-substituted 2-amidobenzimidazoles for the treatment of plants for inducing growth regulating responses on plants, on seeds from which they grow or on the locus in which they grow in their normal habitat and in absence of extraordinary environmental conditions and which result in superior growth of these treated plants, certain parts of these plants or, more generally, crop yield.

It is known that particular substituted benzimidazoles can be used as pesticides (cf. WO94/11349), but no compounds covered by the claims of the present application are disclosed explicitly. It is also known that substituted amidobenzimidazoles can be used as active pharmaceutical ingredients (cf. WO2000029384) and for cosmetic uses (cf. WO2001082877). WO97/04771 likewise describes the pharmaceutical use of predominantly aryl-substituted benzimidazoles, while WO2000032579 describes heterocyclyl-substituted benzimidazoles, but in none of the before mentioned publications it is taught or even suggested that plant growth can be stimulated by this class of compounds.

European patent application EP 10155436.8 and International patent application PCT/EP2011/053087 already disclose the use of such fluoroalkyl-substituted 2-amidobenzimidazoles to enhance the tolerance of plants towards abiotic stress conditions.

The term "method for plant growth regulation" or the term "growth regulation process" or the use of the words "plant growth regulation" or other terms using the word "regulate" as used in instant specification relate to a variety of plant responses that improve some characteristic of the plant. "Plant growth regulators" are compounds which possess activity in one or more growth regulation process(es) of a plant. Plant growth regulation is distinguished here from pesticidal action or growth reduction, sometimes also defined as a plant growth regulation, the intention of which, however, is to destroy or stunt the growth of a plant. For this reason, the compounds used in the practice of this invention are used in amounts which are non-phytotoxic with respect to the plant being treated but which stimulate the growth of the plant or certain parts thereof. Therefore, such compounds may also be called "plant stimulants", their action may be named "plant growth stimulation".

Plant growth regulation is a desirable way to improve plants and their cropping so as to obtain improved plant growth and better conditions in agriculture practice compared to non-treated plants. These kinds of molecules can either inhibit or promote cellular activities. This means that plant growth regulators identified in plants most often regulate division, elongation and differentiation of plant cells in a way that, most often, they have multiple effects in plants. The trigger event can be seen to be different in plants in comparison to the one known from animals.

On the molecular level, plant growth regulators may work by affecting membrane properties, controlling gene expression or affecting enzyme activity or being active in a combination of at least two of the before mentioned types of interaction.
Plant growth regulators are chemicals either of natural origin, also called plant hormones (like non-peptide hormones e.g. auxins, giberrellins, cytokinins, ethylene, brassinosteroids or abscisic acid, and salicilic acid), lipooligosaccharides (e.g. Nod factors), peptides (e.g. systemin), fatty acid derivatives (e.g. jasmonates), and oligosaccharins (for review see: Biochemistry & Molecular Biology of the Plant (2000); eds. Buchanan, Gruissem, Jones, pp. 558-562; and 850-929), or they can be synthetically produced compounds (like derivatives of naturally occurring plant growth hormones, ethephon). Plant growth regulators which work at very small concentrations can be found in many cells and tissues, but they seem to be concentrated in meristems and buds.

The mode of action of existing plant growth regulators is often not known. Various targets are discussed and among those, most of the affected molecules are involved in cell division regulation, like arresting the cell cycle in stage G1 or G2, respectively, others for signaling drought stress responses (Biochemistry & Molecular Biology of the Plant (2000); eds. Buchanan, Gruissem, Jones, pp. 558-560). In any case, the hormone control can be identified as an extremely complex cascade of up and down regulations which, for example, can lead to a growth stimulation of one organ or cell typus of a plant but also can lead to a repression in other organs or cell types of the same plant.

In many cases, kinases are involved either directly or indirectly in plant hormone control and among the kinases, protein kinases are central and highly specific control molecules in respect to cell cycle control. Such kinases are discussed as targets for several plant hormones, as it is the case for auxin and abscisic acid (Biochemistry & Molecular Biology of the Plant (2000); eds. Buchanan, Gruissem, Jones, pp. 542-565 and pp. 980-985; Morgan (1997), Annu. Rev. Cell. Dev. Biol., 13, 261-291; Amon et al. (1993), Cell, 74, pp. 993-1007; Dynlacht et al. (1997), Nature, 389, pp. 149-152; Hunt and Nasmyth (1997), Curr. Opin. Cell. Biol., 9, pp. 765-767; Thomas and Hall (1997), Curr. Opin. Cell Biol., 9, pp. 782-787). The preparation and use of 2-amino-6-oxypurine derivatives as plant growth regulators is described in WO20051117.

Since, however, the ecologic and economic demands on modern crop treatment compositions are increasing constantly, for example with respect to toxicity, selectivity, application rate, formation of residues and favourable manufacture, there is a constant need to develop novel crop treatment compositions which have advantages over those known, at least in some areas. It was therefore an object of the present invention to provide further compounds to be applied on plants, on seeds from which they grow or on the locus in which they grow in their normal habitat and in absence of any kind of abiotic stress conditions for growth regulating responses. In this regard it should be mentioned that the term "absence of any kind of abiotic stress conditons" is to be understood in the context of the present invention to mean that plants or seeds are not exposed to extraordinary environmental conditions such as extreme drought, cold and hot conditions, osmotic stress, waterlogging, elevated soil salinity, elevated exposure to minerals, ozone conditions, strong light conditions, limited availability of nitrogen nutrients or limited availability of phosphorus nutrients, particularly extraordinary environmental conditions beyond normal environmental fluctuations that may occur under normal plant growing conditions. Growing in the absence of abiotic stress conditions thus encompasses growing plants in field conditions whereby the growing conditions, including nutrient supply, temperature, water supply, and other conditions are considered average to optimal for the particular crop species. Growing in the absence of abiotic stress conditions also encompasses growing plants under greenhouse conditions which are considered average to optimal for the crop species.

The present invention relates to the use of one or more fluoroalkyl-substituted 2-amidobenzimidazoles of formula (I) or agriculturally acceptable salts thereof in an effective plant growth regulating, preferably non-phytotoxic amount to be applied to the plants, the seeds from which they grow, or to the locus in which they grow in their normal habitat and in absence of extraordinary environmental conditions, for growth and/or yield increase 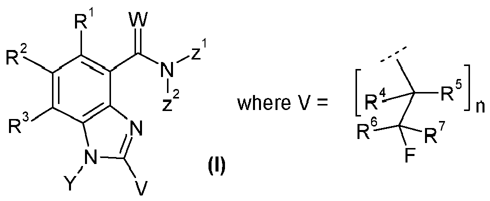 wherein
- R¹, R², R³: are each independently H, halogen, branched or unbranched alkyl, cycloalkyl, alkenyl, alkynyl, aryl, arylalkyl, heteroaryl, alkoxyalkyl, alkylthio, fluoroalkylthio, haloalkyl, alkoxy, or haloalkoxy;
- R⁴: is H, unbranched alkyl, halogen, haloalkyl, branched alkyl, unbranched alkenyl, branched alkenyl, cycloalkyl, alkoxy, haloalkoxy, cycloalkylalkoxy, alkynylalkoxy, alkenylalkoxy, alkenyloxyalkoxy, alkyloxyalkoxy, alkylaminoalkoxy, bisalkylaminoalkoxy, or cycloalkylaminoalkoxy;
- R⁵: is H, unbranched alkyl, halogen, haloalkyl, branched alkyl, cycloalkyl, cycloalkenyl, alkoxy, or haloalkoxy;
- R⁶: is H, unbranched alkyl, halogen, haloalkyl, branched alkyl, cycloalkyl, cycloalkenyl, alkoxy, haloalkoxy, cycloalkylalkoxy, alkynylalkoxy, alkenylalkoxy, alkenyloxyalkoxy, alkyloxyalkoxy, alkylaminoalkoxy, bisalkylaminoalkoxy, or cycloalkylaminoalkoxy;
- R⁷: is H, unbranched alkyl, halogen, haloalkyl, branched alkyl, cycloalkyl, cycloalkenyl, alkoxy, haloalkoxy, cycloalkylalkoxy, alkynylalkoxy, alkenylalkoxy, alkenyloxyalkoxy, alkyloxyalkoxy, alkylaminoalkoxy, bisalkylaminoalkoxy, or cycloalkylaminoalkoxy;
- n: is 0, 1, 2, 3, 4, 5, or 6;
- W: is oxygen, or sulfur;
- Y: is H, unbranched or branched alkyl, cycloalkyl, cycloalkylalkyl, cycloalkenyl, cyanoalkyl, unbranched or branched alkenylalkyl, branched or unbranched haloalkyl, alkynylalkyl, arylalkyl, heteroarylalkyl, alkylcarbonyl, cycloalkylcarbonyl, arylcarbonyl, arylalkylcarbonyl, alkoxycarbonyl, alkylsulfonyl, cycloalkylsulfonyl, arylsulfonyl, heteroarylsulfonyl, alkoxycarbonylcarbonyl, arylalkoxycarbonylcarbonyl, alkylaminothiocarbonyl, alkylaminocarbonyl, or alkoxyalkyl;
- Z¹: is H, unbranched or branched alkyl, cycloalkyl, halogen, unbranched or branched alkylalkenyl, branched or unbranched haloalkyl, alkynyl, alkenyl, cyanoalkyl, arylalkyl, heteroarylalkyl, alkylcarbonyl, alkoxycarbonyl, alkylsulfonyl, arylsulfonyl, cycloalkylsulfonyl, alkylsulfinyl, arylsulfinyl, cycloalkylsulfinyl, or alkoxycarbonylalkyl;
and
- Z²: is H, unbranched or branched alkyl, cycloalkyl, unbranched or branched alkylalkenyl, branched or unbranched haloalkyl, alkynyl, alkenyl, cyanoalkyl, arylalkyl, heteroarylalkyl, alkylcarbonyl, or alkoxycarbonyl;
or
- Z¹ and Z²: together are part of an optionally substituted sulfilimine or amidine group or form an iminophosphorane.

The compounds of the formula (I) can form salts by addition of a suitable inorganic or organic acid, for example mineral acids, for example HCl, HBr, H₂SO₄, H₃PO₄ or HNO₃, or organic acids, for example carboxylic acids such as formic acid, acetic acid, propionic acid, oxalic acid, lactic acid or salicylic acid, or sulfonic acids, for example p-toluenesulfonic acid, onto a basic group, for example amino, alkylamino, dialkylamino, piperidino, morpholino or pyridino. These salts then contain the conjugate base of the acid as the anion.

Suitable substituents present in deprotonated form, for example sulfonic acids or carboxylic acids, can form internal salts with groups which are themselves protonable, such as amino groups.

The compounds of the formula (I) and agriculturally acceptable salts thereof used in accordance with the invention are also referred to hereinafter as "compounds of the formula (I)" for short.

Preference is given to the inventive use of compounds of the formula (I) or agriculturally acceptable salts thereof, in which
- R¹, R², R³: are each independently H, fluorine, chlorine, bromine, iodine, branched or unbranched (C₁-C₆)-alkyl, (C₃-C₇)-cycloalkyl, unbranched (C₂-C₆)-alkenyl, branched (C₃-C₆)-alkenyl, (C₂-C₆)-alkynyl, aryl, heteroaryl, aryl-(C₁-C₆)-alkyl, (C₁-C₆)-alkoxy-(C₁-C₆)-alkyl, (C₁-C₆)-alkylthio, (C₁-C₆)-fluoroalkylthio, (C₁-C₆)-haloalkyl, (C₁-C₆)-alkoxy, or (C₁-C₆)-haloalkoxy;
- R⁴: is H, unbranched (C₁-C₆)-alkyl, fluorine, chlorine, bromine, iodine, (C₁-C₆)-haloalkyl, branched (C₃-C₆)-alkyl, unbranched (C₂-C₆)-alkenyl, branched (C₃-C₆)-alkenyl, (C₃-C₇)-cycloalkyl, (C₁-C₈)-alkoxy, (C₁-C₆)-alkylthio, (C₁-C₆)-haloalkoxy, (C₃-C₇)-cycloalkyl-(C₁-C₆)-alkoxy, (C₂-C₆)-alkynyl-(C₁-C₆)-alkoxy, (C₂-C₆)-alkenyl-(C₁-C₆)-alkoxy, (C₂-C₆)-alkenyloxy-(C₁-C₆)-alkoxy, (C₁-C₆)- alkyloxy-(C₁-C₆)-alkoxy, (C₁-C₆)-alkylamino-(C₁-C₆)-alkoxy, (C₁-C₆)-dialkylamino-(C₁-C₆)-alkoxy, or (C₃-C₇)-cycloalkylamino(C₁-C₆)-alkoxy;
- R⁵: is H, unbranched (C₁-C₆)-alkyl, fluorine, chlorine, bromine, iodine, (C₁-C₆)-haloalkyl, branched (C₃-C₆)-alkyl, (C₃-C₇)-cycloalkyl, or (C₃-C₇)-cycloalkenyl;
- R⁶: is H, unbranched (C₁-C₆)-alkyl, fluorine, chlorine, bromine, iodine, (C₁-C₆)-haloalkyl, branched (C₃-C₆)-alkyl, (C₃-C₇)-cycloalkyl, (C₃-C₇)-cycloalkenyl, (C₁-C₈)-alkoxy, (C₁-C₆)-alkylthio, (C₁-C₆)-haloalkoxy, (C₃-C₇)-cycloalkyl-(C₁-C₆)-alkoxy, (C₂-C₆)-alkynyl-(C₁-C₆)-alkoxy, (C₂-C₆)-alkenyl-(C₁-C₆)-alkoxy, (C₂-C₆)-alkenyloxy-(C₁-C₆)-alkoxy, (C₁-C₆)-alkyloxy-(C₁-C₆)-alkoxy, (C₁-C₆)-alkylamino-(C₁-C₆)-alkoxy, (C₁-C₆)-dialkylamino-(C₁-C₆)-alkoxy, or (C₃-C₇)-cycloalkylamino(C₁-C₆)-alkoxy;
- R⁷: is H, unbranched (C₁-C₆)-alkyl, fluorine, chlorine, bromine, iodine, (C₁-C₆)-haloalkyl, branched (C₃-C₆)-alkyl, (C₃-C₇)-cycloalkyl, or (C₃-C₇)-cycloalkenyl;
- n: is 0, 1, 2, 3, 4, or 5;
- W: is oxygen, or sulfur, preferably oxygen;
- Y: is H, unbranched or branched (C₁-C₈)-alkyl, (C₃-C₇)-cycloalkyl, (C₃-C₇)-cycloalkyl-(C₁-C₆)-alkyl, (C₁-C₈)-cyanoalkyl, (C₃-C₇)-cycloalkenyl, unbranched or branched (C₂-C₆)-alkenyl-(C₁-C₆)-alkyl, (C₁-C₆)-haloalkyl, (C₂-C₆)-alkynyl-(C₁-C₆)-alkyl, aryl-(C₁-C₆)-alkyl, heteroaryl-(C₁-C₆)-alkyl, (C₁-C₆)-alkylcarbonyl, (C₃-C₇)-cycloalkylcarbonyl, arylcarbonyl, aryl-(C₁-C₆)-alkylcarbonyl, (C₁-C₆)-alkoxycarbonyl, (C₁-C₆)-alkylsulfonyl, (C₃-C₇)-cycloalkylsulfonyl, arylsulfonyl, heteroarylsulfonyl, (C₁-C₆)-alkoxycarbonylcarbonyl, aryl-(C₁-C₆)-alkoxycarbonylcarbonyl, (C₁-C₆)-alkylaminothiocarbonyl, (C₁-C₆)-alkylaminocarbonyl, or (C₁-C₆)-alkoxy-(C₁-C₆)-alkyl;
- Z¹: is H, (C₁-C₈)-alkyl, (C₃-C₇)-cycloalkyl, chlorine, bromine, (C₂-C₆)-alkenyl-(C₁-C₆)-alkyl, (C₂-C₆)-alkynyl, (C₂-C₆)-alkenyl, (C₁-C₈)-haloalkyl, (C₁-C₈)-cyanoalkyl, heteroaryl-(C₁-C₈)-alkyl, aryl-(C₁-C₈)-alkyl, (C₁-C₆)-alkylcarbonyl, (C₁-C₆)- alkoxycarbonyl, (C₁-C₆)-alkylsulfonyl, arylsulfonyl, (C₃-C₇)-cycloalkylsulfonyl, (C₁-C₆)-alkylsulfinyl, arylsulfinyl, (C₃-C₇)-cycloalkylsulfinyl, or (C₁-C₆)-alkoxycarbonyl-(C₁-C₆)-alkyl;
and
- Z²: is H, (C₁-C₈)-alkyl, (C₃-C₇)-cycloalkyl, (C₂-C₆)-alkenyl-(C₁-C₆)-alkyl, (C₂-C₆)-alkynyl, (C₂-C₆)-alkenyl, (C₁-C₈)-haloalkyl, (C₁-C₈)-cyanoalkyl, heteroaryl-(C₁-C₈)-alkyl, aryl-(C₁-C₈)-alkyl, (C₁-C₆)-alkylcarbonyl, or (C₁-C₆)-alkoxycarbonyl;
or

Z¹ and Z² together form an N-(bis(C₁-C₆)-alkyl)sulfanylidene, N-(aryl-(C₁-C₆)-alkyl)sulfanylidene, N-(bis(C₃-C₇)-cycloalkyl)sulfanylidene, N-((C₁-C₆)-alkyl-(C₃-C₇)-cycloalkyl)sulfanylidene group or an N,N-di-(C₁-C₆)-alkylformylidene group.

Particular preference is given to the inventive use of compounds of the formula (I) or agriculturally acceptable salts thereof, in which
- R¹, R², R³: are each independently H, fluorine, chlorine, bromine, iodine, branched or unbranched (C₁-C₄)-alkyl, (C₃-C₆)-cycloalkyl, (C₂-C₄)-alkenyl, (C₂-C₄)-alkynyl, aryl, heteroaryl, aryl-(C₁-C₄)-alkyl, (C₁-C₄)-alkoxy-(C₁-C₄)-alkyl, (C₁-C₄)-alkylthio, (C₁-C₄)-fluoroalkylthio, (C₁-C₄)-haloalkyl, (C₁-C₄)-alkoxy, or (C₁-C₄)-haloalkoxy;
- R⁴: is H, unbranched (C₁-C₄)-alkyl, fluorine, chlorine, bromine, (C₁-C₄)-haloalkyl, branched (C₃-C₆)-alkyl, unbranched (C₂-C₄)-alkenyl, branched (C₃-C₆)-alkenyl, (C₃-C₆)-cycloalkyl, (C₁-C₈)-alkoxy, (C₁-C₄)-alkylthio, (C₁-C₆)-haloalkoxy, (C₃-C₆)-cycloalkyl-(C₁-C₄)-alkoxy, (C₂-C₆)-alkynyl-(C₁-C₄)-alkoxy, (C₂-C₆)-alkenyl-(C₁-C₄)-alkoxy, (C₂-C₆)-alkenyloxy-(C₁-C₄)-alkoxy, (C₁-C₆)-alkyloxy-(C₁-C₄)-alkoxy, (C₁-C₆)-alkylamino-(C₁-C₄)-alkoxy, (C₁-C₆)-dialkylamino-(C₁-C₄)-alkoxy, or (C₃-C₆)-cycloalkylamino(C₁-C₄)-alkoxy;
- R⁵: is H, unbranched (C₁-C₄)-alkyl, fluorine, chlorine, bromine, (C₁-C₄)-haloalkyl, branched (C₃-C₆)-alkyl, (C₃-C₆)-cycloalkyl, or (C₃-C₆)-cycloalkenyl;
- R⁶: is H, unbranched (C₁-C₄)-alkyl, fluorine, chlorine, bromine, (C₁-C₄)-haloalkyl, branched (C₃-C₆)-alkyl, (C₃-C₆)-cycloalkyl, (C₃-C₆)-cycloalkenyl, (C₁-C₈)-alkoxy, (C₁-C₄)-alkylthio, (C₁-C₆)-haloalkoxy, (C₃-C₆)-cycloalkyl-(C₁-C₄)-alkoxy, (C₂-C₆)-alkynyl-(C₁-C₄)-alkoxy, (C₂-C₆)-alkenyl-(C₁-C₄)-alkoxy, (C₂-C₆)-alkenyloxy-(C₁-C₄)-alkoxy, (C₁-C₆)-alkyloxy-(C₁-C₄)-alkoxy, (C₁-C₆)-alkylamino-(C₁-C₄)-alkoxy, (C₁-C₆)-dialkylamino-(C₁-C₄)-alkoxy, or (C₃-C₆)-cycloalkylamino(C₁-C₄)-alkoxy,;
- R⁷: is H, unbranched (C₁-C₄)-alkyl, fluorine, chlorine, bromine, (C₁-C₄)-haloalkyl, branched (C₃-C₆)-alkyl, (C₃-C₆)-cycloalkyl, or (C₃-C₆)-cycloalkenyl;
- n: is 0, 1, 2, 3,or 4;
- W: is oxygen, sulfur, preferably oxygen;
- Y: is H, unbranched or branched (C₁-C₆)-alkyl, (C₃-C₆)-cycloalkyl, (C₃-C₆)-cycloalkyl-(C₁-C₄)-alkyl, (C₃-C₆)-cycloalkenyl, (C₁-C₄)-cyanoalkyl, unbranched or branched (C₂-C₄)-alkenyl-(C₁-C₄)-alkyl, (C₁-C₄)-haloalkyl, (C₂-C₄)-alkynyl-(C₁-C₄)-alkyl, aryl-(C₁-C₄)-alkyl, heteroaryl-(C₁-C₄)-alkyl, (C₁-C₅)-alkylcarbonyl, (C₃-C₆)-cycloalkylcarbonyl, arylcarbonyl, aryl-(C₁-C₄)-alkylcarbonyl, (C₁-C₄)-alkoxycarbonyl, (C₁-C₄)-alkylsulfonyl, (C₃-C₆)-cycloalkylsulfonyl, arylsulfonyl, heteroarylsulfonyl, (C₁-C₄)-alkoxycarbonylcarbonyl, aryl-(C₁-C₄)-alkoxycarbonylcarbonyl, (C₁-C₄)-alkylaminothiocarbonyl, (C₁-C₄)-alkylaminocarbonyl, or (C₁-C₄)-alkoxy-(C₁-C₄)-alkyl;
- Z¹: is H, (C₁-C₆)-alkyl, (C₃-C₆)-cycloalkyl, chlorine, bromine, (C₂-C₆)-alkenyl-(C₁-C₄)-alkyl, (C₂-C₆)-alkynyl, (C₂-C₆)-alkenyl, (C₁-C₆)-haloalkyl, (C₁-C₆)-cyanoalkyl, heteroaryl-(C₁-C₆)-alkyl, aryl-(C₁-C₆)-alkyl, (C₁-C₄)-alkylcarbonyl, (C₁-C₄)-alkoxycarbonyl, (C₁-C₄)-alkylsulfonyl, arylsulfonyl, (C₃-C₆)-cycloalkylsulfonyl, (C₁-C₄)-alkylsulfinyl, arylsulfinyl, (C₃-C₆)-cycloalkylsulfinyl, or (C₁-C₄)-alkoxycarbonyl-(C₁-C₄)-alkyl;
and
- Z²: is H, (C₁-C₆)-alkyl, (C₃-C₆)-cycloalkyl, (C₂-C₆)-alkenyl-(C₁-C₄)-alkyl, (C₂-C₆)-alkynyl, (C₂-C₆)-alkenyl, (C₁-C₆)-haloalkyl, (C₁-C₆)-cyanoalkyl, heteroaryl-(C₁-C₆)-alkyl, aryl-(C₁-C₆)-alkyl, (C₁-C₄)-alkylcarbonyl, or (C₁-C₄)-alkoxycarbonyl;
or
- Z¹ and Z²: together form an N-(bis(C₁-C₅)-alkyl)sulfanylidene, N-(aryl-(C₁-C₅)-alkyl)sulfanylidene, N-(bis(C₃-C₆)-cycloalkyl)sulfanylidene, N-((C₁-C₅)-alkyl-(C₃-C₆)-cycloalkyl)sulfanylidene group or an N,N-di-(C₁-C₄)-alkylformylidene group.

Very particular preference is given to the inventive use of compounds of the formula (I) or agriculturally acceptable salts thereof, in which
- R₁, R₂, R₃: are each independently H, F, Cl, Br, I, CH₃, CF₃, OCH₃, or OCF₃
- W: is oxygen, or sulfur, preferably oxygen;
- n: is 0, 1, 2, 3, or 4;
- Y: is H, methyl, ethyl, n-propyl, n-butyl, isobutyl, isopropyl, n-pentyl, n-hexyl, methylcarbonyl, ethylcarbonyl, n-propylcarbonyl, tert-butylcarbonyl, cyclopropylcarbonyl, cyclobutylcarbonyl, cyclopentylcarbonyl, cyclohexylcarbonyl, methoxycarbonyl, ethoxycarbonyl, prop-1-yn-3-yl, but-2-yn-3-yl, cyanomethyl, 2,2-difluoroethyl, 2,2,2-trifluoroethyl, 2,2,3,3,3-pentafluoropropyl, 3,3,2,2-tetrafluoropropyl, 4,4,4-trifluorobutyl, or methoxycarbonylmethyl;
- V: represents fluoroalkyls having 1 to 4 carbon atoms and 1 to 9, preferably 1 to 6, identical or different halogen atoms with at least one fluorine atom, i.e. partly fluorinated alkyl, perfluoroalkyl, partly fluorinated haloalkyl, where any other halogen atoms present are selected from the group of fluorine, chlorine and bromine, preferably trifluoromethyl, pentafluoroethyl, heptafluoropropyl, nonafluorobutyl, chlorodifluoromethyl, bromodifluoromethyl, dichlorofluoromethyl, bromofluoromethyl, 1-fluoroethyl, 2-fluoroethyl, fluoromethyl, difluoromethyl, 2,2-difluoroethyl, 2,2,2-trifluoroethyl, 2,2-dichloro-2-fluoroethyl, 2-chloro-2,2-difluoroethyl, difluoro-tert-butyl, 1-fluorocyclopropyl, 2-fluorocyclopropyl, 2-fluoro-2-chlorocyclopropyl, 2-bromo-1,1,2-trifluoroethyl, 1,1,2,2-tetrafluoroethyl, 1,2,2,2-tetrafluoroethyl, 2-chloro-1,1,2-trifluoroethyl, 2-chloro-1,1,2,2-tetrafluoroethyl, 1,2,2,3,3,3-hexafluoropropyl, 1-methyl-2,2,2-trifluoroethyl, 1-chloro-2,2,2-trifluoroethyl, 1,2,2,3,3,4,4,4-octafluorobutyl, 1-fluoro-1-methylethyl, n-propoxydifluoromethyl, methoxydifluoromethyl, ethoxydifluoromethyl, n-butoxydifluoromethyl, methoxyethoxydifluoromethyl, n-pentoxydifluoromethyl, 2-methylbutoxydifluoromethyl, 4-methylpentoxydifluoromethyl, n-hexyloxydifluoromethyl, isohexyloxydifluoromethyl, allyloxypropoxydifluoromethyl, methoxypropoxydifluoromethyl, cyclopropylmethoxydifluoromethyl, cyclobutylmethoxydifluoromethyl, but-3-yn-1-yloxydifluoromethyl, pent-4-yn-1-yloxydifluoromethyl, hex-3-yn-1-yloxydifluoromethyl, but-3-en-1-yloxydifluoromethyl, 2,2,2-trifluoroethoxydifluoromethyl, 3,3,3-trifluoropropoxydifluoromethyl, 4,4,4-trifluorobutoxydifluoromethyl, 4-dimethylam inobutoxydifluoromethyl, or 2-(1-methylpyrrolidin-2-yl)ethoxydifluoromethyl;
- Z¹: is H, chlorine, methyl, ethyl, n-propyl, n-butyl, isobutyl, isopropyl, n-pentyl, n-hexyl, cyclopropyl, cyclobutyl, cyclopentyl, cyclohexyl, prop-1-yn-3-yl, but-2-yn-3-yl, cyanomethyl, prop-1-en-3-yl, but-1-en-4-yl, methylsulfonyl, ethylsulfonyl, cyclopropylsulfonyl, isopropylsulfonyl, n-propylsulfonyl, phenylsulfonyl, p-chlorophenylsulfonyl, m-chlorophenylsulfonyl, m,p-dichlorophenylsulfonyl, p-iodophenylsulfonyl, p-trifluoromethoxyphenylsulfonyl, p-methylphenylsulfonyl; methoxycarbonylmethyl, 1-methoxycarbonylethyl, 2-pyridinylmethyl, 2-pyrimidinylmethyl, 2,2-difluoroethyl, 2,2,2-trifluoroethyl, 2,2,3,3,3-pentafluoropropyl, 3,3,2,2-tetrafluoropropyl, or 4,4,4-trifluorobutyl;
and
- Z²: is H, methyl, ethyl, n-propyl, n-butyl, n-pentyl, n-hexyl, cyclopropyl, cyclobutyl, prop-1-yn-3-yl, but-2-yn-3-yl, cyanomethyl, prop-1-en-3-yl, but-1-en-4-yl, methylcarbonyl, ethylcarbonyl, n-propylcarbonyl, tert-butylcarbonyl, cyclopropylcarbonyl, cyclobutylcarbonyl, cyclopentylcarbonyl, cyclohexylcarbonyl, methoxycarbonyl, ethoxycarbonyl, 2-pyridinylmethyl, 2-pyrimidinylmethyl, 2,2-difluoroethyl, 2,2,2-trifluoroethyl, 2,2,3,3,3-pentafluoropropyl, 3,3,2,2-tetrafluoropropyl, or 4,4,4-trifluorobutyl;
or
- Z¹ and Z²: together are N-(di-n-butylsulfanylidene), N-(diisopropylsulfanylidene), N-(di-n-propylsulfanylidene), N-(di-n-pentylsulfanylidene), N-(diisobutylsulfanylidene), N-(cyclobutylisopropylsulfanylidene), N-(n-propylisopropylsulfanylidene), N-(cyclopropylisopropylsulfanylidene), N-(isobutylisopropylsulfanylidene), N,N-dimethylformylidene.

With regard to the compounds of formula (I), the terms used above and below will be elucidated. These are familiar to the person skilled in the art and have especially the definitions elucidated hereinafter:
The term "halogen" means, for example, fluorine, chlorine, bromine or iodine. When the term is used for a radical, "halogen" means, for example, a fluorine, chlorine, bromine or iodine atom.

Alkyl means a straight-chain or branched open-chain, saturated hydrocarbyl radical which has optionally been mono- or polysubstituted. Preferred substituents are halogen atoms, alkoxy groups, haloalkoxy groups, cyano groups, alkylthio groups, haloalkylthio groups or nitro groups, particular preference being given to fluorine, chlorine, bromine or iodine.

Fluoroalkyl means a straight-chain or branched open-chain, saturated and fluorine-substituted hydrocarbyl radical, where at least one fluorine atom is at one of the possible positions.

Perfluoroalkyl means a straight-chain or branched open-chain, saturated and fully fluorine-substituted hydrocarbyl radical, for example CF₃, CF₂CF₃, CF₂CF₂CF₃.

Partly fluorinated alkyl means a straight-chain or branched, saturated hydrocarbyl radical which has been mono- or polysubstituted by fluorine, where the corresponding fluorine atoms may be present as substituents on one or more different carbon atoms of the straight-chain or branched hydrocarbyl chain, for example CHFCH₃, CH₂CH₂F, CH₂CH₂CF₃, CHF₂, CH₂F, CHFCF₂CF₃.

Partly fluorinated haloalkyl means a straight-chain or branched, saturated hydrocarbyl radical which has been substituted by different halogen atoms with at least one fluorine atom, where any other halogen atoms present are selected from the group of fluorine, chlorine, bromine and iodine. The corresponding halogen atoms may be present as substituents on one or more different carbon atoms of the straight-chain or branched hydrocarbyl chain. Partly fluorinated haloalkyl also includes full substitution of the straight or branched chain by halogen including at least one fluorine atom.

Haloalkyl, -alkenyl and -alkynyl mean alkyl, alkenyl or alkynyl partly or fully substituted by identical or different halogen atoms, for example monohaloalkyl, for example CH₂CH₂Cl, CH₂CH₂Br, CHClCH₃, CH₂Cl, CH₂F;
perhaloalkyl, for example CCl₃, CClF₂, CFCl₂, CF₂CClF₂, CF₂CClFCF₃; polyhaloalkyl, for example CH₂CHFCl, CF₂CClFH, CF₂CBrFH, CH₂CF₃; the term "perhaloalkyl" also includes the term "perfluoroalkyl", and the term "polyhaloalkyl" also includes the terms "partly fluorinated alkyl" and "partly fluorinated haloalkyl".

Haloalkoxy is, for example, OCF₃, OCHF₂, OCH₂F, OCF₂CF₃, OCH₂CF₃ and OCH₂CH₂Cl; the situation is corresponding for haloalkenyl and other halogen-substituted radicals.

The expression "(C₁-C₄)-alkyl" is abbreviated notation for alkyl having one to four carbon atoms according to the range stated for carbon atoms, i.e. includes the methyl, ethyl, 1-propyl, 2-propyl, 1-butyl, 2-butyl, 2-methylpropyl or tert-butyl radicals. General alkyl radicals having a wider specified range of carbon atoms, for example "(C₁-C₆)-alkyl", correspondingly also include straight-chain or branched alkyl radicals with a greater number of carbon atoms, i.e. according to the example also the alkyl radicals with 5 and 6 carbon atoms.

Unless stated specifically, in the case of the hydrocarbyl radicals such as alkyl, alkenyl and alkynyl radicals, including in combined radicals, the lower carbon skeletons, for example having 1 to 6 carbon atoms, or in the case of unsaturated groups having 2 to 6 carbon atoms, are preferred. Alkyl radicals, including in the combined radicals such as alkoxy, haloalkyl, etc., mean, for example, methyl, ethyl, n- or i-propyl, n-, i-, t- or 2-butyl, pentyls, hexyls such as n-hexyl, i-hexyl and 1,3-dimethylbutyl, heptyls such as n-heptyl, 1-methylhexyl and 1,4-dimethylpentyl; alkenyl and alkynyl radicals are defined as the possible unsaturated radicals corresponding to the alkyl radicals, where at least one double bond or triple bond is present. Preference is given to radicals having one double bond or triple bond.

Alkenyl especially also includes straight-chain or branched open-chain hydrocarbyl radicals having more than one double bond, such as 1,3-butadienyl and 1,4-pentadienyl, but also allenyl or cumulenyl radicals having one or more cumulated double bonds, for example allenyl (1,2-propadienyl), 1,2-butadienyl and 1,2,3-pentatrienyl. Alkenyl means, for example, vinyl which may optionally be substituted by further alkyl radicals, for example prop-1-en-1-yl, but-1-en-1-yl, allyl, 1-methylprop-2-en-1-yl, 2-methylprop-2-en-1-yl, but-2-en-1-yl, 1-methylbut-3-en-1-yl and 1-methylbut-2-en-1-yl, 2-methylprop-1-en-1-yl, 1-methylprop-1-en-1-yl, 1-methylprop-2-en-1-yl, 2-methylprop-2-en-1-yl, but-2-en-1-yl, but-3-en-1-yl, 1-methylbut-3-en-1-yl or 1-methylbut-2-en-1-yl, pentenyl, 2-methylpentenyl or hexenyl.

Alkynyl especially also includes straight-chain or branched open-chain hydrocarbyl radicals having more than one triple bond or else having one or more triple bonds and one or more double bonds, for example 1,3-butatrienyl or 3-penten-1-yn-1-yl. (C₂-C₆)-Alkynyl means, for example, ethynyl, propargyl, 1-methylprop-2-yn-1-yl, 2-butynyl, 2-pentynyl or 2-hexynyl, preferably propargyl, but-2-yn-1-yl, but-3-yn-1-yl or 1-methylbut-3-yn-1-yl.

The term "cycloalkyl" means a carbocyclic, saturated ring system having preferably 3-8 ring carbon atoms, e.g. cyclopropyl, cyclobutyl, cyclopentyl or cyclohexyl. In the case of optionally substituted cycloalkyl, cyclic systems with substituents are included, also including substituents with a double bond on the cycloalkyl radical, for example an alkylidene group such as methylidene. In the case of optionally substituted cycloalkyl, polycyclic aliphatic systems are also included, for example bicyclo[1.1.0]butan-1-yl, bicyclo[1.1.0]butan-2-yl, bicyclo[2.1.0]pentan-1-yl, bicyclo[2.1.0]pentan-2-yl, bicyclo[2.1.0]pentan-5-yl, bicyclo[2.2.1]hept-2-yl (norbornyl), bicyclo[2.2.2]octan-2-yl, adamantan-1-yl and adamantan-2-yl. The expression "(C₃-C₇)-cycloalkyl" means a brief notation for cycloalkyl having three to 7 carbon atoms, according to the range stated for carbon atoms.

In the case of substituted cycloalkyl, spirocyclic aliphatic systems are also included, for example spiro[2.2]pent-1-yl, spiro[2.3]hex-1-yl, spiro[2.3]hex-4-yl, 3-spiro[2.3]hex-5-yl.

Cycloalkenyl means a carbocyclic, nonaromatic, partially unsaturated ring system having preferably 4-8 carbon atoms, for example 1-cyclobutenyl, 2-cyclobutenyl, 1-cyclopentenyl, 2-cyclopentenyl, 3-cyclopentenyl, or 1-cyclohexenyl, 2-cyclohexenyl, 3-cyclohexenyl, 1,3-cyclohexadienyl or 1,4-cyclohexadienyl, also including substituents with a double bond on the cycloalkenyl radical, for example an alkylidene group such as methylidene. In the case of optionally substituted cycloalkenyl, the elucidations for substituted cycloalkyl apply correspondingly.

The term "aryl" means a mono-, bi- or polycyclic aromatic system having preferably 6 to 14, especially 6 to 10, ring carbon atoms, for example phenyl, naphthyl, anthryl, phenanthrenyl and the like, preferably phenyl.

The term "optionally substituted aryl" also includes polycyclic systems, such as tetrahydronaphthyl, indenyl, indanyl, fluorenyl, biphenylyl, where the bonding site is on the aromatic system.

In systematic terms, "aryl" is generally also encompassed by the term "optionally substituted phenyl".

According to the invention, "heteroaryl" represents heteroaromatic compounds, i.e. fully unsaturated aromatic heterocyclic compounds, preferably 5- to 7-membered rings having 1 to 3, preferably 1 or 2, identical or different heteroatoms, preferably O, S or N. Inventive heteroaryls are, for example, 1H-pyrrol-1-yl; 1H-pyrrol-2-yl; 1H-pyrrol-3-yl; furan-2-yl; furan-3-yl; thien-2-yl; thien-3-yl, 1H-imidazol-1-yl; 1H-imidazol-2-yl; 1H-imidazol-4-yl; 1H-imidazol-5-yl; 1H-pyrazol-1-yl; 1H-pyrazol-3-yl; 1H-pyrazol-4-yl; 1H-pyrazol-5-yl, 1H-1,2,3-triazol-1-yl, 1H-1,2,3-triazol-4-yl, 1H-1,2,3-triazol-5-yl, 2H-1,2,3-triazol-2-yl, 2H-1,2,3-triazol-4-yl, 1H-1,2,4-triazol-1-yl, 1H-1,2,4-triazol-3-yl, 4H-1,2,4-triazol-4-yl, 1,2,4-oxadiazol-3-yl, 1,2,4-oxadiazol-5-yl, 1,3,4-oxadiazol-2-yl, 1,2,3-oxadiazol-4-yl, 1,2,3-oxadiazol-5-yl, 1,2,5-oxadiazol-3-yl, azepinyl, pyridin-2-yl, pyridin-3-yl, pyridin-4-yl, pyrazin-2-yl, pyrazin-3-yl, pyrimidin-2-yl, pyrimidin-4-yl, pyrimidin-5-yl, pyridazin-3-yl, pyridazin-4-yl, 1,3,5-triazin-2-yl, 1,2,4-triazin-3-yl, 1,2,4-triazin-5-yl, 1,2,4-triazin-6-yl, 1,2,3-triazin-4-yl, 1,2,3-triazin-5-yl, 1,2,4-, 1,3,2-, 1,3,6- and 1,2,6-oxazinyl, isoxazol-3-yl, isoxazol-4-yl, isoxazol-5-yl, 1,3-oxazol-2-yl, 1,3-oxazol-4-yl, 1,3-oxazol-5-yl, isothiazol-3-yl, isothiazol-4-yl, isothiazol-5-yl, 1,3-thiazol-2-yl, 1,3-thiazol-4-yl, 1,3-thiazol-5-yl, oxepinyl, thiepinyl, 1,2,4-triazolonyl and 1,2,4-diazepinyl, 2H-1,2,3,4-tetrazol-5-yl, 1H-1,2,3,4-tetrazol-5-yl, 1,2,3,4-oxatriazol-5-yl, 1,2,3,4-thiatriazol-5-yl, 1,2,3,5-oxatriazol-4-yl, 1,2,3,5-thiatriazol-4-yl, quinolines (e. g. quinolin-2-yl, quinolin-3-yl, quinolin-4-yl, quinolin-5-yl, quinolin-6-yl, quinolin-7-yl, quinolin-8-yl); isoquinolines (e. g. isoquinolin-1-yl, isoquinolin-3-yl, isoquinolin-4-yl, isoquinolin-5-yl, isoquinolin-6-yl, isoquinolin-7-yl, isoquinolin-8-yl); quinoxaline; quinazoline; cinnoline; 1,5-naphthyridine; 1,6-naphthyridine; 1,7-naphthyridine; 1,8-naphthyridine; 2,6-naphthyridine; 2,7-naphthyridine; phthalazine; pyridopyrazine; pyridopyrimidine; pyridopyridazine; pteridine; pyrimidopyrimidine, 1H-indol-1-yl, 1H-indol-2-yl, 1H-indol-3-yl, 1H-indol-4-yl, 1H-indol-5-yl, 1H-indol-6-yl, 1H-indol-7-yl, 1-benzofuran-2-yl, 1-benzofuran-3-yl, 1-benzofuran-4-yl, 1-benzofuran-5-yl, 1-benzofuran-6-yl, 1-benzofuran-7-yl, 1-benzothiophen-2-yl, 1-benzothiophen-3-yl, 1-benzothiophen-4-yl, 1-benzothiophen-5-yl, 1-benzothiophen-6-yl, 1-benzothiophen-7-yl, 1H-indazol-1-yl, 1H-indazol-3-yl, 1H-indazol-4-yl, 1H-indazol-5-yl, 1H-indazol-6-yl, 1H-indazol-7-yl, 2H-indazol-2-yl, 2H-indazol-3-yl, 2H-indazol-4-yl, 2H-indazol-5-yl, 2H-indazol-6-yl, 2H-indazol-7-yl, 2H-isoindol-2-yl, 2H-isoindol-1-yl, 2H-isoindol-3-yl, 2H-isoindol-4-yl, 2H-isoindol-5-yl, 2H-isoindol-6-yl; 2H-isoindol-7-yl, 1H-benzimidazol-1-yl, 1H-benzimidazol-2-yl, 1H-benzimidazol-4-yl, 1H-benzimidazol-5-yl, 1H-benzimidazol-6-yl, 1H-benzimidazol-7-yl, 1,3-benzoxazol-2-yl, 1,3-benzoxazol-4-yl, 1,3-benzoxazol-5-yl, 1,3-benzoxazol-6-yl, 1,3-benzoxazol-7-yl, 1,3-benzothiazol-2-yl, 1,3-benzothiazol-4-yl, 1,3-benzothiazol-5-yl, 1,3-benzothiazol-6-yl, 1,3-benzothiazol-7-yl, 1,2-benzisoxazol-3-yl, 1,2-benzisoxazol-4-yl, 1,2-benzisoxazol-5-yl, 1,2-benzisoxazol-6-yl, 1,2-benzisoxazol-7-yl, 1,2-benzisothiazol-3-yl, 1,2-benzisothiazol-4-yl, 1,2-benzisothiazol-5-yl, 1,2-benzisothiazol-6-yl, 1,2-benzisothiazol-7-yl. The inventive heteroaryl groups may also be substituted by one or more identical or different radicals.

Alkoxy means an alkyl radical bonded via an oxygen atom, alkenyloxy means an alkenyl radical bonded via an oxygen atom, alkynyloxy means an alkynyl radical bonded via an oxygen atom, cycloalkyloxy means a cycloalkyl radical bonded via an oxygen atom and cycloalkenyloxy means a cycloalkenyl radical bonded via an oxygen atom.

According to the invention, "alkylthio" - alone or as part of a chemical group - is straight-chain or branched S-alkyl, preferably having 1 to 8 or having 1 to 6 carbon atoms, for example methylthio, ethylthio, n-propylthio, isopropylthio, n-butylthio, isobutylthio, sec-butylthio and tert-butylthio. Alkenylthio means an alkenyl radical bonded via a sulfur atom, alkynylthio means an alkynyl radical bonded via a sulfur atom, cycloalkylthio means a cycloalkyl radical bonded via a sulfur atom and cycloalkenylthio means a cycloalkenyl radical bonded via a sulfur atom.

According to the invention, "alkylsulfinyl" - alone or as part of a chemical group - is straight-chain or branched alkylsulfinyl, preferably having 1 to 8 or having 1 to 6 carbon atoms, for example methylsulfinyl, ethylsulfinyl, n-propylsulfinyl, isopropylsulfinyl, n-butylsulfinyl, isobutylsulfinyl, sec-butylsulfinyl and tert-butylsulfinyl.

According to the invention, "alkylsulfonyl" - alone or as part of a chemical group - is straight-chain or branched alkylsulfonyl, preferably having 1 to 8 or having 1 to 6 carbon atoms, for example methylsulfonyl, ethylsulfonyl, n-propylsulfonyl, isopropylsulfonyl, n-butylsulfonyl, isobutylsulfonyl, sec-butylsulfonyl and tert-butylsulfonyl.

According to the invention, "cycloalkylsulfonyl" - alone or as part of a chemical group - is optionally substituted cycloalkylsulfonyl, preferably having 3 to 6 carbon atoms, for example cyclopropylsulfonyl, cyclobutylsulfonyl, cyclopentylsulfonyl or cyclohexylsulfonyl.

According to the invention, "arylsulfonyl" is optionally substituted phenylsulfonyl or optionally substituted polycyclic arylsulfonyl, for example substituted by halogen, alkyl, haloalkyl, haloalkoxy or alkoxy groups.

The term "sulfilimine" represents a group with a nitrogen-sulfur double bond, in which nitrogen and sulfur have further substitutions, the nitrogen atom preferably by a further substituted carbonyl group and the sulfur preferably by two identical or mixed alkyl, aryl and cycloalkyl substituents, for example in the form of an N-(di-n-butylsulfanylidene), N-(diisopropylsulfanylidene), N-(di-n-propylsulfanylidene), N-(di-n-pentylsulfanylidene), N-(diisobutylsulfanylidene), N-(cyclobutylisopropylsulfanylidene), N-(n-propylisopropylsulfanylidene), N-(cyclopropylisopropylsulfanylidene) or N-(isobutylisopropylsulfanylidene) unit.

According to the type and linkage of the substituents, the compounds of the formula (I) may be present as stereoisomers. The possible stereoisomers defined by the specific three-dimensional form thereof, such as enantiomers, diastereomers, Z and E isomers, are all encompassed by the formula (I). When, for example, one or more alkenyl groups are present, diastereomers (Z and E isomers) may occur. When, for example, one or more asymmetric carbon atoms are present, enantiomers and diastereomers may occur. Stereoisomers can be obtained from the mixtures obtained in the preparation by customary separation methods. The chromatographic separation can be effected either on the analytical scale to find the enantiomeric excess or the diastereomer excess, or else on the preparative scale to produce test specimens for biological testing. It is likewise possible to selectively prepare stereoisomers by using stereoselective reactions with use of optically active starting materials and/or assistants. The invention thus also relates to all stereoisomers which are encompassed by the formula (I) but are not shown with their specific stereoisomeric form, and mixtures thereof.

The radical definitions stated above, in general terms or listed within areas of preference, apply both to the end products of the formula (I) and correspondingly to the starting materials and intermediates required for the preparation in each case. These radical definitions can be exchanged with one another, i.e. including combinations between the preferred ranges stated.

The term "useful plants" as used here refers to crop plants which are employed as plants for obtaining foods, animal feeds or for industrial purposes as well as horticultural plants

### Synthesis:

As already disclosed in detail in European patent application EP 10155436.8 and International patent application PCT/EP2011/053087, fluoroalkyl-substituted 2-amidobenzimidazoles can be prepared by known and published processes (cf. J. Med. Chem. 2000, 43, 4084; Bioorg. Med. Chem. 2008, 16, 6965; Bioorg. Med. Chem. 2008, 16, 3955; Org. Proc. Res. Develop. 2007, 11, 693; J. Med. Chem. 2009, 52, 514; J. Heterocyclic Chem. 2001, 38, 979; WO2000026192; WO2003106430; WO9704771; WO2000029384, WO2000032579). Various literature preparation routes were used to form the core structure, and some were optimized (see scheme 1). Selected detailed synthesis examples are explained in the next section. The synthesis routes used and examined proceed from commercially available or easily preparable 2-amino-3-nitrobenzoic acids or 2,3-diaminobenzonitriles.

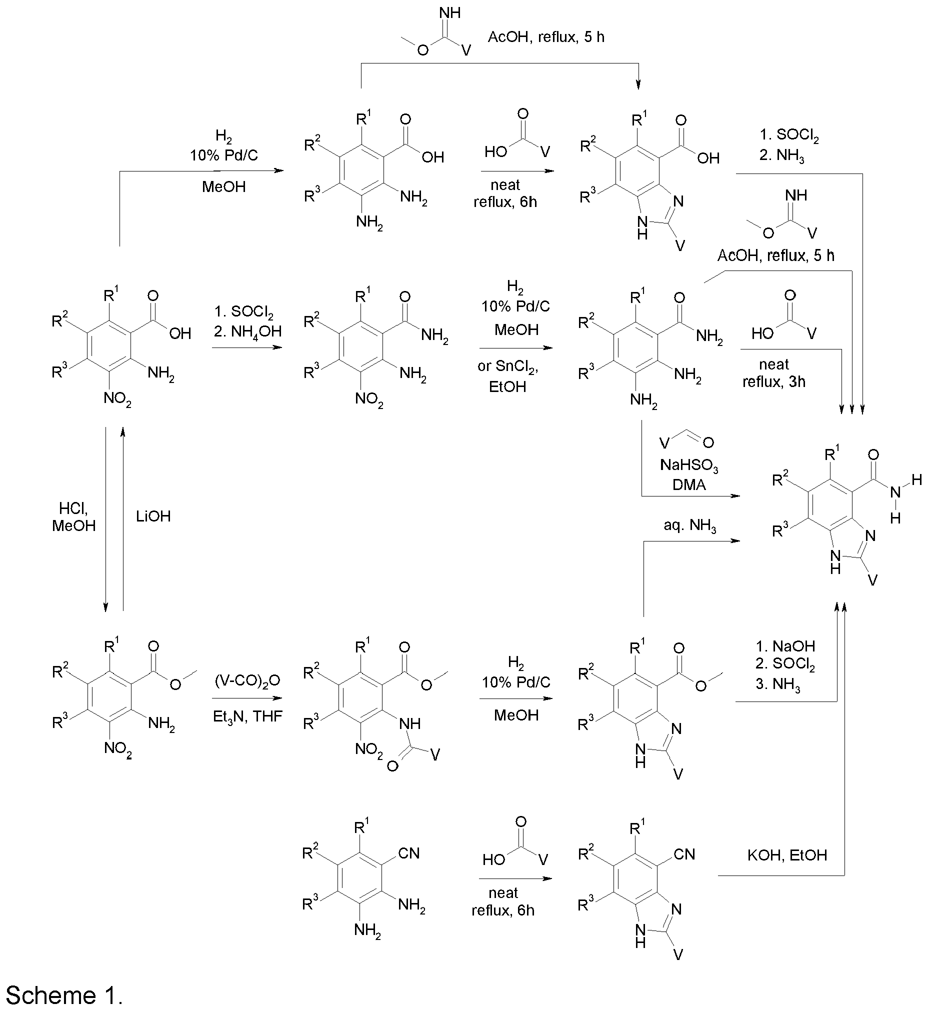

The relevant 2-amino-3-nitrobenzoic acid with optional additional substitution can be converted with the aid of thionyl chloride and ammonia to the corresponding 2-amino-3-nitrobenzamide, which is reduced either with hydrogen in the presence of palladium on carbon in a suitable solvent or with tin(II) chloride to give an optionally further-substituted 2,3-diaminobenzamide. The 2,3-diaminobenzamide thus obtained can be converted in the subsequent step via various reaction variants, for example condensation with a carboxylic acid, with an aldehyde or an amide oxime, to the desired benzimidazole derivative. Alternatively, the corresponding benzimidazole can also be formed by condensation of a 2,3-diaminobenzoic acid with a carboxylic acid or by N-acylation of a 2-amino-3-nitrobenzoic ester and subsequent reduction with hydrogen in the presence of palladium on carbon, and the carboxyl function can be converted to the desired amide in the final step. A further reaction route to the synthesis of the inventive compounds is the condensation of an optionally substituted 2,3-diaminobenzonitrile with a corresponding carboxylic acid and the subsequent reaction with a hydroxide base (e.g. potassium hydroxide) in a protic solvent (e.g. ethanol).

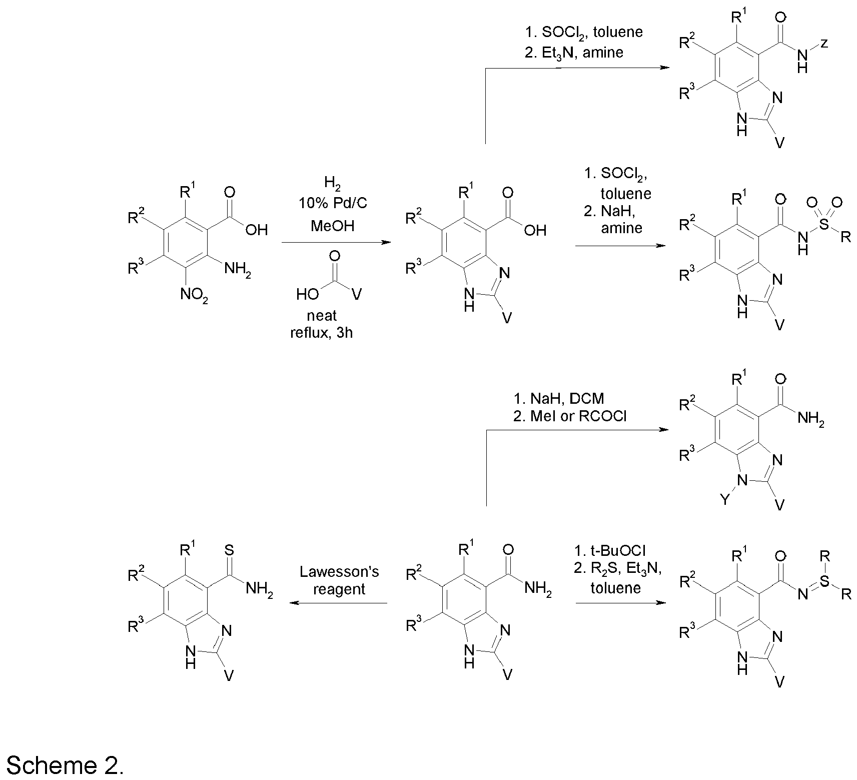

The resulting carboxyl-substituted benzimidazoles can be converted with the aid of thionyl chloride in a suitable solvent and subsequent reaction with a substituted amine or a substituted sulfonamide to correspondingly N-substituted benzimidazoles. The functionalization of a benzimidazole nitrogen atom is possible by deprotonation with a suitable base, for example sodium hydride in an aprotic solvent, and subsequent reaction with a suitable electrophile, for example an acyl chloride, an alkyl halide or a chloroformate. The amide group of the fluoroalkyl-substituted 2-amidobenzimidazoles prepared in accordance with the invention can also be converted to the corresponding thioamide with the aid of 2,4-bis(4-methoxyphenyl)-1,3,2,4-dithiadiphosphetane 2,4-disulfide, or to the corresponding substituted sulfilimines in a two-stage synthesis by reaction with tert-butyl hypochlorite and AIBN in an aprotic solvent (e.g. carbon tetrachloride) and subsequent reaction with a dialkyl sulfide in the presence of a base (e.g. triethylamine) in a suitable solvent (e.g. toluene) (see scheme 2). The preparation and the use of the inventive compounds is illustrated by the examples which follow. The ¹H NMR, ¹³C NMR and ¹⁹F NMR spectroscopy data reported for the chemical examples described in the paragraphs which follow (400 MHz in the case of ¹H NMR and 150 MHz in the case of ¹³C NMR and 375 MHz in the case of ¹⁹F NMR, solvent: CDCl₃, CD₃OD or d₆-DMSO, internal standard: tetramethylsilane δ = 0.00 ppm), were obtained with a Bruker instrument, and the signals identified are defined as follows: br = broad; s = singlet, d = doublet, t = triplet, dd = double doublet, ddd = doublet of a double doublet, m = multiplet, q = quartet, quint = quintet, sext = sextet, sept = septet, dq = double quartet, dt = double triplet, tt = triple triplet.

### Synthesis examples:

### No. 1-1: 2-[chloro(difluoro)methyl]-1H-benzimidazole-4-carboxamide

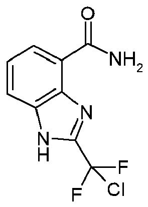

2-Amino-3-nitrobenzoic acid (3.00 g, 16.47 mmol) was dissolved in dimethoxyethane (15 ml), thionyl chloride was added (2.61 g, 21.91 mmol), and the mixture was stirred at 50°C for 12 h. Subsequently, the reaction mixture was concentrated under reduced pressure, the solvent was removed and then toluene was added, and the mixture was concentrated again. Thereafter, aqueous saturated ammonia solution (40 ml) was initially charged in a round-bottom flask and cooled to 10°C, and the acid chloride (3.30 g, 16.45 mmol) from the first step, which had not been purified any further, was added dropwise while stirring vigorously. In the course of this, the temperature of the reaction mixture was kept below 40°C. After the end of the addition, the reaction mixture was stirred at 50°C for one hour, then diluted with water and stirred at room temperature. By filtering off the orange precipitate which formed with suction, washing with water and drying, 2-amino-3-nitrobenzamide (2.60 g, 87%) was obtained. 2-Amino-3-nitrobenzamide (2.60 g, 14.35 mmol) was then added in a metal vessel to palladium on carbon (water-moist catalyst, 10% Pd, 0.05 equiv., 0.072 mmol) in methanol (80 ml). In a laboratory reactor, hydrogen was introduced into the metal vessel and the resulting reaction mixture was stirred at room temperature at a pressure of 2 bar for 5 h. After complete conversion, the catalyst was filtered off through Celite and washed with methanol. The filtrate was concentrated under reduced pressure and the residue was extracted with water and ethyl acetate. The combined organic phases were dried over magnesium sulfate, filtered and concentrated under reduced pressure. The resulting crude product did not need any further purification and contained 2,3-diaminobenzamide (2.15 g, 98%) in a purity of > 95%. 2,3-Diaminobenzamide (200 mg, 1.32 mmol) was dissolved in chlorodifluoroacetic acid (3 ml) with vigorous stirring. The resulting reaction mixture was subsequently stirred under reflux for 3 h. After cooling to room temperature, NaHCO₃ solution was added. In the course of this, the 2-[chloro(difluoro)methyl]-1H-benzimidazole-4-carboxamide target product (190 mg, 58%) precipitated out as a colorless solid, which was filtered off with suction, washed with water and finally dried. ¹H NMR (400 MHz, d₆-DMSO δ, ppm) 14.40 (br. s, 1H, NH), 8.72 (br. s, 1H, NH), 8.02 (m, 1H, NH), 7.92 (m, 1H), 7.74 (m, 1H), 7.55 (m, 1H); ¹³C NMR (150 MHz, d₆-DMSO δ, ppm) 165.5, 147.9, 139.1, 134.2, 124.9, 124.5, 123.9, 118.4-122.2 (t, CF₂Cl), 116.6.

### No. 1-2: 2-(pentafluoroethyl)-1H-benzimidazole-4-carboxamide

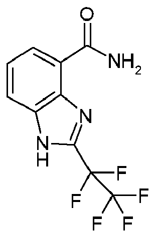

Methyl 2-amino-3-nitrobenzoate (1.30 g, 6.63 mmol) was dissolved in abs. THF (tetrahydrofuran) (10 ml), triethylamine (2.77 ml, 19.88 mmol) was added and the mixture was stirred at room temperature under argon for 20 min. Thereafter, a solution of pentafluoropropionic anhydride (3.93 ml, 19.88 mmol) in abs. THF (5 ml) was slowly added dropwise and the reaction mixture was stirred at room temperature for 4 h. After the addition of water, the aqueous phase was extracted repeatedly with ethyl acetate. The combined organic phases were then extracted once again with water, dried over magnesium sulfate, filtered and concentrated. By column chromatography purification of the resulting crude product, 3-nitro-2-[(2,2,3,3,3-pentafluoropropanoyl)amino]benzamide (1.80 g, 79%) was isolated. 3-Nitro-2-[(2,2,3,3,3-pentafluoropropanoyl)amino]benzamide (1.80 g, 5.26 mmol) was then dissolved in methanol (50 ml) and added in a metal vessel to palladium on carbon (water-moist catalyst, 10% Pd, 0.02 equiv., 84 mg, 0.079 mmol) in methanol (30 ml). In a laboratory reactor, hydrogen was introduced into the metal vessel and the resulting reaction mixture was stirred at room temperature at a pressure of 2 bar for 5 h. After complete conversion, the catalyst was filtered off through Celite and washed with methanol. The solvent was carefully distilled out of the filtrate under reduced pressure and the residue was purified by column chromatography (silica gel, gradient with n-heptane and ethyl acetate). This gave methyl 2-(pentafluoroethyl)-1H-benzimidazole-7-carboxylate (800 mg, 49%), which in the next step was partially dissolved in THF (1 ml), and water (7 ml) and sodium hydroxide (163 mg, 4.08 mmol) were added. The resulting reaction mixture was stirred under reflux for 3 h. After cooling to room temperature, a pH of 2-3 was established by adding dil. HCl and the precipitate formed was filtered off with suction, washed with heptane and dried. In this way, 2-(pentafluoroethyl)-1H-benzimidazole-7-carboxylic acid (570 mg, 75%) was obtained, which was then dissolved in dichloromethane (6 ml), and oxalyl chloride (0.15 ml, 1.73 mmol) and a catalytic amount of N,N-dimethylformamide were added. The reaction mixture was stirred at room temperature for 15 min and then at 70°C for 2 h, and thereafter was concentrated completely. After addition of toluene, the mixture was concentrated again and the acid chloride thus obtained (600 mg, 2.01 mmol), without further purification, was dissolved in dioxane (6 ml). Then ammonia (g) was introduced while cooling and the mixture was stirred at room temperature for 1 h. The reaction mixture was concentrated completely and the residue was purified by column chromatography (silica gel, gradient with n-heptane and ethyl acetate). This gave 2-(pentafluoroethyl)-1H-benzimidazole-4-carboxamide (560 mg, 95%). ¹H NMR (400 MHz, d₆-DMSO δ, ppm) 14.32 (br. s, 1H, NH), 8.74 (br. s, 1H, NH), 7.95 (d, 1H), 7.86 (d, 1H), 7.68 (br s, 1H, NH), 7.45 (dd, 1H); ¹⁹F NMR (375 MHz, d₆-DMSO δ, ppm) - 114.6, -83.3.

### Example no. 1-3: N-ethyl-2-(trifluoromethyl)-1H-benzimidazole-4-carboxamide

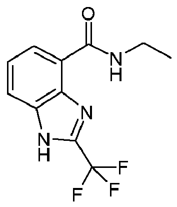

2-Trifluoromethyl-1H-benzimidazole-7-carboxylic acid (200 mg, 0.87 mmol) was dissolved in dichloromethane (6 ml), and oxalyl chloride (0.15 ml, 1.73 mmol) and a catalytic amount of N,N-dimethylformamide were added. The reaction mixture was stirred at room temperature for 15 min and then at 70°C for 2 h, and thereafter was concentrated completely. After addition of toluene, the mixture was concentrated again and the acid chloride thus obtained (210 mg, 0.85 mmol), without further purification, was dissolved in tetrahydrofuran (1 ml) and added dropwise to a solution of ethylamine (0.46 ml, 0.93 mmol) and triethylamine (0.18 ml, 1.27 mmol) in tetrahydrofuran (3 ml). The reaction mixture was stirred at room temperature for 3 h, then water was added and the mixture was extracted repeatedly with ethyl acetate. The combined organic phases were dried over magnesium sulfate, filtered and concentrated. By column chromatography purification of the resulting residue (silica gel, gradient of ethyl acetate and n-heptane), N-ethyl-2-(trifluoromethyl)-1H-benzimidazole-4-carboxamide was isolated as a colorless solid (50 mg, 22%). ¹H NMR (400 MHz, CDCl₃ δ, ppm) 9.41 (br. s, 1H, NH), 8.02 (d, 1H), 7.55 (m, 1H), 7.43 (m, 1H), 6.42 (br. s, 1H, NH), 3.60 (q, 2H), 1.34 (t, 3H).

### Ex. no. 1-4: 1-(2-methylpropanoyl)-2-(trifluoromethyl)benzimidazole-4-carboxamide

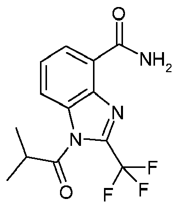

2-(Trifluoromethyl)-1H-benzimidazole-4-carboxamide (120 mg, 0.52 mmol) was dissolved in N,N-dimethylformamide and cooled to 5°C, and sodium hydride (25 mg, 0.63 mmol, 60% dispersion in oil) was added. Stirring at room temperature under argon for 20 min was followed by the addition of isobutyryl chloride (61 mg, 0.58 mmol). The resulting reaction mixture was stirred at room temperature for 4 h, then water was added and the mixture was extracted repeatedly with ethyl acetate. The combined organic phases were dried over magnesium sulfate, filtered and concentrated. By column chromatography purification of the resulting residue (silica gel, gradient of ethyl acetate and n-heptane), 1-(2-methylpropanoyl)-2-(trifluoromethyl)-1H-benzimidazole-4-carboxamide was isolated as a colorless solid (30 mg, 18%). ¹H NMR (400 MHz, CDCl₃ δ, ppm) 9.42 (br. s, 1H, NH), 8.21 (d, 1H), 7.97 (br. s, 1H, NH), 7.84 (d, 1H), 7.59 (dd, 1H), 3.00 (sept, 1H), 1.38 (d, 6H).

### Ex. no. 1-5: N-(dibutyl-lambda⁴-sulfanylidene)-2-(trifluoromethyl)-1H-benzimidazole-4-carboxamide

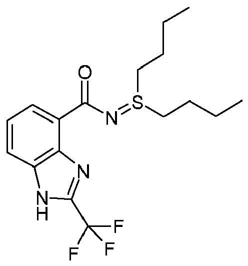

2-(Trifluoromethyl)-1H-benzimidazole-4-carboxamide (1000 mg, 4.36 mmol) was dissolved in tetrachloromethane (7 ml) and, after stirring at room temperature for 5 min, heated to reflux. Thereafter, 2,2'-azobis-2-methylpropanenitrile (29 mg, 0.18 mmol) was added and the mixture was stirred for 5 min. tert-Butyl hypochlorite (569 mg, 5.24 mmol) is likewise dissolved in tetrachloromethane (3 ml) and cautiously added in portions to the refluxing solution. The resulting reaction mixture was stirred under reflux for 3 h. After cooling to room temperature, the precipitate formed was filtered off with suction, washed with a little tetrachloromethane and dried under reduced pressure. A portion of the colorless solid obtained (200 mg, 0.76 mmol) was then dissolved in toluene (4 ml) and stirred for 5 min, and dibutyl sulfide (0.12 ml, 0.84 mmol) and triethylamine (0.12 ml, 0.84 mmol) were added. The resulting reaction mixture was stirred at room temperature for 4 h and then partially concentrated under reduced pressure. In the course of this, *N*-(dibutyl-lambda⁴-sulfanylidene)-2-(trifluoromethyl)-1H-benzimidazole-4-carboxamide precipitates out as a colorless solid (150 mg, 57%); ¹H NMR (400 MHz, CDCl₃ δ, ppm) 11.41 (br. s, 1H, NH), 8.12 (d, 1H), 7.95 (d, 1H), 7.38 (dd, 1H), 3.15 (m, 2H), 2.99 (m, 2H), 1.79 (m, 4H), 1.51 (m, 4H), 0.97 (t, 6H).

### Ex. no. 1-6: 2-[difluoro(methoxy)methyl]-1H-benzimidazole-4-carboxamide

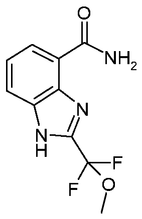

2-(Chloro(difluoro)methyl)-1H-benzimidazole-4-carboxamide (200 mg, 0.81 mmol) was dissolved under argon in abs. N,N-dimethylformamide (4 ml), and sodium n-propoxide (668 mg, 1.63 mmol) was added. The resulting reaction mixture was stirred at 80°C for 6 h and, after cooling to room temperature, water and ethyl acetate were added. The aqueous phase was extracted repeatedly with ethyl acetate and the combined organic phases were dried over magnesium sulfate, filtered and concentrated. The resulting residue was purified by column chromatography and gave 2-[difluoro(methoxy)methyl]-1H-benzimidazole-4-carboxamide (30 mg, 14%) as a colorless solid; **¹**H NMR (400 MHz, CD₃OD δ, ppm) 8.06 (d, 1H), 7.77 (d, 1H), 7.48 (dd, 1H), 3.85 (s, 3H).

### Example no. 2-14: 6-chloro-2-(trifluoromethyl)-1H-benzimidazole-4-carboxamide

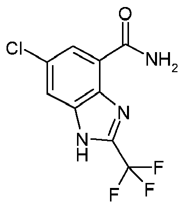

Methyl 2-amino-5-chloro-3-nitrobenzoate (1.0 g, 4.34 mmol) was dissolved in water (5 ml), lithium hydroxide (2.5 equiv.) was added and the mixture was stirred under reflux conditions for 1 h. After cooling to room temperature, the reaction solution was acidified to pH 2 with conc. HCl and the resulting precipitate was filtered off with suction, washed and dried. The 2-amino-5-chloro-3-nitrobenzoic acid thus obtained (0.90 g, 4.15 mmol), without further purification, was dissolved in dimethoxyethane (5 ml), thionyl chloride was added (0.40 ml, 5.53 mmol), and the mixture was stirred at 50°C for 12 h. Subsequently, the reaction mixture was concentrated under reduced pressure, the solvent was removed and then toluene was added, and the mixture was concentrated again. Thereafter, aqueous saturated ammonia solution (40 ml) was initially charged in a round-bottom flask and cooled to 10°C, and the acid chloride (0.95 g, 4.04 mmol) from the first step, which had not been purified any further, was added dropwise while stirring vigorously. In the course of this, the temperature of the reaction mixture was kept below 40°C. After the end of the addition, the reaction mixture was stirred at 50°C for one hour, then diluted with water and stirred at room temperature. By filtering off the precipitate which formed with suction, washing with water and drying, 2-amino-5-chloro-3-nitrobenzamide (0.57 g, 65%) was obtained. 2-Amino-5-chloro-3-nitrobenzamide (0.57 g, 2.64 mmol) was dissolved in ethanol, tin(II) chloride dihydrate (2.15 g, 9.52 mmol) was added and the mixture was stirred under reflux for 4 h. After cooling to room temperature, the reaction solution was concentrated under reduced pressure and added to water, and sat. NaHCO₃ solution was used to adjust it to a pH of 8. The aqueous phase was extracted repeatedly with ethyl acetate, and the combined organic phases were dried over magnesium sulfate, filtered and concentrated. By column chromatography purification of the crude product (silica gel and gradient of n-heptane and ethyl acetate), 2,3-diamino-5-chlorobenzamide (360 mg, 73%) was obtained. 2,3-Diamino-5-chlorobenzamide (100 mg, 0.54 mmol) was dissolved in trifluoroacetic acid (1.5 ml) while stirring vigorously. The resulting reaction mixture was subsequently stirred under reflux for 3 h. After cooling to room temperature, NaHCO₃ solution was added. In the course of this, the 6-chloro-2-(trifluoromethyl)-1H-benzimidazole-4-carboxamide target product (110 mg, 77%) precipitated out as a colorless solid, which was filtered off with suction, washed with water and finally dried. ¹H NMR (400 MHz, d₆-DMSO δ, ppm) 14.05 (br. s, 1H, NH), 8.49 (br. s, 1H, NH), 8.04 (d, 1H), 7.95 (br. s, 1H, NH), 7.90 (m, 1H).

### Example no. 3-7: 2-(difluoromethyl)-6-(trifluoromethyl)-1H-benzimidazole-4-carboxamide

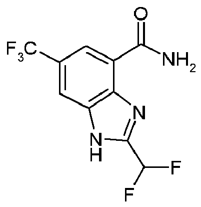

2,3-Diamino-5-trifluoromethylbenzonitrile (250 mg, 1.24 mmol) was dissolved in difluoroacetic acid (3.0 ml) while stirring vigorously. The resulting reaction mixture was subsequently stirred under reflux for 6 h. After cooling to room temperature, NaHCO₃ solution was added. In the course of this, the 2-(difluoromethyl)-6-(trifluoromethyl)-1H-benzimidazole-4-nitrile target product (320 mg, 98%) precipitated out as a solid, which was filtered off with suction, washed with water and finally dried. 2-(Difluoromethyl)-6-(trifluoromethyl)-1H-benzimidazole-4-nitrile (250 mg, 0.96 mmol) was dissolved in warm ethanol (3 ml), potassium hydroxide (268 mg, 4.79 mmol) was added and the mixture was stirred under reflux for 4 h. After cooling to room temperature, the solvent was removed under reduced pressure and the residue was extracted with ethyl acetate and water. The water phase was extracted repeatedly with ethyl acetate, and the combined organic phases were dried over sodium sulfate, filtered and concentrated. The resulting residue was purified by column chromatography (ethyl acetate-heptane gradient) and gave 2-(difluoromethyl)-6-(trifluoromethyl)-1H-benzimidazole-4-carboxamide as a solid (40 mg, 14%). ¹H NMR (400 MHz, d₆-DMSO δ, ppm) 13.93 (br. s, 1H, NH), 8.81 (br. s, 1H, NH), 8.29 (s, 1H), 8.14 (s, 1H), 7.80 (br. s, 1H, NH), 7.31-7.03 (t, 1H).

### Example no. 4-14: 6-methyl-2-(trifluoromethyl)-1H-benzimidazole-4-carboxamide

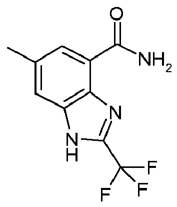

2-Amino-5-methyl-3-nitrobenzoic acid (2.00 g, 10.19 mmol) was dissolved in dimethoxyethane (15 ml), thionyl chloride was added (0.99 ml, 13.56 mmol), and the mixture was stirred at 50°C for 12 h. Subsequently, the reaction mixture was concentrated under reduced pressure, the solvent was removed and then toluene was added, and the mixture was concentrated again. Thereafter, aqueous saturated ammonia solution (40 ml) was initially charged in a round-bottom flask and cooled to 10°C, and the acid chloride (2.20 g, 10.19 mmol) from the first step, which had not been purified any further, was added dropwise while stirring vigorously. In the course of this, the temperature of the reaction mixture was kept below 40°C. After the end of the addition, the reaction mixture was stirred at 50°C for one hour, then diluted with water and stirred at room temperature. By filtering off the orange precipitate which formed with suction, washing with water and drying, 2-amino-5-methyl-3-nitrobenzamide (2.01 g, 99%) was obtained. 2-Amino-5-methyl-3-nitrobenzamide (1.00 g, 5.12 mmol) was dissolved in ethanol, tin(II) chloride dihydrate (4.16 g, 18.45 mmol) was added and the mixture was stirred under reflux for 4 h. After cooling to room temperature, the reaction solution was concentrated under reduced pressure and added to water, and sat. NaHCO₃ solution was used to adjust it to a pH of 8. The aqueous phase was extracted repeatedly with ethyl acetate, and the combined organic phases were dried over magnesium sulfate, filtered and concentrated. By column chromatography purification of the crude product (silica gel and gradient of n-heptane and ethyl acetate), 2,3-diamino-5-methylbenzamide (270 mg, 32%) was obtained. 2,3-Diamino-5-methylbenzamide (250 mg, 1.51 mmol) was dissolved in trifluoroacetic acid (3 ml) while stirring vigorously. The resulting reaction mixture was subsequently stirred

under reflux for 4 h. After cooling to room temperature, NaHCO₃ solution was added. In the course of this, the 6-methyl-2-(trifluoromethyl)-1H-benzimidazole-4-carboxamide target product (340 mg, 88%) precipitated out as a colorless solid, which was filtered off with suction, washed with water and finally dried. ¹H NMR (400 MHz, d₆-DMSO δ, ppm) 14.38 (br. s, 1H, NH), 8.60 (br. s, 1H, NH), 7.81 (m, 1H, NH), 7.78 (m, 1H), 7.62 (m, 1H), 2.48 (s, 3H); ¹⁹F NMR (375 MHz, CD₃OD δ, ppm) -65.8.

In analogy to the preparation examples adduced above, and taking account of the general information regarding the preparation of fluoroalkyl-substituted 2-amidobenzimidazoles of the formula (I), the following compounds can be obtained to be employed according to present invention:

**Table 1:**

| | | | | | |
|---|---|---|---|---|---|
| 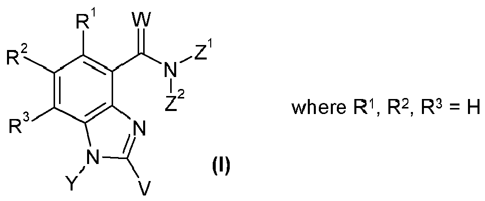 | | | | | |

| No. | V | W | Y | Z¹ | Z² |
|---|---|---|---|---|---|
| 1-7 | 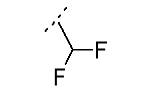 | O | H | H | H |
| 1-8 | 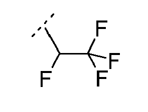 | O | H | H | H |
| 1-9 | 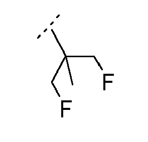 | O | H | H | H |
| 1-10 | 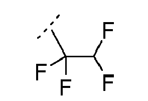 | O | H | H | H |
| 1-11 | 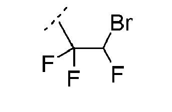 | O | H | H | H |
| 1-12 | 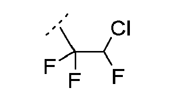 | O | H | H | H |
| 1-13 | 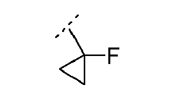 | O | H | H | H |
| 1-14 | 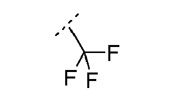 | O | H | H | H |
| 1-15 | 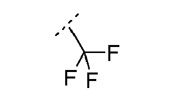 | O | H | 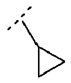 | H |
| 1-16 | 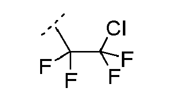 | O | H | H | H |
| 1-17 | 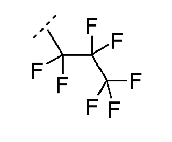 | O | H | H | H |
| 1-18 | 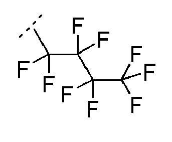 | O | H | H | H |
| 1-19 | 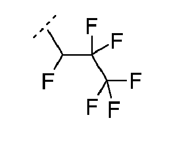 | O | H | H | H |
| 1-20 | 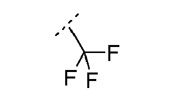 | O | H | 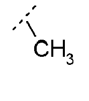 | H |
| 1-21 | 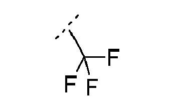 | O | H | 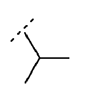 | H |
| 1-22 | 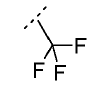 | O | H | 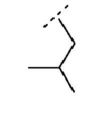 | H |
| 1-23 | 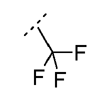 | O | H | 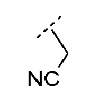 | H |
| 1-24 | 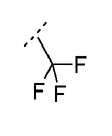 | O | H | 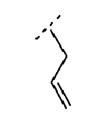 | H |
| 1-25 | 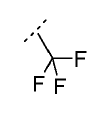 | O | H | 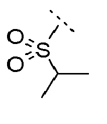 | H |
| 1-26 | 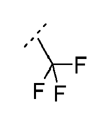 | O | H | 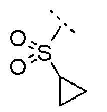 | H |
| 1-27 | 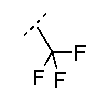 | O | 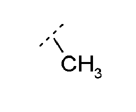 | H | H |
| 1-28 | 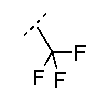 | O | 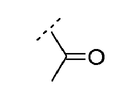 | H | H |
| 1-29 | 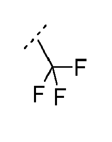 | O | 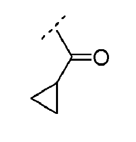 | H | H |
| 1-30 | 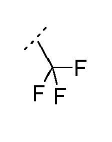 | O | 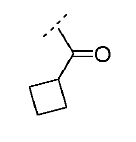 | H | H |
| 1-31 | 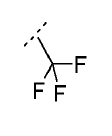 | O | 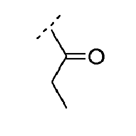 | H | H |
| 1-32 | 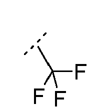 | O | 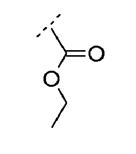 | H | H |
| 1-33 | 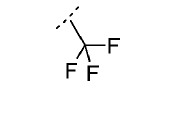 | O | H | 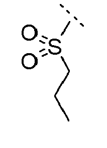 | H |
| 1-34 | 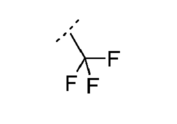 | O | H | 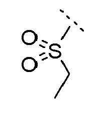 | H |
| 1-35 | 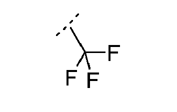 | O | H | 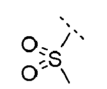 | H |
| 1-36 | 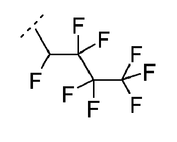 | O | H | H | H |
| 1-37 | 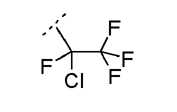 | O | H | H | H |
| 1-38 | 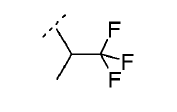 | O | H | H | H |
| 1-39 | 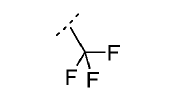 | S | H | H | H |
| 1-40 | 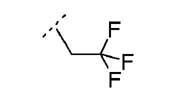 | O | H | H | H |
| 1-41 | 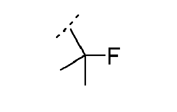 | O | H | H | H |
| 1-42 | 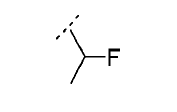 | O | H | H | H |
| 1-43 | 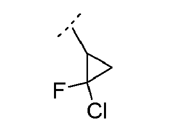 | O | H | H | H |
| 1-44 | 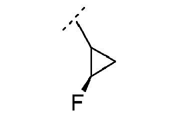 | O | H | H | H |
| 1-45 | 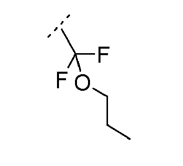 | O | H | H | H |
| 1-46 | 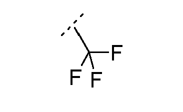 | O | H | 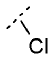 | H |
| 1-47 | 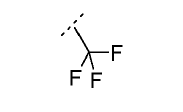 | O | H | 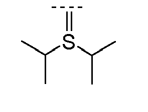 | |
| 1-48 | 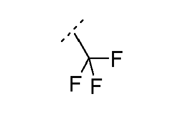 | O | H | 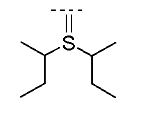 | |
| 1-49 | 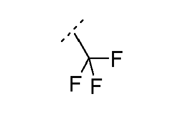 | O | H | 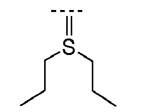 | |
| 1-50 | 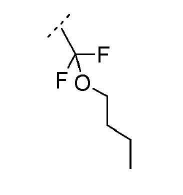 | O | H | H | H |
| 1-51 | 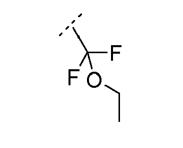 | O | H | H | H |
| 1-52 | 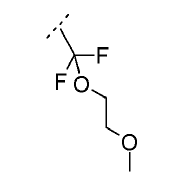 | O | H | H | H |
| 1-53 | 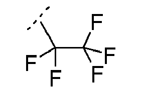 | O | 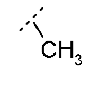 | H | H |
| 1-54 | 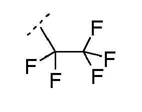 | O | 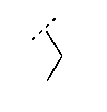 | H | H |
| 1-55 | 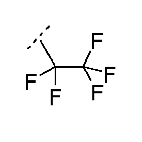 | O | 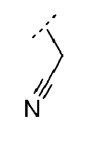 | H | H |
| 1-56 | 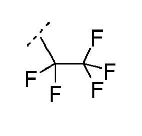 | O | 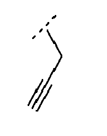 | H | H |
| 1-57 | 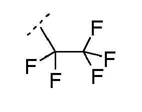 | O | 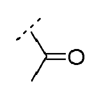 | H | H |
| 1-58 | 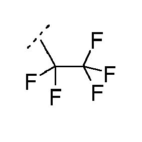 | O | 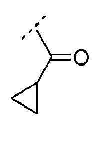 | H | H |
| 1-59 | 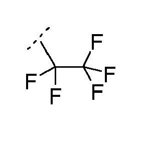 | O | 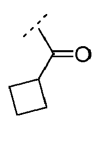 | H | H |
| 1-60 | 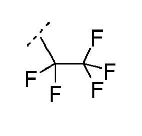 | O | 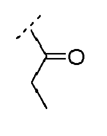 | H | H |
| 1-61 | 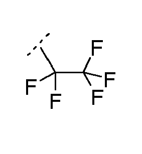 | O | 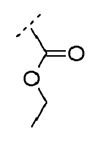 | H | H |
| 1-62 | 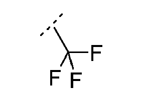 | O | 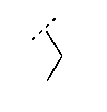 | H | H |
| 1-63 | 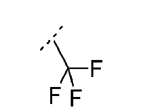 | O | 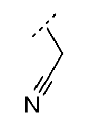 | H | H |
| 1-64 | 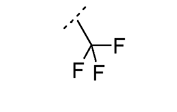 | O | 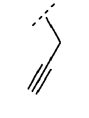 | H | H |
| 1-65 | 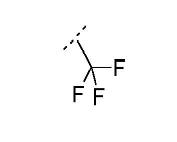 | O | 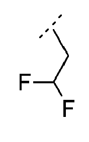 | H | H |
| 1-66 | 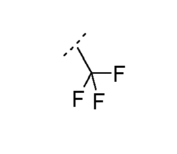 | O | 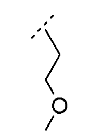 | H | H |
| 1-67 | 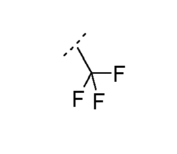 | O | H | 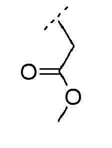 | H |
| 1-68 | 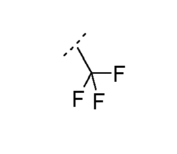 | O | H | 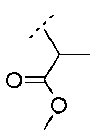 | H |
| 1-69 | 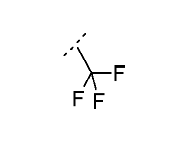 | O | 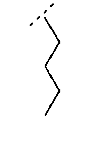 | H | H |
| 1-70 | 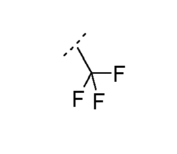 | O | 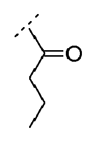 | H | H |
| 1-71 | 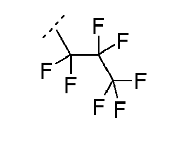 | O | 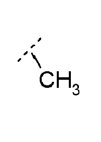 | H | H |
| 1-72 | 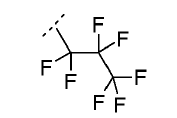 | O | 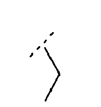 | H | H |
| 1-73 | 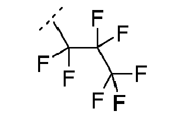 | O | 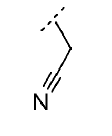 | H | H |
| 1-74 | 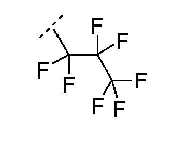 | O | 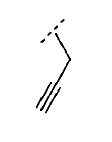 | H | H |
| 1-75 | 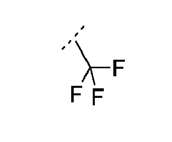 | O | 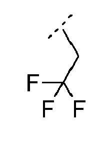 | H | H |
| 1-76 | 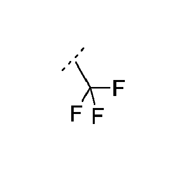 | O | 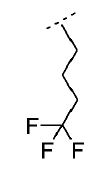 | H | H |
| 1-77 | 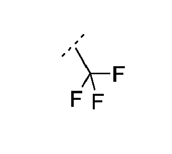 | O | 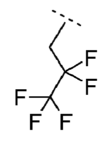 | H | H |
| 1-78 | 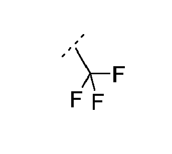 | O | 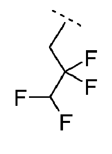 | H | H |
| 1-79 | 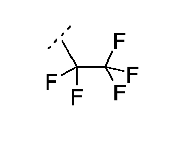 | O | 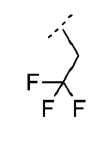 | H | H |
| 1-80 | 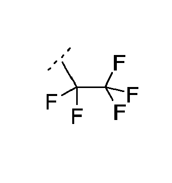 | O | 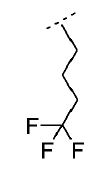 | H | H |
| 1-81 | 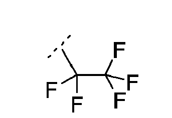 | O | 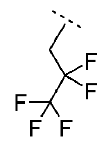 | H | H |
| 1-82 | 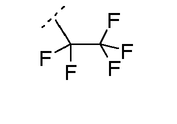 | O | 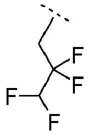 | H | H |
| 1-83 | 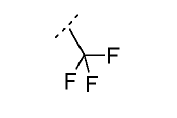 | O | H | 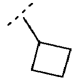 | H |
| 1-84 | 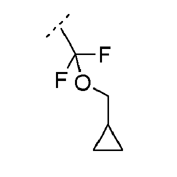 | O | H | H | H |
| 1-85 | 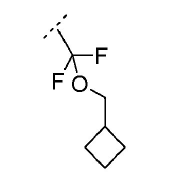 | O | H | H | H |
| 1-86 | 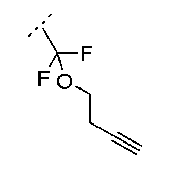 | O | H | H | H |
| 1-87 | 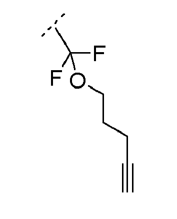 | O | H | H | H |
| 1-88 | 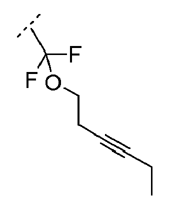 | O | H | H | H |
| 1-89 | 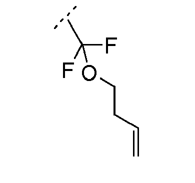 | O | H | H | H |
| 1-90 | 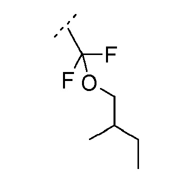 | O | H | H | H |
| 1-91 | 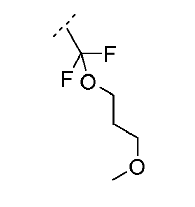 | O | H | H | H |
| 1-92 | 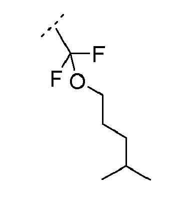 | O | H | H | H |
| 1-93 | 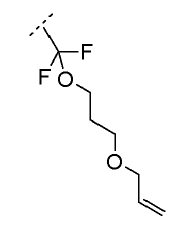 | O | H | H | H |
| 1-94 | 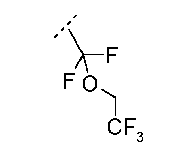 | O | H | H | H |
| 1-95 | 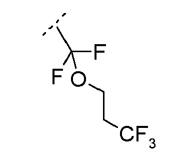 | O | H | H | H |
| 1-96 | 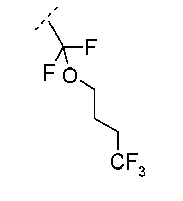 | O | H | H | H |
| 1-97 | 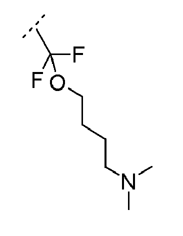 | O | H | H | H |
| 1-98 | 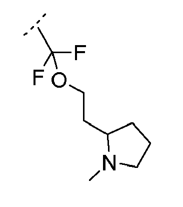 | O | H | H | H |
| 1-99 | 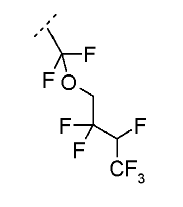 | O | H | H | H |
| 1-100 | 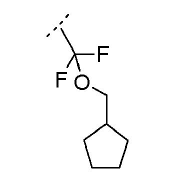 | O | H | H | H |
| 1-101 | 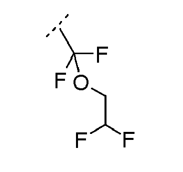 | O | H | H | H |
| 1-102 | 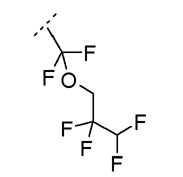 | O | H | H | H |
| 1-103 | 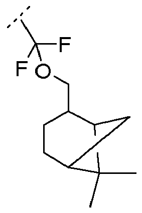 | O | H | H | H |

**Table 2:**

| | | | | | |
|---|---|---|---|---|---|
| 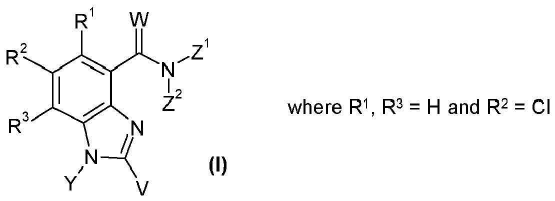 | | | | | |

| No. | V | W | Y | Z¹ | Z² |
|---|---|---|---|---|---|
| 2-1 | 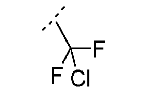 | O | H | H | H |
| 2-2 | 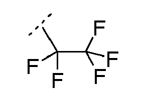 | O | H | H | H |
| 2-3 | 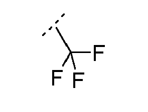 | O | H | 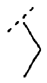 | H |
| 2-4 | 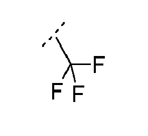 | O | 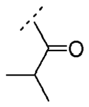 | H | H |
| 2-5 | 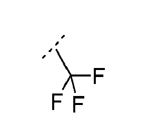 | O | H | 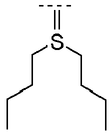 | |
| 2-6 | 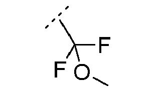 | O | H | H | H |
| 2-7 | 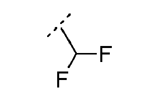 | O | H | H | H |
| 2-8 | 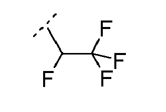 | O | H | H | H |
| 2-9 | 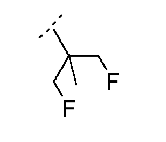 | O | H | H | H |
| 2-10 | 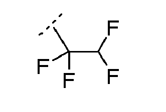 | O | H | H | H |
| 2-11 | 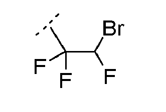 | O | H | H | H |
| 2-12 | 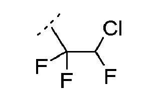 | O | H | H | H |
| 2-13 | 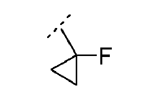 | O | H | H | H |
| 2-15 | 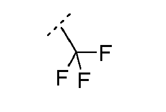 | O | H | 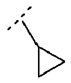 | H |
| 2-16 | 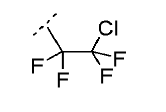 | O | H | H | H |
| 2-17 | 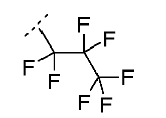 | O | H | H | H |
| 2-18 | 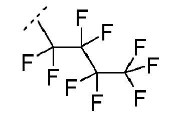 | O | H | H | H |
| 2-19 | 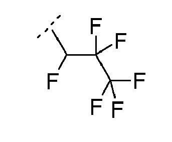 | O | H | H | H |
| 2-20 | 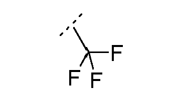 | O | H | 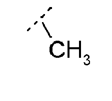 | H |
| 2-21 | 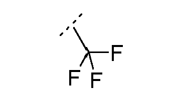 | O | H | 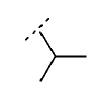 | H |
| 2-22 | 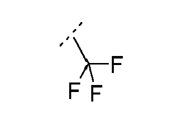 | O | H | 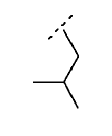 | H |
| 2-23 | 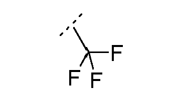 | O | H | 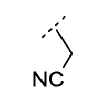 | H |
| 2-24 | 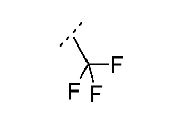 | O | H | 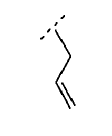 | H |
| 2-25 | 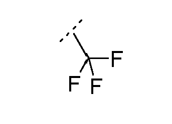 | O | H | 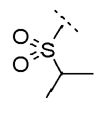 | H |
| 2-26 | 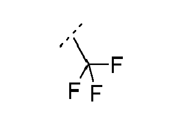 | O | H | 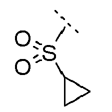 | H |
| 2-27 | 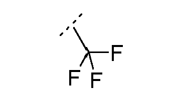 | O | 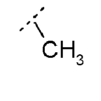 | H | H |
| 2-28 | 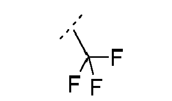 | O | 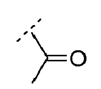 | H | H |
| 2-29 | 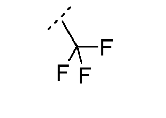 | O | 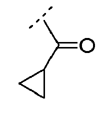 | H | H |
| 2-30 | 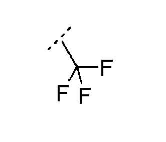 | O | 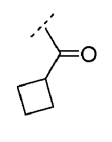 | H | H |
| 2-31 | 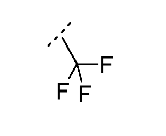 | O | 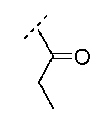 | H | H |
| 2-32 | 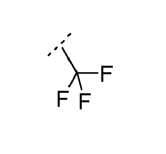 | O | 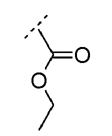 | H | H |
| 2-33 | 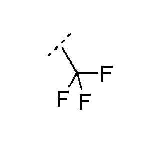 | O | H | 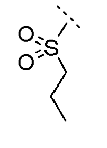 | H |
| 2-34 | 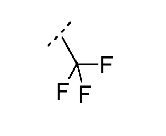 | O | H | 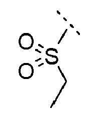 | H |
| 2-35 | 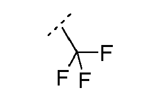 | O | H | 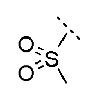 | H |
| 2-36 | 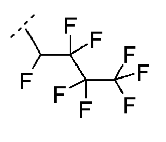 | O | H | H | H |
| 2-37 | 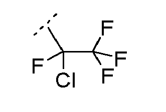 | O | H | H | H |
| 2-38 | 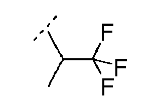 | O | H | H | H |
| 2-39 | 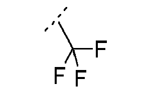 | S | H | H | H |
| 2-40 | 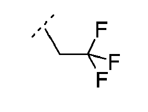 | O | H | H | H |
| 2-41 | 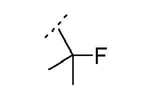 | O | H | H | H |
| 2-42 | 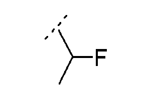 | O | H | H | H |
| 2-43 | 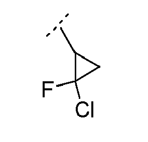 | O | H | H | H |
| 2-44 | 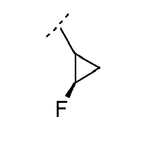 | O | H | H | H |
| 2-45 | 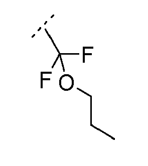 | O | H | H | H |
| 2-46 | 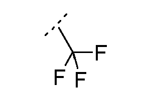 | O | H | 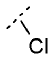 | H |
| 2-47 | 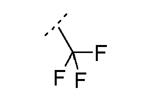 | O | H | 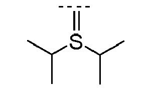 | |
| 2-48 | 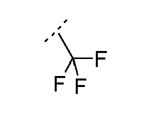 | O | H | 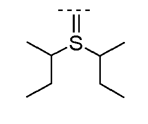 | |
| 2-49 | 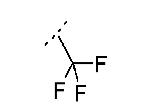 | O | H | 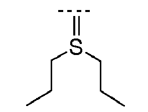 | |
| 2-50 | 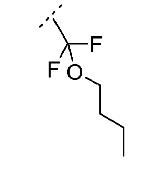 | O | H | H | H |
| 2-51 | 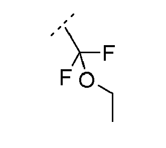 | O | H | H | H |
| 2-52 | 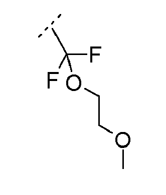 | O | H | H | H |
| 2-53 | 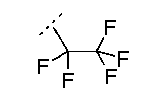 | O | 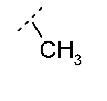 | H | H |
| 2-54 | 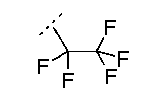 | O | 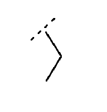 | H | H |
| 2-55 | 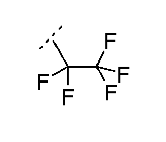 | O | 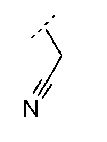 | H | H |
| 2-56 | 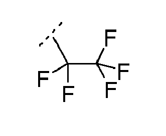 | O | 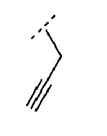 | H | H |
| 2-57 | 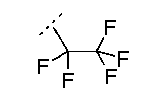 | O | 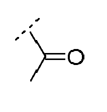 | H | H |
| 2-58 | 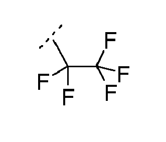 | O | 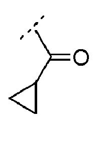 | H | H |
| 2-59 | 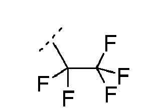 | O | 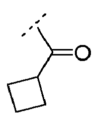 | H | H |
| 2-60 | 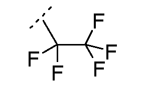 | O | 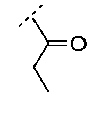 | H | H |
| 2-61 | 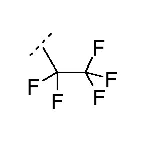 | O | 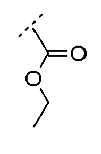 | H | H |
| 2-62 | 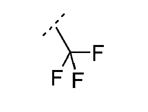 | O | 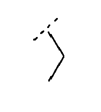 | H | H |
| 2-63 | 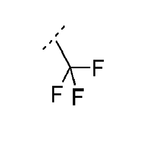 | O | 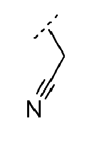 | H | H |
| 2-64 | 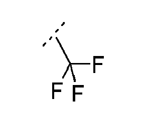 | O | 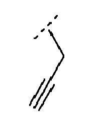 | H | H |
| 2-65 | 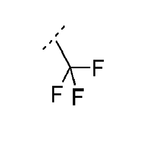 | O | 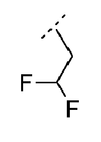 | H | H |
| 2-66 | 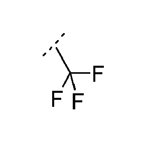 | O | 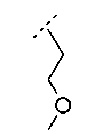 | H | H |
| 2-67 | 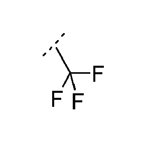 | O | H | 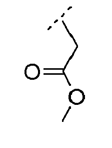 | H |
| 2-68 | 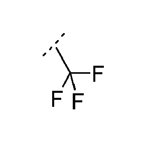 | O | H | 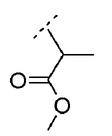 | H |
| 2-69 | 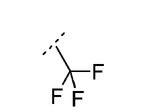 | O | 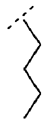 | H | H |
| 2-70 | 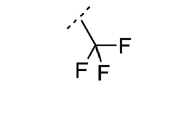 | O | 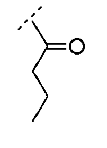 | H | H |
| 2-71 | 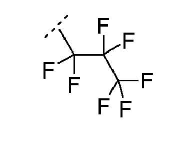 | O | 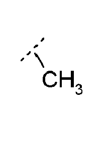 | H | H |
| 2-72 | 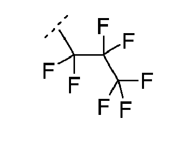 | O | 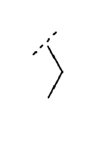 | H | H |
| 2-73 | 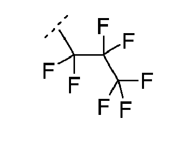 | O | 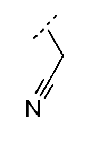 | H | H |
| 2-74 | 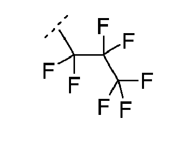 | O | 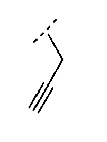 | H | H |
| 2-75 | 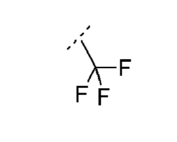 | O | 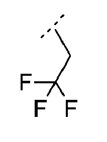 | H | H |
| 2-76 | 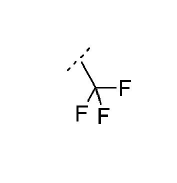 | O | 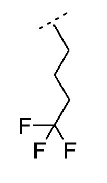 | H | H |
| 2-77 | 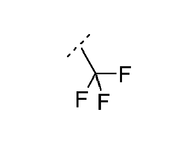 | O | 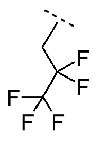 | H | H |
| 2-78 | 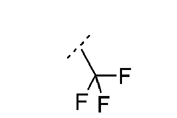 | O | 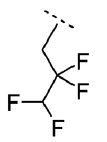 | H | H |
| 2-79 | 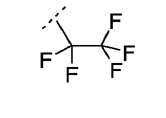 | O | 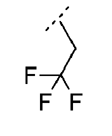 | H | H |
| 2-80 | 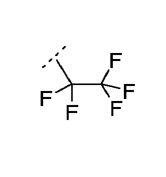 | O | 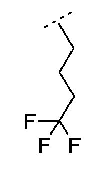 | H | H |
| 2-81 | 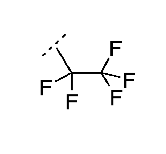 | O | 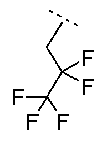 | H | H |
| 2-82 | 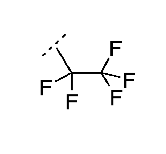 | O | 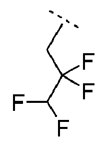 | H | H |
| 2-83 | 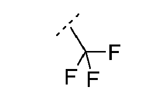 | O | H | 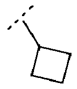 | H |
| 2-84 | 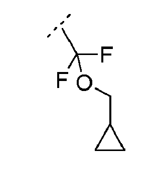 | O | H | H | H |
| 2-85 | 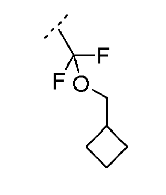 | O | H | H | H |
| 2-86 | 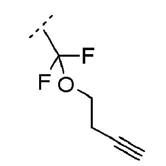 | O | H | H | H |
| 2-87 | 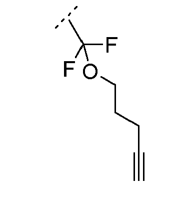 | O | H | H | H |
| 2-88 | 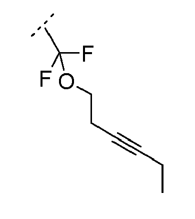 | O | H | H | H |
| 2-89 | 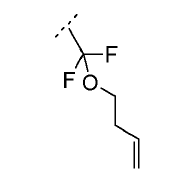 | O | H | H | H |
| 2-90 | 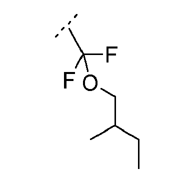 | O | H | H | H |
| 2-91 | 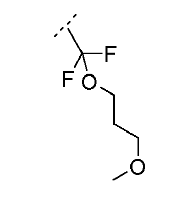 | O | H | H | H |
| 2-92 | 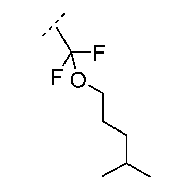 | O | H | H | H |
| 2-93 | 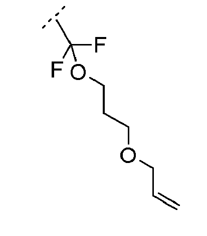 | O | H | H | H |
| 2-94 | 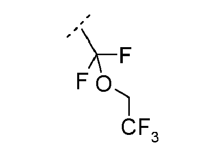 | O | H | H | H |
| 2-95 | 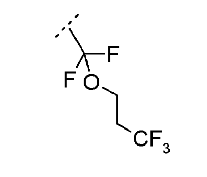 | O | H | H | H |
| 2-96 | 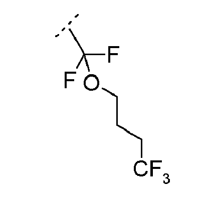 | O | H | H | H |
| 2-97 | 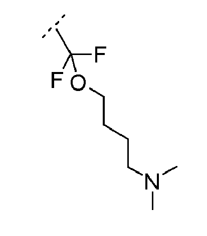 | O | H | H | H |
| 2-98 | 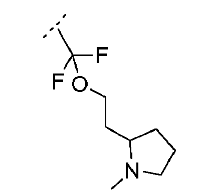 | O | H | H | H |
| 2-99 | 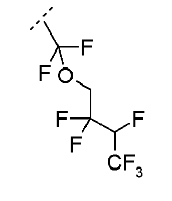 | O | H | H | H |
| 2-100 | 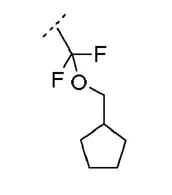 | O | H | H | H |
| 2-101 | 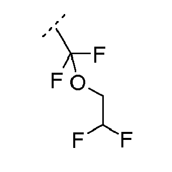 | O | H | H | H |
| 2-102 | 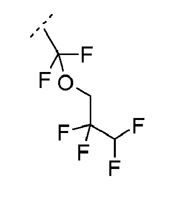 | O | H | H | H |
| 2-103 | 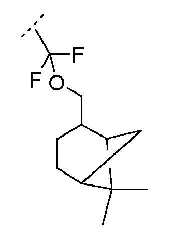 | O | H | H | H |

**Table 3:**

| | | | | | |
|---|---|---|---|---|---|
| 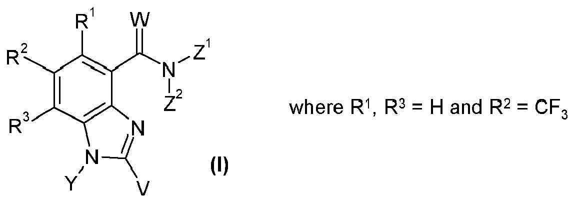 | | | | | |

| No. | V | W | Y | Z¹ | Z² |
|---|---|---|---|---|---|
| 3-1 | 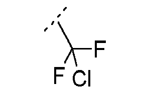 | O | H | H | H |
| 3-2 | 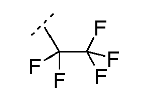 | O | H | H | H |
| 3-3 | 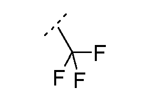 | O | H | 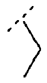 | H |
| 3-4 | 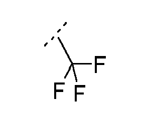 | O | 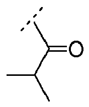 | H | H |
| 3-5 | 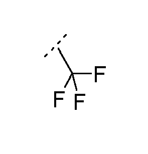 | O | H | 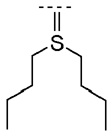 | |
| 3-6 | 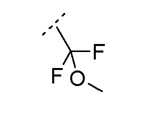 | O | H | H | H |
| 3-8 | 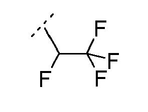 | O | H | H | H |
| 3-9 | 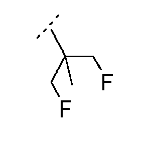 | O | H | H | H |
| 3-10 | 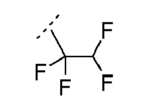 | O | H | H | H |
| 3-11 | 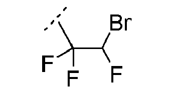 | O | H | H | H |
| 3-12 | 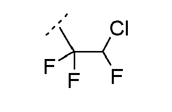 | O | H | H | H |
| 3-13 | 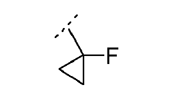 | O | H | H | H |
| 3-14 | 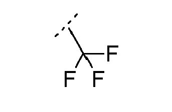 | O | H | H | H |
| 3-15 | 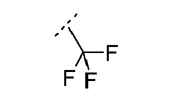 | O | H | 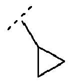 | H |
| 3-16 | 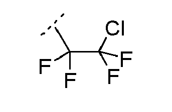 | O | H | H | H |
| 3-17 | 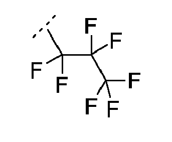 | O | H | H | H |
| 3-18 | 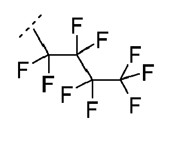 | O | H | H | H |
| 3-19 | 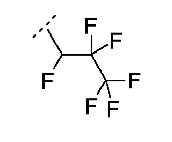 | O | H | H | H |
| 3-20 | 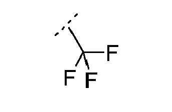 | O | H | 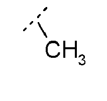 | H |
| 3-21 | 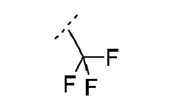 | O | H | 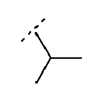 | H |
| 3-22 | 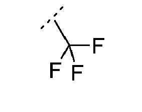 | O | H | 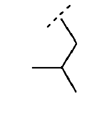 | H |
| 3-23 | 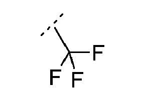 | O | H | 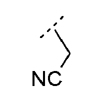 | H |
| 3-24 | 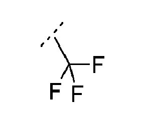 | O | H | 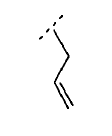 | H |
| 3-25 | 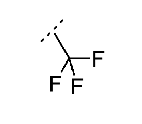 | O | H | 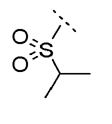 | H |
| 3-26 | 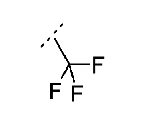 | O | H | 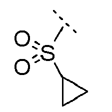 | H |
| 3-27 | 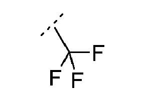 | O | 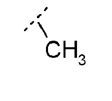 | H | H |
| 3-28 | 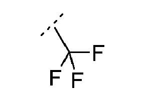 | O | 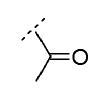 | H | H |
| 3-29 | 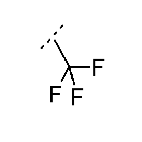 | O | 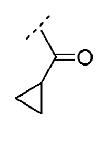 | H | H |
| 3-30 | 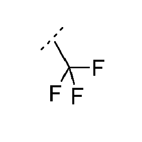 | O | 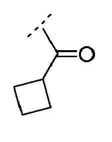 | H | H |
| 3-31 | 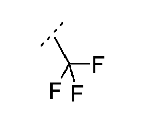 | O | 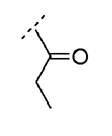 | H | H |
| 3-32 | 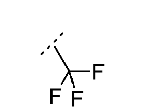 | O | 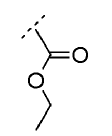 | H | H |
| 3-33 | 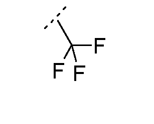 | O | H | 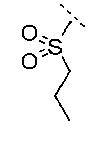 | H |
| 3-34 | 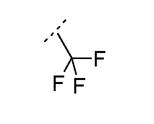 | O | H | 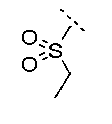 | H |
| 3-35 | 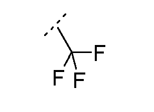 | O | H | 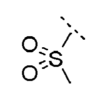 | H |
| 3-36 | 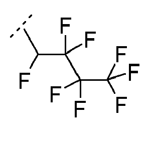 | O | H | H | H |
| 3-37 | 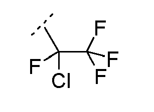 | O | H | H | H |
| 3-38 | 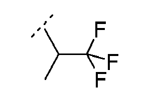 | O | H | H | H |
| 3-39 | 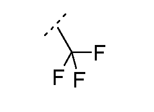 | S | H | H | H |
| 3-40 | 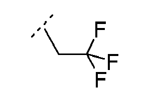 | O | H | H | H |
| 3-41 | 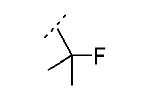 | O | H | H | H |
| 3-42 | 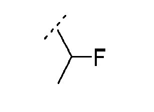 | O | H | H | H |
| 3-43 | 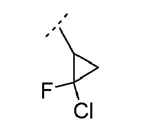 | O | H | H | H |
| 3-44 | 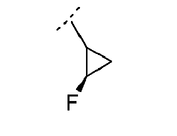 | O | H | H | H |
| 3-45 | 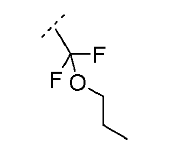 | O | H | H | H |
| 3-46 | 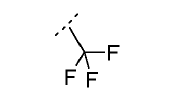 | O | H | 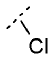 | H |
| 3-47 | 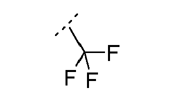 | O | H | 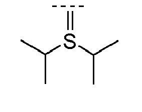 | |
| 3-48 | 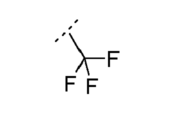 | O | H | 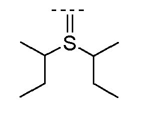 | |
| 3-49 | 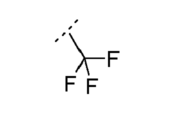 | O | H | 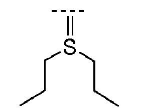 | |
| 3-50 | 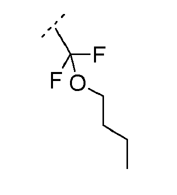 | O | H | H | H |
| 3-51 | 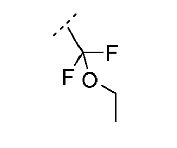 | O | H | H | H |
| 3-52 | 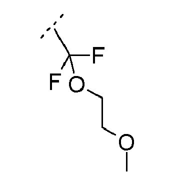 | O | H | H | H |
| 3-53 | 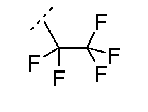 | O | 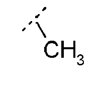 | H | H |
| 3-54 | 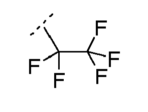 | O | 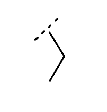 | H | H |
| 3-55 | 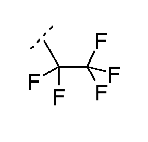 | O | 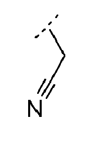 | H | H |
| 3-56 | 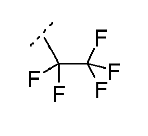 | O | 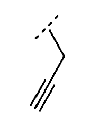 | H | H |
| 3-57 | 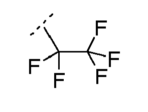 | O | 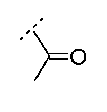 | H | H |
| 3-58 | 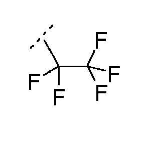 | O | 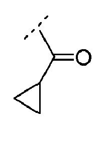 | H | H |
| 3-59 | 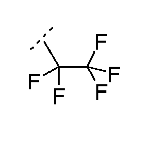 | O | 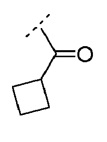 | H | H |
| 3-60 | 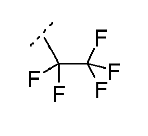 | O | 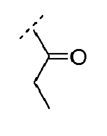 | H | H |
| 3-61 | 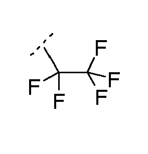 | O | 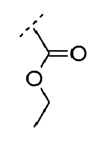 | H | H |
| 3-62 | 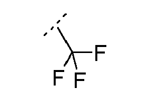 | O | 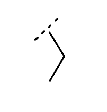 | H | H |
| 3-63 | 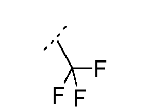 | O | 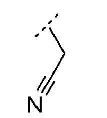 | H | H |
| 3-64 | 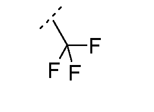 | O | 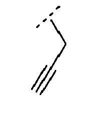 | H | H |
| 3-65 | 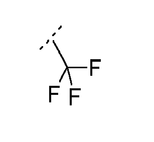 | O | 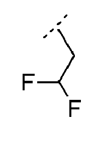 | H | H |
| 3-66 | 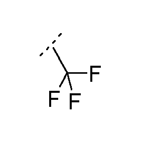 | O | 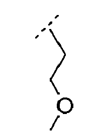 | H | H |
| 3-67 | 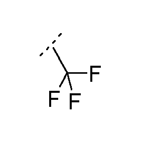 | O | H | 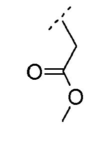 | H |
| 3-68 | 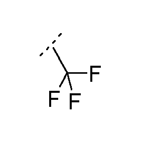 | O | H | 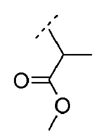 | H |
| 3-69 | 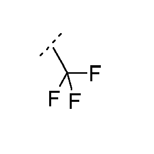 | O | 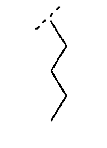 | H | H |
| 3-70 | 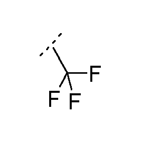 | O | 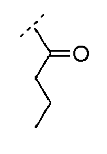 | H | H |
| 3-71 | 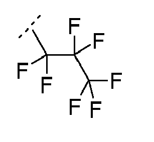 | O | 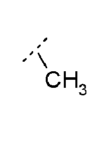 | H | H |
| 3-72 | 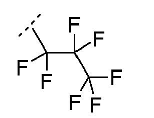 | O | 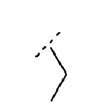 | H | H |
| 3-73 | 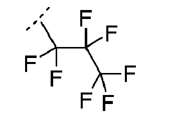 | O | 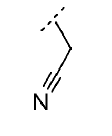 | H | H |
| 3-74 | 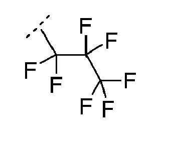 | O | 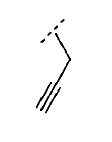 | H | H |
| 3-75 | 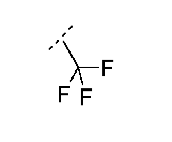 | O | 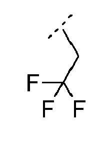 | H | H |
| 3-76 | 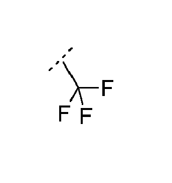 | O | 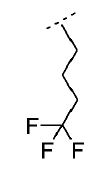 | H | H |
| 3-77 | 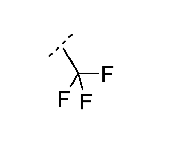 | O | 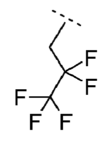 | H | H |
| 3-78 | 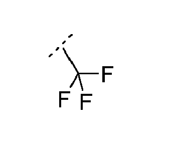 | O | 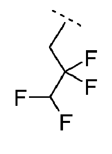 | H | H |
| 3-79 | 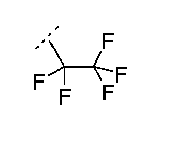 | O | 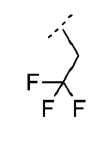 | H | H |
| 3-80 | 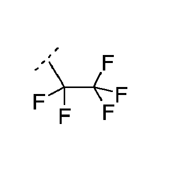 | O | 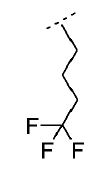 | H | H |
| 3-81 | 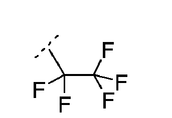 | O | 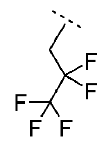 | H | H |
| 3-82 | 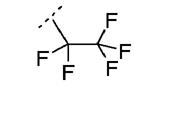 | O | 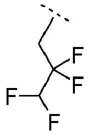 | H | H |
| 3-83 | 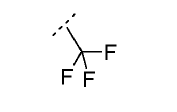 | O | H | 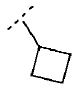 | H |
| 3-84 | 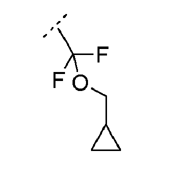 | O | H | H | H |
| 3-85 | 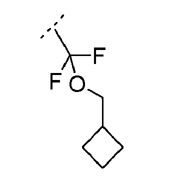 | O | H | H | H |
| 3-86 | 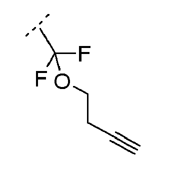 | O | H | H | H |
| 3-87 | 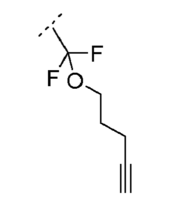 | O | H | H | H |
| 3-88 | 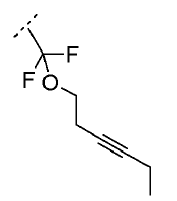 | O | H | H | H |
| 3-89 | 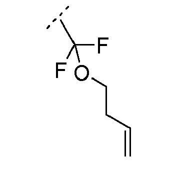 | O | H | H | H |
| 3-90 | 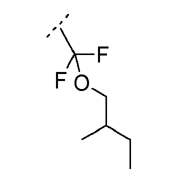 | O | H | H | H |
| 3-91 | 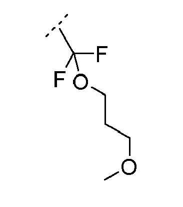 | O | H | H | H |
| 3-92 | 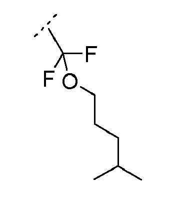 | O | H | H | H |
| 3-93 | 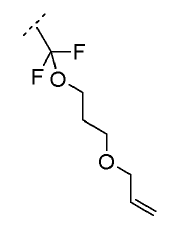 | O | H | H | H |
| 3-94 | 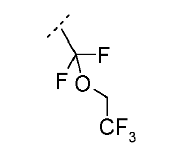 | O | H | H | H |
| 3-95 | 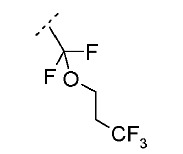 | O | H | H | H |
| 3-96 | 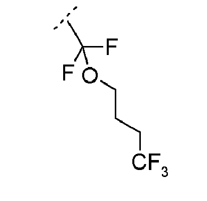 | O | H | H | H |
| 3-97 | 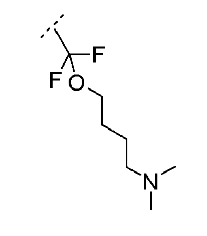 | O | H | H | H |
| 3-98 | 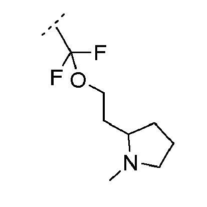 | O | H | H | H |
| 3-99 | 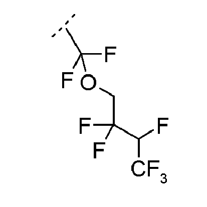 | O | H | H | H |
| 3-100 | 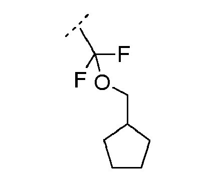 | O | H | H | H |
| 3-101 | 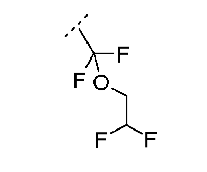 | O | H | H | H |
| 3-102 | 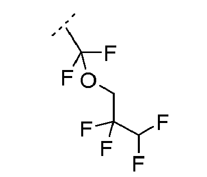 | O | H | H | H |
| 3-103 | 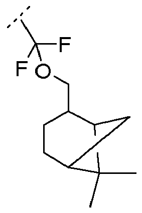 | O | H | H | H |

**Table 4:**

| | | | | | |
|---|---|---|---|---|---|
| 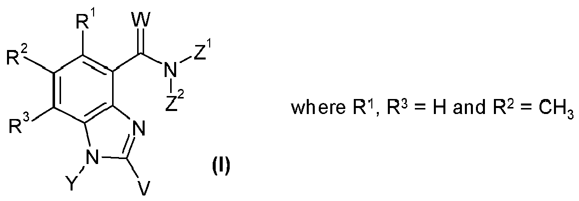 | | | | | |

| No. | V | W | Y | Z¹ | Z² |
|---|---|---|---|---|---|
| 4-1 | 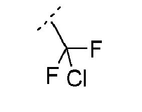 | O | H | H | H |
| 4-2 | 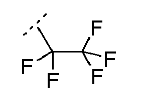 | O | H | H | H |
| 4-3 | 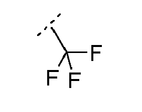 | O | H | 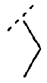 | H |
| 4-4 | 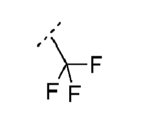 | O | 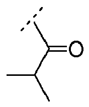 | H | H |
| 4-5 | 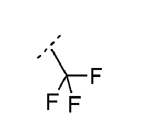 | O | H | 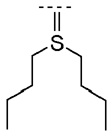 | |
| 4-6 | 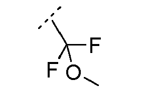 | O | H | H | H |
| 4-7 | 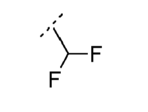 | O | H | H | H |
| 4-8 | 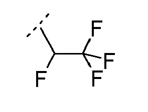 | O | H | H | H |
| 4-9 | 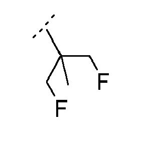 | O | H | H | H |
| 4-10 | 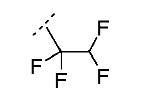 | O | H | H | H |
| 4-11 | 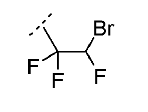 | O | H | H | H |
| 4-12 | 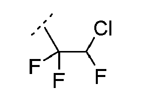 | O | H | H | H |
| 4-13 | 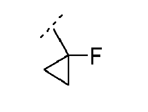 | O | H | H | H |
| 4-15 | 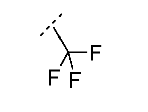 | O | H | 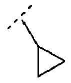 | H |
| 4-16 | 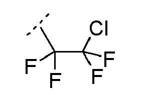 | O | H | H | H |
| 4-17 | 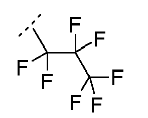 | O | H | H | H |
| 4-18 | 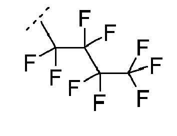 | O | H | H | H |
| 4-19 | 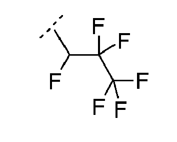 | O | H | H | H |
| 4-20 | 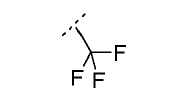 | O | H | 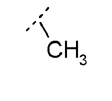 | H |
| 4-21 | 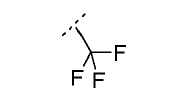 | O | H | 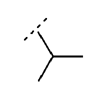 | H |
| 4-22 | 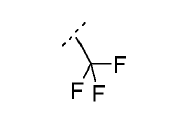 | O | H | 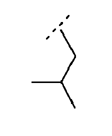 | H |
| 4-23 | 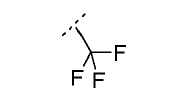 | O | H | 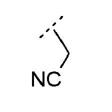 | H |
| 4-24 | 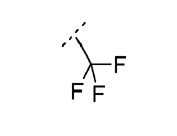 | O | H | 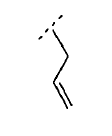 | H |
| 4-25 | 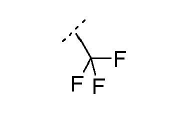 | O | H | 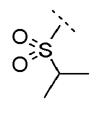 | H |
| 4-26 | 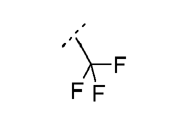 | O | H | 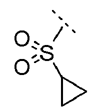 | H |
| 4-27 | 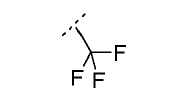 | O | 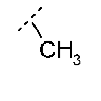 | H | H |
| 4-28 | 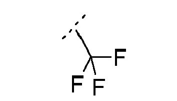 | O | 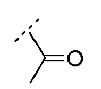 | H | H |
| 4-29 | 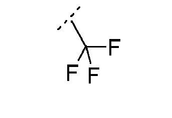 | O | 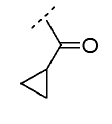 | H | H |
| 4-30 | 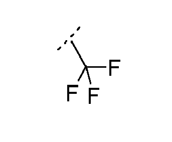 | O | 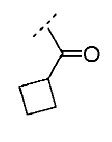 | H | H |
| 4-31 | 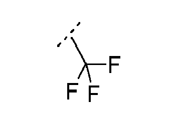 | O | 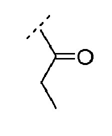 | H | H |
| 4-32 | 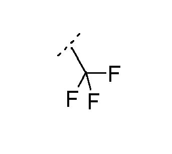 | O | 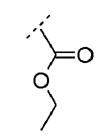 | H | H |
| 4-33 | 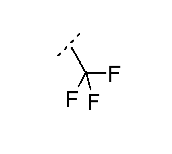 | O | H | 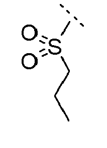 | H |
| 4-34 | 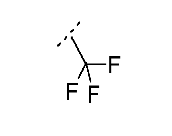 | O | H | 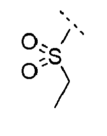 | H |
| 4-35 | 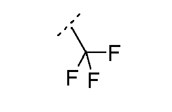 | O | H | 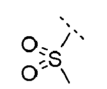 | H |
| 4-36 | 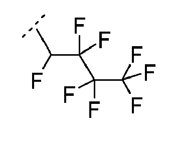 | O | H | H | H |
| 4-37 | 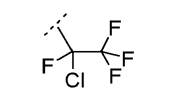 | O | H | H | H |
| 4-38 | 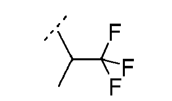 | O | H | H | H |
| 4-39 | 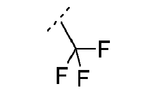 | S | H | H | H |
| 4-40 | 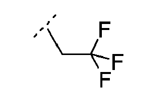 | O | H | H | H |
| 4-41 | 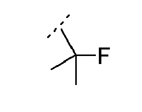 | O | H | H | H |
| 4-42 | 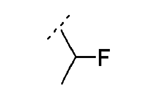 | O | H | H | H |
| 4-43 | 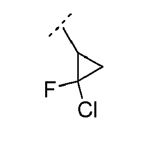 | O | H | H | H |
| 4-44 | 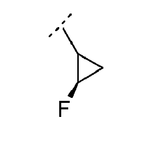 | O | H | H | H |
| 4-45 | 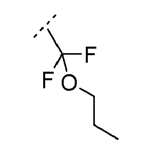 | O | H | H | H |
| 4-46 | 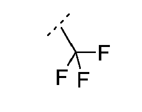 | O | H | 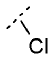 | H |
| 4-47 | 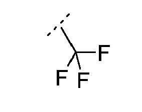 | O | H | 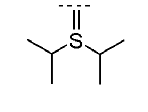 | |
| 4-48 | 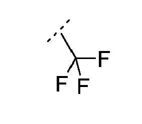 | O | H | 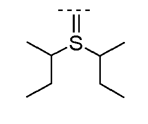 | |
| 4-49 | 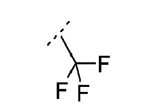 | O | H | 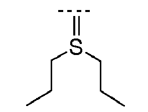 | |
| 4-50 | 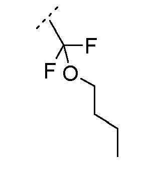 | O | H | H | H |
| 4-51 | 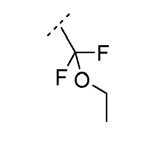 | O | H | H | H |
| 4-52 | 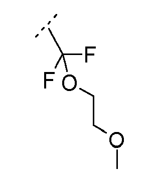 | O | H | H | H |
| 4-53 | 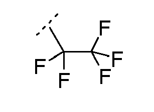 | O | 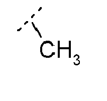 | H | H |
| 4-54 | 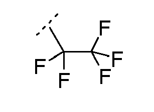 | O | 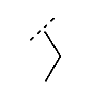 | H | H |
| 4-55 | 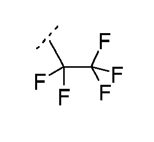 | O | 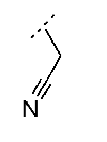 | H | H |
| 4-56 | 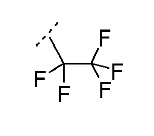 | O | 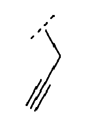 | H | H |
| 4-57 | 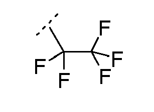 | O | 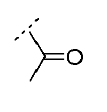 | H | H |
| 4-58 | 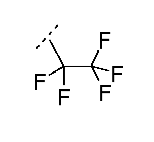 | O | 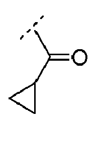 | H | H |
| 4-59 | 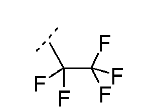 | O | 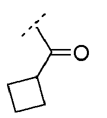 | H | H |
| 4-60 | 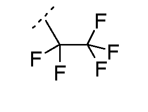 | O | 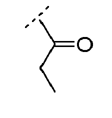 | H | H |
| 4-61 | 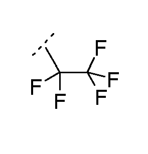 | O | 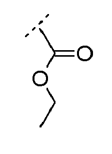 | H | H |
| 4-62 | 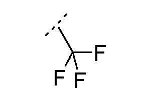 | O | 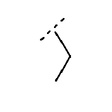 | H | H |
| 4-63 | 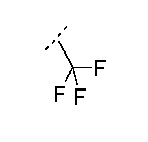 | O | 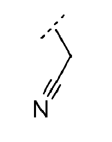 | H | H |
| 4-64 | 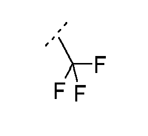 | O | 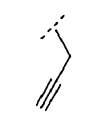 | H | H |
| 4-65 | 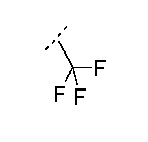 | O | 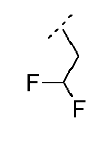 | H | H |
| 4-66 | 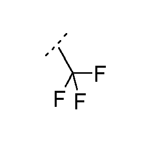 | O | 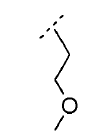 | H | H |
| 4-67 | 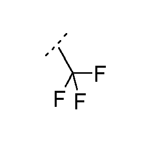 | O | H | 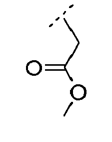 | H |
| 4-68 | 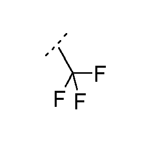 | O | H | 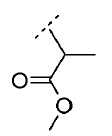 | H |
| 4-69 | 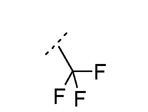 | O | 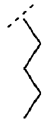 | H | H |
| 4-70 | 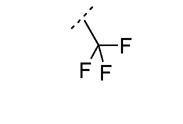 | O | 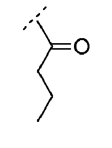 | H | H |
| 4-71 | 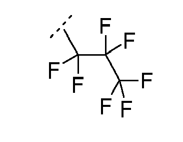 | O | 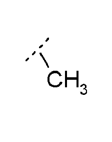 | H | H |
| 4-72 | 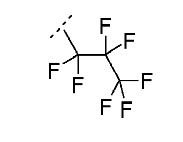 | O | 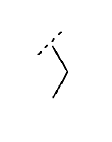 | H | H |
| 4-73 | 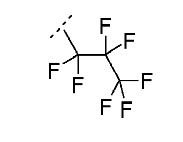 | O | 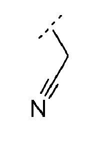 | H | H |
| 4-74 | 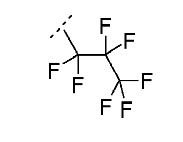 | O | 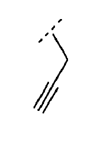 | H | H |
| 4-75 | 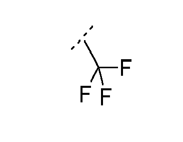 | O | 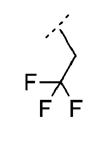 | H | H |
| 4-76 | 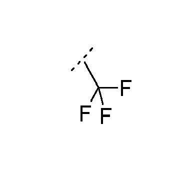 | O | 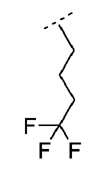 | H | H |
| 4-77 | 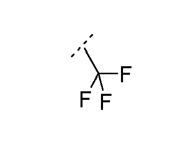 | O | 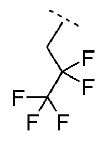 | H | H |
| 4-78 | 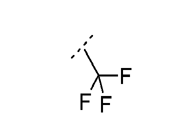 | O | 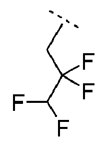 | H | H |
| 4-79 | 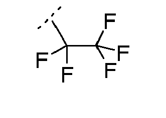 | O | 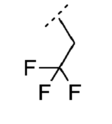 | H | H |
| 4-80 | 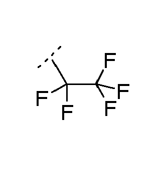 | O | 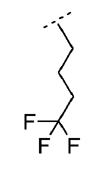 | H | H |
| 4-81 | 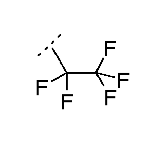 | O | 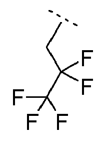 | H | H |
| 4-82 | 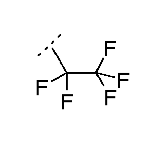 | O | 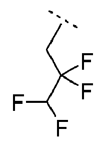 | H | H |
| 4-83 | 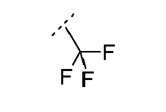 | O | H | 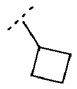 | H |
| 4-84 | 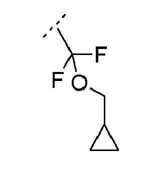 | O | H | H | H |
| 4-85 | 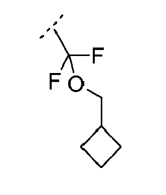 | O | H | H | H |
| 4-86 | 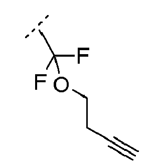 | O | H | H | H |
| 4-87 | 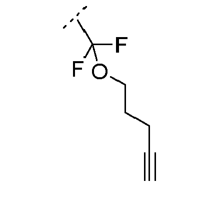 | O | H | H | H |
| 4-88 | 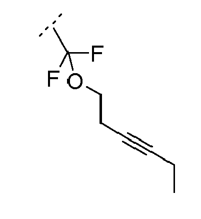 | O | H | H | H |
| 4-89 | 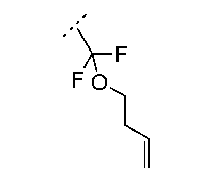 | O | H | H | H |
| 4-90 | 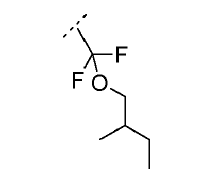 | O | H | H | H |
| 4-91 | 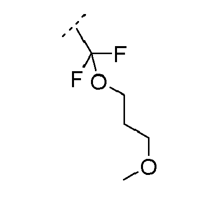 | O | H | H | H |
| 4-92 | 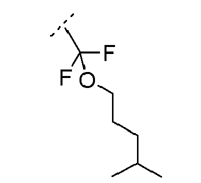 | O | H | H | H |
| 4-93 | 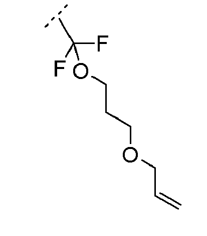 | O | H | H | H |
| 4-94 | 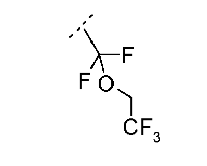 | O | H | H | H |
| 4-95 | 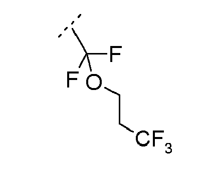 | O | H | H | H |
| 4-96 | 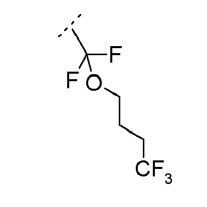 | O | H | H | H |
| 4-97 | 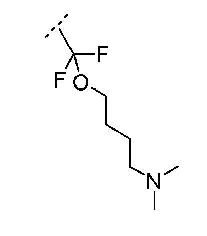 | O | H | H | H |
| 4-98 | 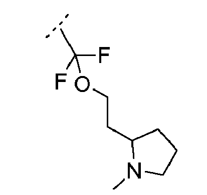 | O | H | H | H |
| 4-99 | 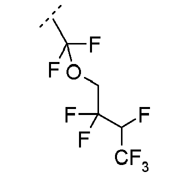 | O | H | H | H |
| 4-100 | 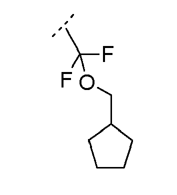 | O | H | H | H |
| 4-101 | 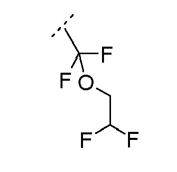 | O | H | H | H |
| 4-102 | 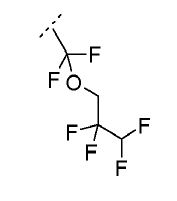 | O | H | H | H |
| 4-103 | 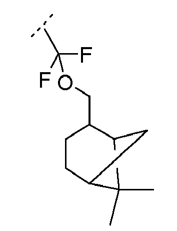 | O | H | H | H |

**Table 5:**

| | | | | | |
|---|---|---|---|---|---|
| 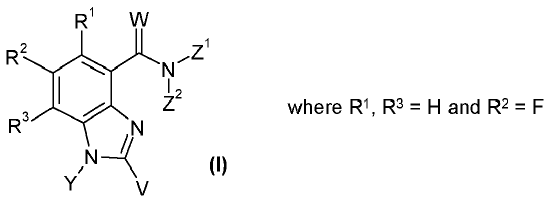 | | | | | |

| No. | V | W | Y | Z¹ | Z² |
|---|---|---|---|---|---|
| 5-1 | 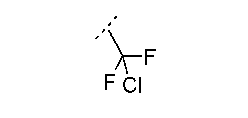 | O | H | H | H |
| 5-2 | 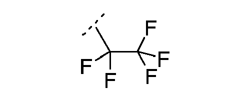 | O | H | H | H |
| 5-3 | 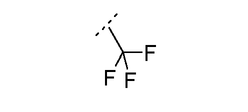 | O | H | 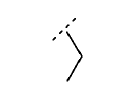 | H |
| 5-4 | 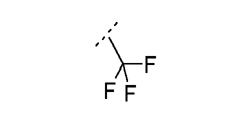 | O | 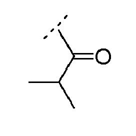 | H | H |
| 5-5 | 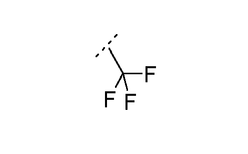 | O | H | 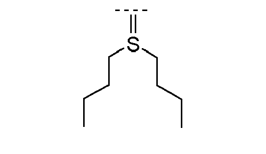 | |
| 5-6 | 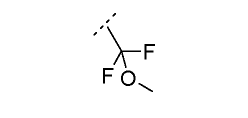 | O | H | H | H |
| 5-7 | 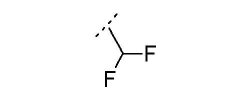 | O | H | H | H |
| 5-8 | 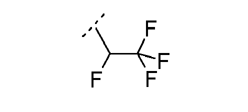 | O | H | H | H |
| 5-9 | 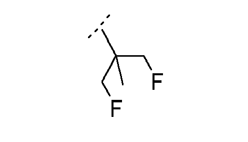 | O | H | H | H |
| 5-10 | 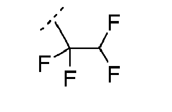 | O | H | H | H |
| 5-11 | 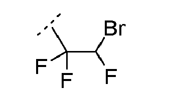 | O | H | H | H |
| 5-12 | 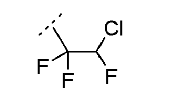 | O | H | H | H |
| 5-13 | 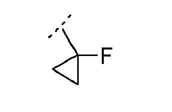 | O | H | H | H |
| 5-14 | 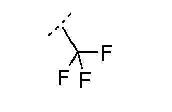 | O | H | H | H |
| 5-15 | 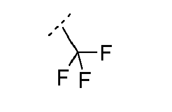 | O | H | 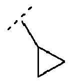 | H |
| 5-16 | 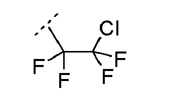 | O | H | H | H |
| 5-17 | 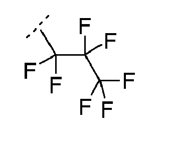 | O | H | H | H |
| 5-18 | 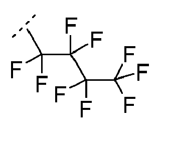 | O | H | H | H |
| 5-19 | 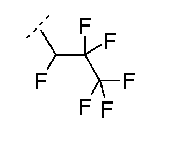 | O | H | H | H |
| 5-20 | 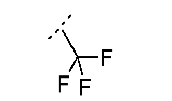 | O | H | 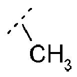 | H |
| 5-21 | 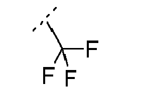 | O | H | 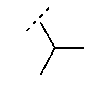 | H |
| 5-22 | 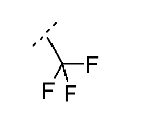 | O | H | 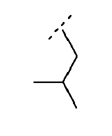 | H |
| 5-23 | 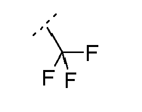 | O | H | 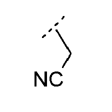 | H |
| 5-24 | 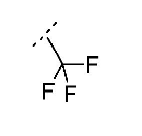 | O | H | 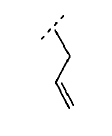 | H |
| 5-25 | 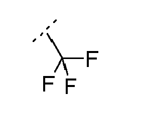 | O | H | 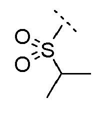 | H |
| 5-26 | 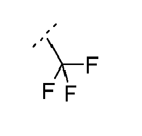 | O | H | 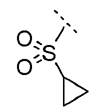 | H |
| 5-27 | 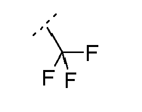 | O | 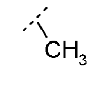 | H | H |
| 5-28 | 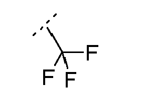 | O | 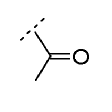 | H | H |
| 5-29 | 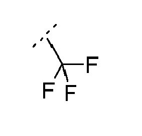 | O | 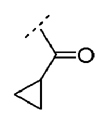 | H | H |
| 5-30 | 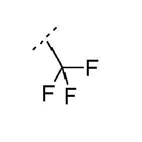 | O | 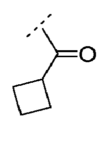 | H | H |
| 5-31 | 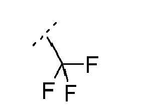 | O | 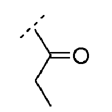 | H | H |
| 5-32 | 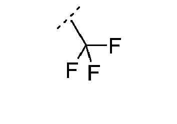 | O | 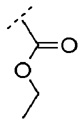 | H | H |
| 5-33 | 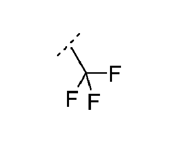 | O | H | 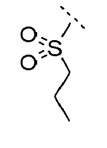 | H |
| 5-34 | 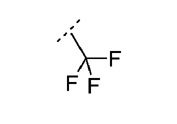 | O | H | 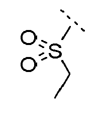 | H |
| 5-35 | 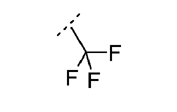 | O | H | 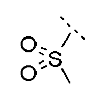 | H |
| 5-36 | 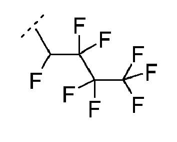 | O | H | H | H |
| 5-37 | 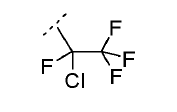 | O | H | H | H |
| 5-38 | 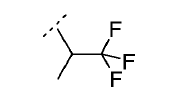 | O | H | H | H |
| 5-39 | 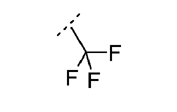 | S | H | H | H |
| 5-40 | 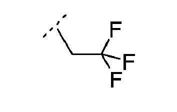 | O | H | H | H |
| 5-41 | 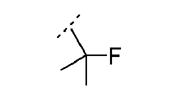 | O | H | H | H |
| 5-42 | 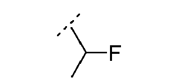 | O | H | H | H |
| 5-43 | 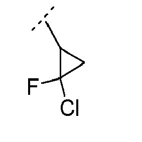 | O | H | H | H |
| 5-44 | 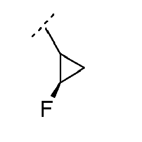 | O | H | H | H |
| 5-45 | 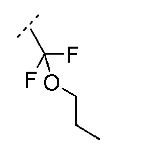 | O | H | H | H |
| 5-46 | 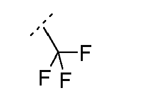 | O | H | 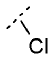 | H |
| 5-47 | 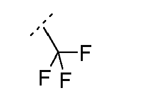 | O | H | 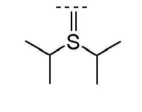 | |
| 5-48 | 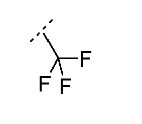 | O | H | 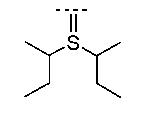 | |
| 5-49 | 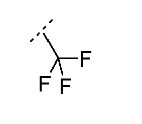 | O | H | 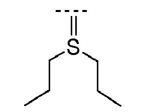 | |
| 5-50 | 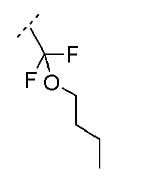 | O | H | H | H |
| 5-51 | 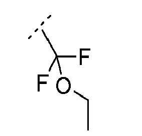 | O | H | H | H |
| 5-52 | 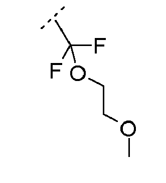 | O | H | H | H |
| 5-53 | 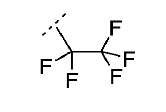 | O | 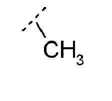 | H | H |
| 5-54 | 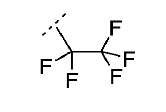 | O | 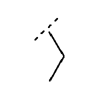 | H | H |
| 5-55 | 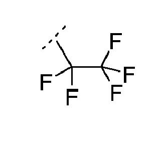 | O | 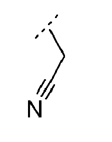 | H | H |
| 5-56 | 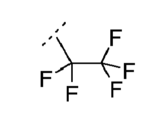 | O | 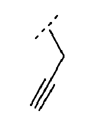 | H | H |
| 5-57 | 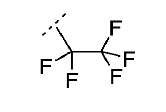 | O | 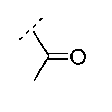 | H | H |
| 5-58 | 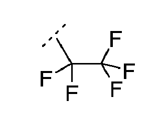 | O | 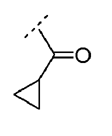 | H | H |
| 5-59 | 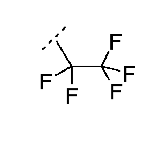 | O | 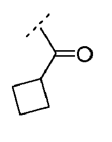 | H | H |
| 5-60 | 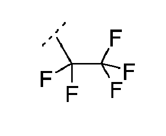 | O | 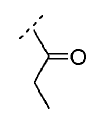 | H | H |
| 5-61 | 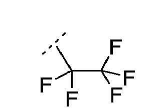 | O | 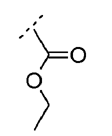 | H | H |
| 5-62 | 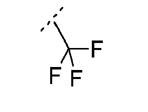 | O | 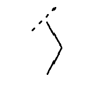 | H | H |
| 5-63 | 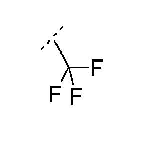 | O | 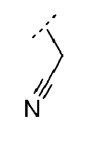 | H | H |
| 5-64 | 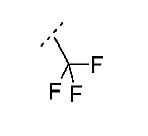 | O | 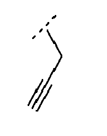 | H | H |
| 5-65 | 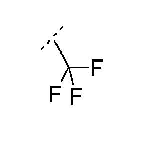 | O | 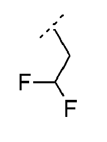 | H | H |
| 5-66 | 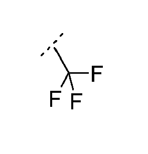 | O | 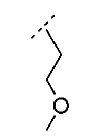 | H | H |
| 5-67 | 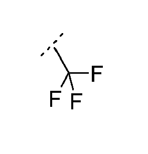 | O | H | 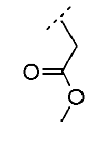 | H |
| 5-68 | 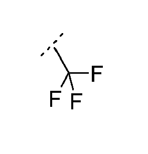 | O | H | 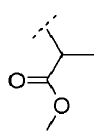 | H |
| 5-69 | 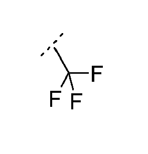 | O | 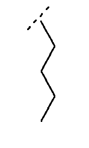 | H | H |
| 5-70 | 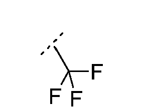 | O | 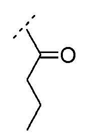 | H | H |
| 5-71 | 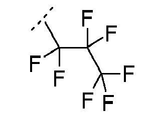 | O | 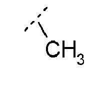 | H | H |
| 5-72 | 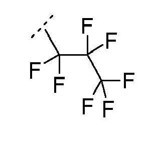 | O | 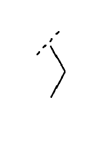 | H | H |
| 5-73 | 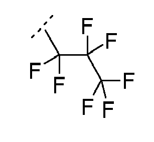 | O | 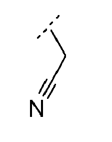 | H | H |
| 5-74 | 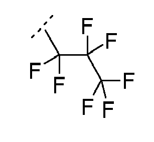 | O | 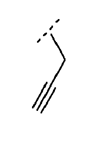 | H | H |
| 5-75 | 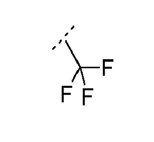 | O | 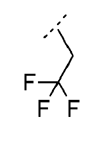 | H | H |
| 5-76 | 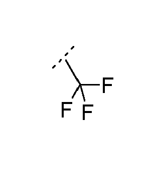 | O | 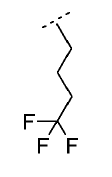 | H | H |
| 5-77 | 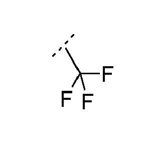 | O | 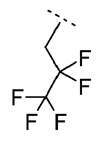 | H | H |
| 5-78 | 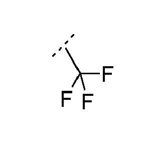 | O | 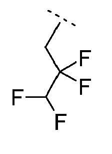 | H | H |
| 5-79 | 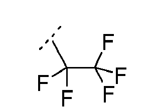 | O | 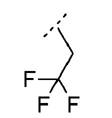 | H | H |
| 5-80 | 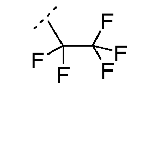 | O | 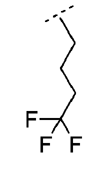 | H | H |
| 5-81 | 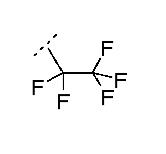 | O | 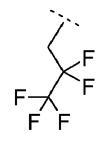 | H | H |
| 5-82 | 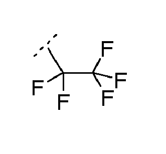 | O | 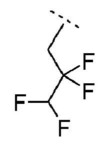 | H | H |
| 5-83 | 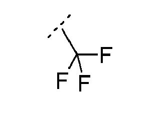 | O | H | 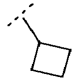 | H |
| 5-84 | 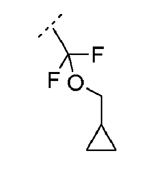 | O | H | H | H |
| 5-85 | 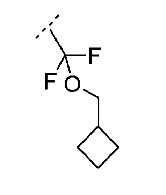 | O | H | H | H |
| 5-86 | 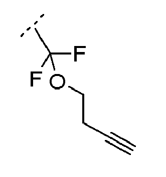 | O | H | H | H |
| 5-87 | 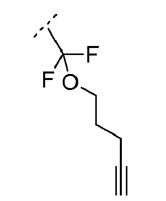 | O | H | H | H |

| No. | V | W | Y | Z¹ | z² |
|---|---|---|---|---|---|
| 5-88 | 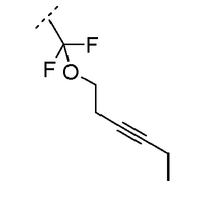 | O | H | H | H |
| 5-89 | 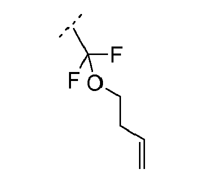 | O | H | H | H |
| 5-90 | 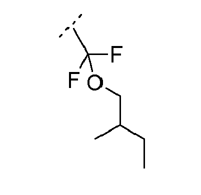 | O | H | H | H |
| 5-91 | 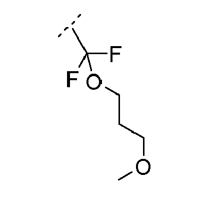 | O | H | H | H |
| 5-92 | 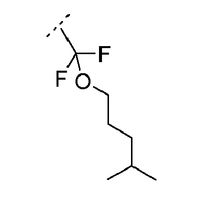 | O | H | H | H |
| 5-93 | 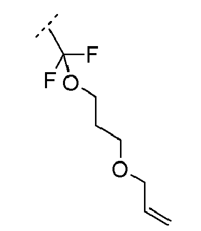 | O | H | H | H |
| 5-94 | 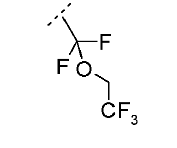 | O | H | H | H |
| 5-95 | 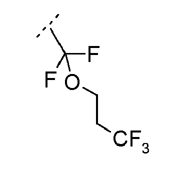 | O | H | H | H |
| 5-96 | 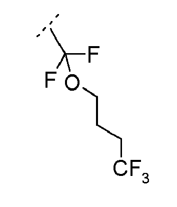 | O | H | H | H |
| 5-97 | 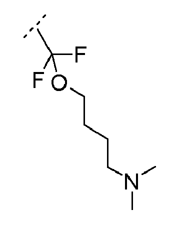 | O | H | H | H |
| 5-98 | 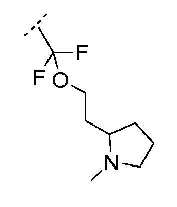 | O | H | H | H |
| 5-99 | 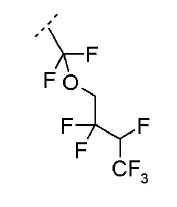 | O | H | H | H |
| 5-100 | 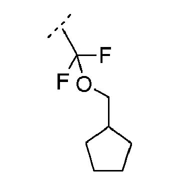 | O | H | H | H |
| 5-101 | 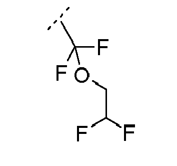 | O | H | H | H |
| 5-102 | 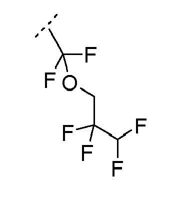 | O | H | H | H |
| 5-103 | 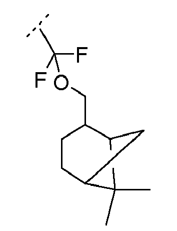 | O | H | H | H |

**Table 6:**

| | | | | | |
|---|---|---|---|---|---|
| 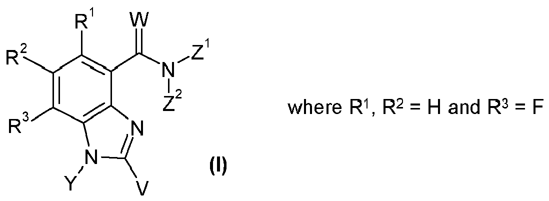 | | | | | |

| No. | V | W | Y | Z¹ | Z² |
|---|---|---|---|---|---|
| 6-1 | 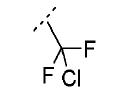 | O | H | H | H |
| 6-2 | 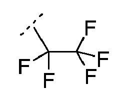 | O | H | H | H |
| 6-3 | 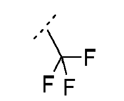 | O | H | 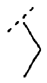 | H |
| 6-4 | 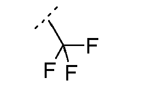 | O | 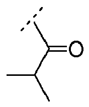 | H | H |
| 6-5 | 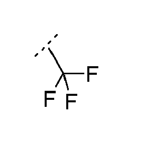 | O | H | 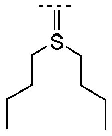 | |
| 6-6 | 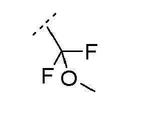 | O | H | H | H |
| 6-7 | 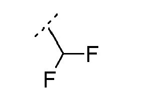 | O | H | H | H |
| 6-8 | 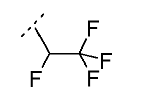 | O | H | H | H |
| 6-9 | 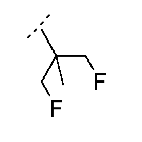 | O | H | H | H |
| 6-10 | 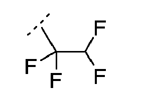 | O | H | H | H |
| 6-11 | 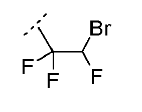 | O | H | H | H |
| 6-12 | 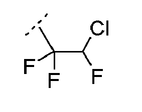 | O | H | H | H |
| 6-13 | 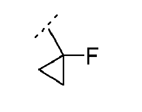 | O | H | H | H |
| 6-14 | 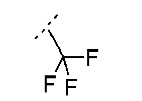 | O | H | H | H |
| 6-15 | 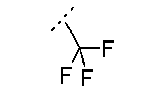 | O | H | 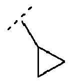 | H |
| 6-16 | 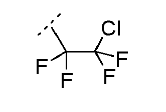 | O | H | H | H |
| 6-17 | 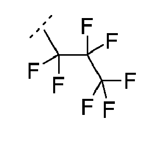 | O | H | H | H |
| 6-18 | 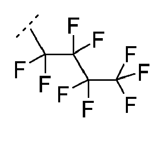 | O | H | H | H |
| 6-19 | 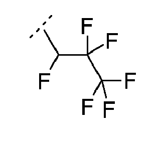 | O | H | H | H |
| 6-20 | 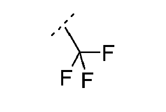 | O | H | 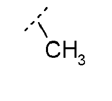 | H |
| 6-21 | 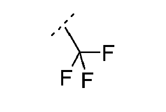 | O | H | 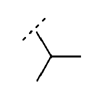 | H |
| 6-22 | 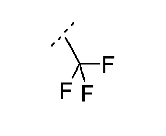 | O | H | 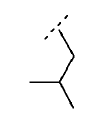 | H |
| 6-23 | 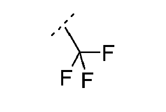 | O | H | 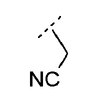 | H |
| 6-24 | 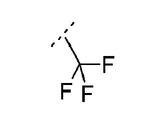 | O | H | 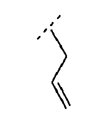 | H |
| 6-25 | 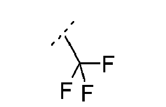 | O | H | 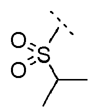 | H |
| 6-26 | 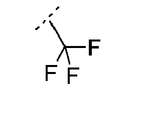 | O | H | 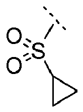 | H |
| 6-27 | 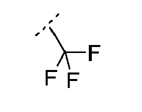 | O | 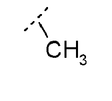 | H | H |
| 6-28 | 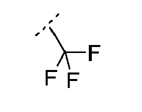 | O | 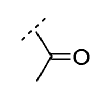 | H | H |
| 6-29 | 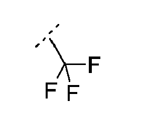 | O | 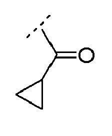 | H | H |
| 6-30 | 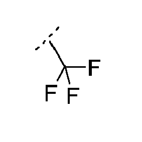 | O | 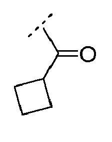 | H | H |
| 6-31 | 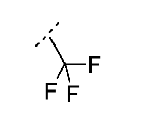 | O | 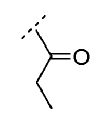 | H | H |
| 6-32 | 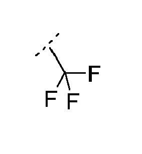 | O | 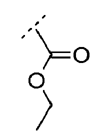 | H | H |
| 6-33 | 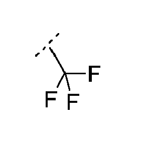 | O | H | 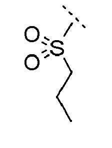 | H |
| 6-34 | 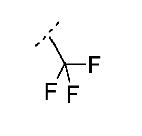 | O | H | 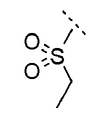 | H |
| 6-35 | 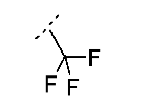 | O | H | 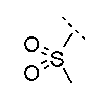 | H |
| 6-36 | 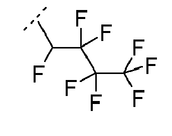 | O | H | H | H |
| 6-37 | 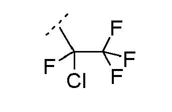 | O | H | H | H |
| 6-38 | 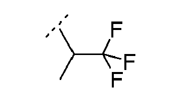 | O | H | H | H |
| 6-39 | 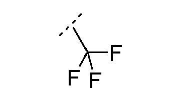 | S | H | H | H |
| 6-40 | 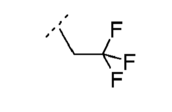 | O | H | H | H |
| 6-41 | 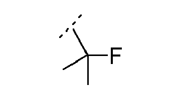 | O | H | H | H |
| 6-42 | 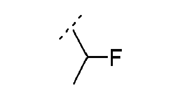 | O | H | H | H |
| 6-43 | 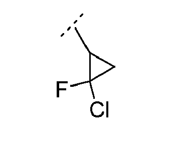 | O | H | H | H |
| 6-44 | 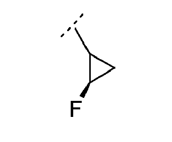 | O | H | H | H |
| 6-45 | 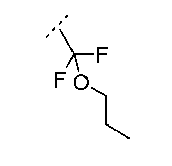 | O | H | H | H |
| 6-46 | 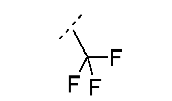 | O | H | 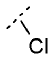 | H |
| 6-47 | 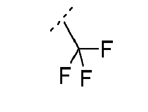 | O | H | 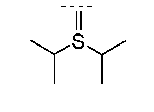 | |
| 6-48 | 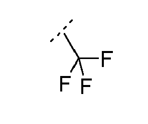 | O | H | 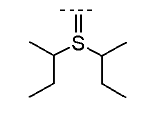 | |
| 6-49 | 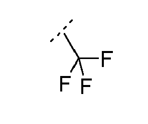 | O | H | 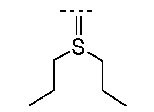 | |
| 6-50 | 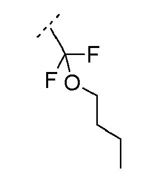 | O | H | H | H |
| 6-51 | 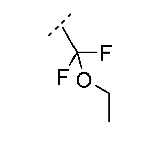 | O | H | H | H |
| 6-52 | 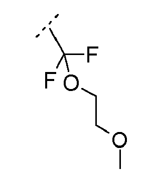 | O | H | H | H |
| 6-53 | 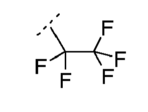 | O | 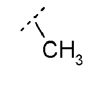 | H | H |
| 6-54 | 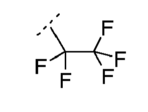 | O | 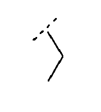 | H | H |
| 6-55 | 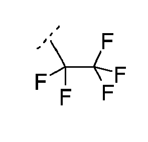 | O | 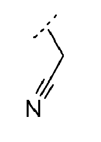 | H | H |
| 6-56 | 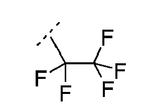 | O | 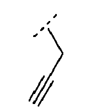 | H | H |
| 6-57 | 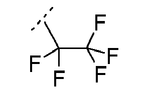 | O | 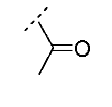 | H | H |
| 6-58 | 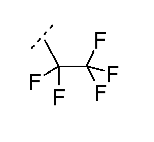 | O | 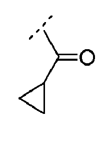 | H | H |
| 6-59 | 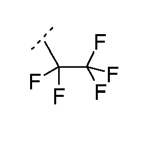 | O | 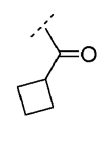 | H | H |
| 6-60 | 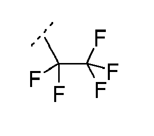 | O | 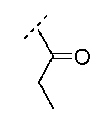 | H | H |
| 6-61 | 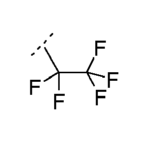 | O | 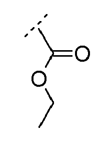 | H | H |
| 6-62 | 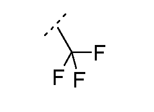 | O | 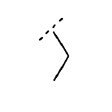 | H | H |
| 6-63 | 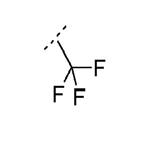 | O | 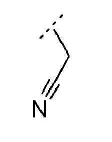 | H | H |
| 6-64 | 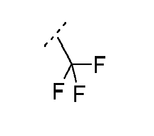 | O | 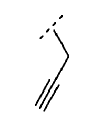 | H | H |
| 6-65 | 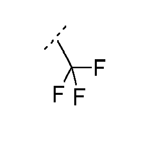 | O | 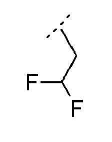 | H | H |
| 6-66 | 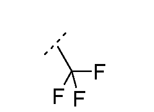 | O | 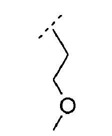 | H | H |
| 6-67 | 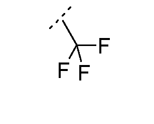 | O | H | 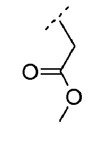 | H |
| 6-68 | 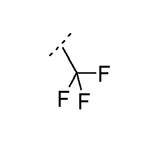 | O | H | 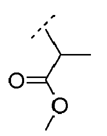 | H |
| 6-69 | 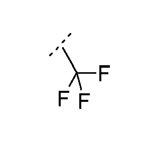 | O | 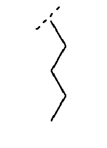 | H | H |
| 6-70 | 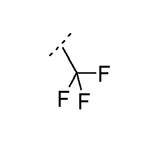 | O | 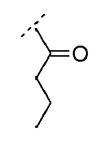 | H | H |
| 6-71 | 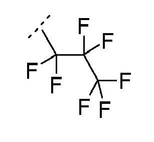 | O | 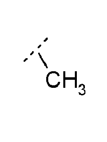 | H | H |
| 6-72 | 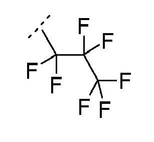 | O | 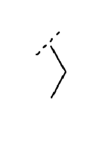 | H | H |
| 6-73 | 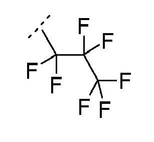 | O | 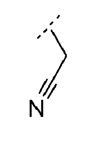 | H | H |
| 6-74 | 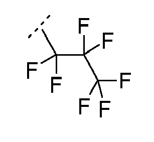 | O | 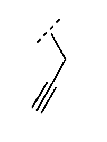 | H | H |
| 6-75 | 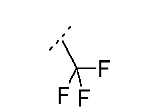 | O | 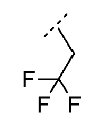 | H | H |
| 6-76 | 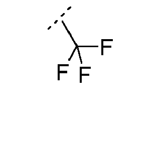 | O | 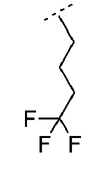 | H | H |
| 6-77 | 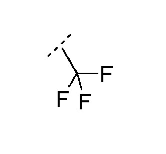 | O | 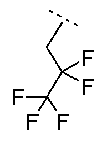 | H | H |
| 6-78 | 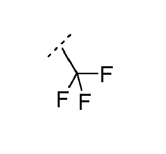 | O | 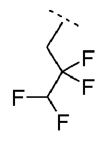 | H | H |
| 6-79 | 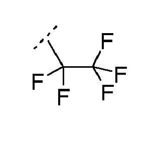 | O | 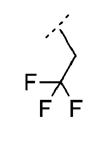 | H | H |
| 6-80 | 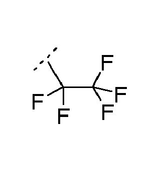 | O | 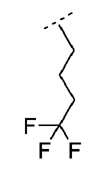 | H | H |
| 6-81 | 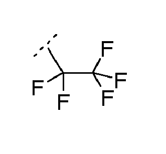 | O | 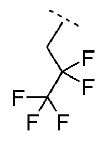 | H | H |
| 6-82 | 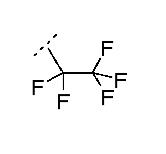 | O | 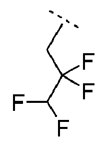 | H | H |
| 6-83 | 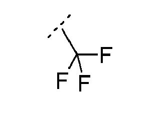 | O | H | 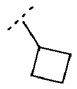 | H |
| 6-84 | 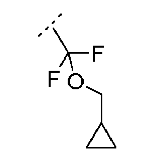 | O | H | H | H |
| 6-85 | 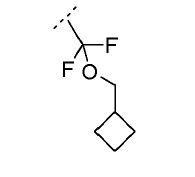 | O | H | H | H |
| 6-86 | 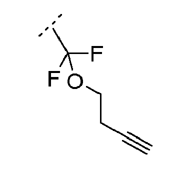 | O | H | H | H |
| 6-87 | 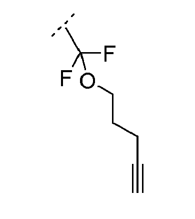 | O | H | H | H |
| 6-88 | 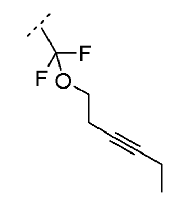 | O | H | H | H |
| 6-89 | 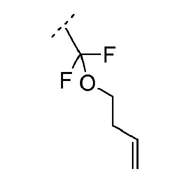 | O | H | H | H |
| 6-90 | 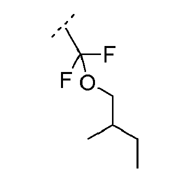 | O | H | H | H |
| 6-91 | 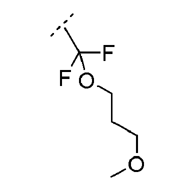 | O | H | H | H |
| 6-92 | 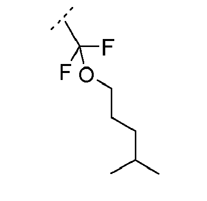 | O | H | H | H |
| 6-93 | 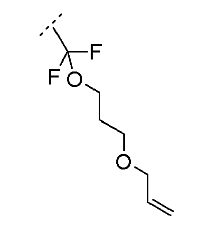 | O | H | H | H |
| 6-94 | 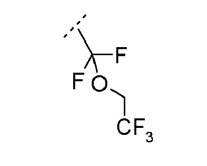 | O | H | H | H |
| 6-95 | 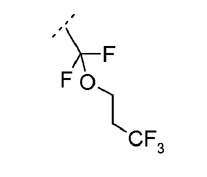 | O | H | H | H |
| 6-96 | 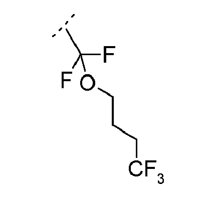 | O | H | H | H |
| 6-97 | 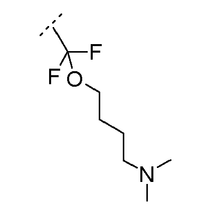 | O | H | H | H |
| 6-98 | 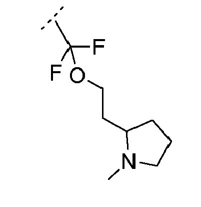 | O | H | H | H |
| 6-99 | 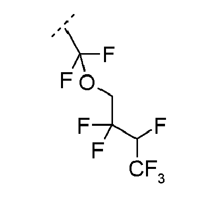 | O | H | H | H |
| 6-100 | 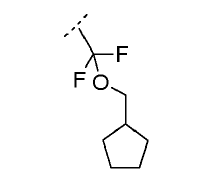 | O | H | H | H |
| 6-101 | 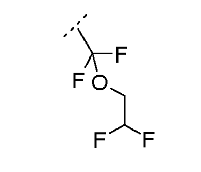 | O | H | H | H |
| 6-102 | 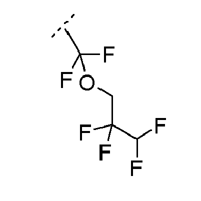 | O | H | H | H |
| 6-103 | 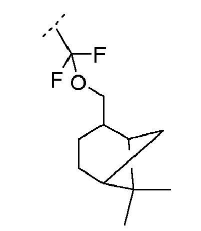 | O | H | H | H |

**Table 7:**

| | | | | | |
|---|---|---|---|---|---|
| 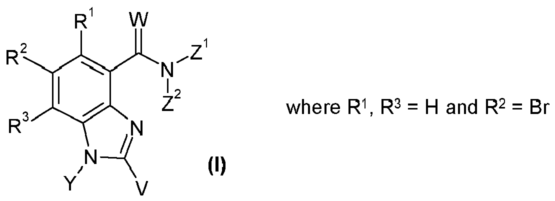 | | | | | |

| No. | V | W | Y | Z¹ | Z² |
|---|---|---|---|---|---|
| 7-1 | 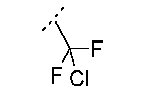 | O | H | H | H |
| 7-2 | 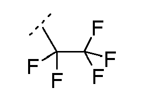 | O | H | H | H |
| 7-3 | 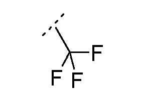 | O | H | 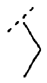 | H |
| 7-4 | 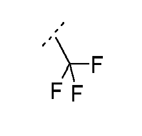 | O | 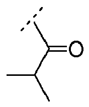 | H | H |
| 7-5 | 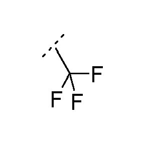 | O | H | 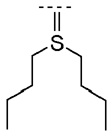 | |
| 7-6 | 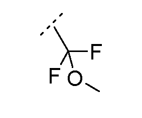 | O | H | H | H |
| 7-7 | 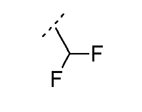 | O | H | H | H |
| 7-8 | 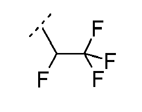 | O | H | H | H |
| 7-9 | 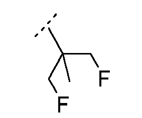 | O | H | H | H |
| 7-10 | 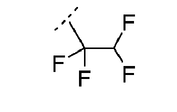 | O | H | H | H |
| 7-11 | 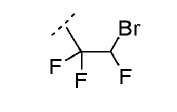 | O | H | H | H |
| 7-12 | 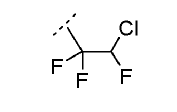 | O | H | H | H |
| 7-13 | 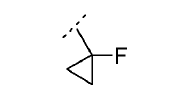 | O | H | H | H |
| 7-14 | 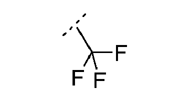 | O | H | H | H |
| 7-15 | 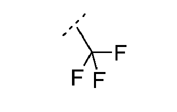 | O | H | 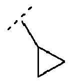 | H |
| 7-16 | 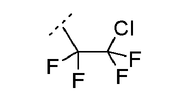 | O | H | H | H |
| 7-17 | 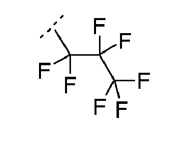 | O | H | H | H |
| 7-18 | 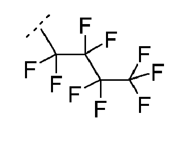 | O | H | H | H |
| 7-19 | 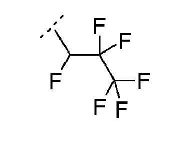 | O | H | H | H |
| 7-20 | 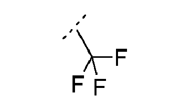 | O | H | 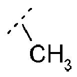 | H |
| 7-21 | 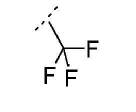 | O | H | 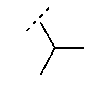 | H |
| 7-22 | 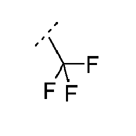 | O | H | 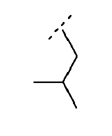 | H |
| 7-23 | 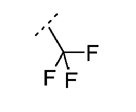 | O | H | 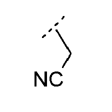 | H |
| 7-24 | 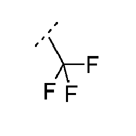 | O | H | 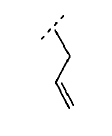 | H |
| 7-25 | 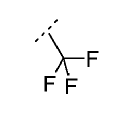 | O | H | 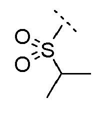 | H |
| 7-26 | 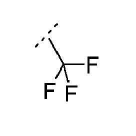 | O | H | 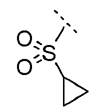 | H |
| 7-27 | 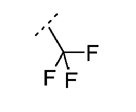 | O | 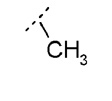 | H | H |
| 7-28 | 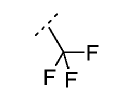 | O | 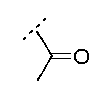 | H | H |
| 7-29 | 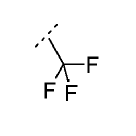 | O | 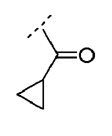 | H | H |
| 7-30 | 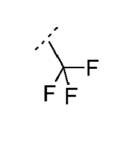 | O | 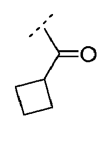 | H | H |
| 7-31 | 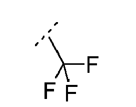 | O | 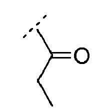 | H | H |
| 7-32 | 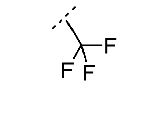 | O | 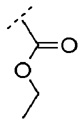 | H | H |
| 7-33 | 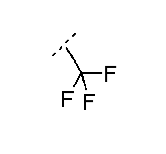 | O | H | 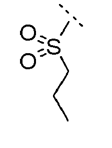 | H |
| 7-34 | 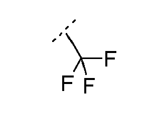 | O | H | 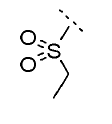 | H |
| 7-35 | 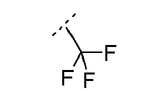 | O | H | 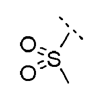 | H |
| 7-36 | 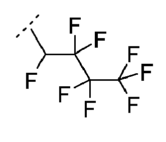 | O | H | H | H |
| 7-37 | 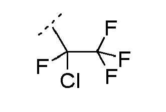 | O | H | H | H |
| 7-38 | 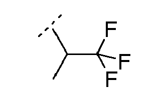 | O | H | H | H |
| 7-39 | 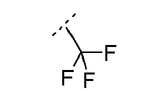 | S | H | H | H |
| 7-40 | 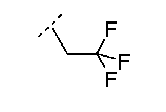 | O | H | H | H |
| 7-41 | 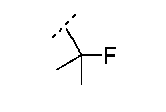 | O | H | H | H |
| 7-42 | 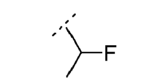 | O | H | H | H |
| 7-43 | 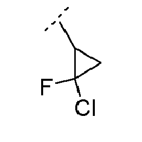 | O | H | H | H |
| 7-44 | 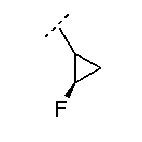 | O | H | H | H |
| 7-45 | 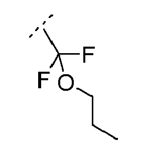 | O | H | H | H |
| 7-46 | 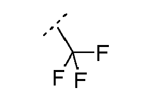 | O | H | 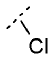 | H |
| 7-47 | 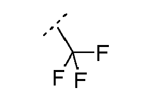 | O | H | 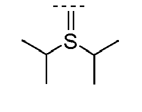 | |
| 7-48 | 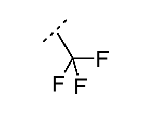 | O | H | 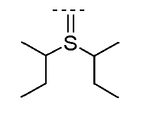 | |
| 7-49 | 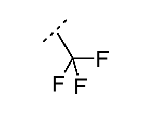 | O | H | 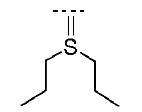 | |
| 7-50 | 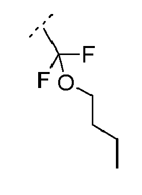 | O | H | H | H |
| 7-51 | 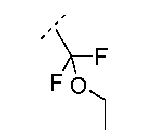 | O | H | H | H |
| 7-52 | 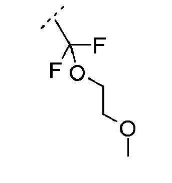 | O | H | H | H |
| 7-53 | 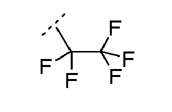 | O | 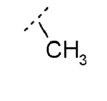 | H | H |
| 7-54 | 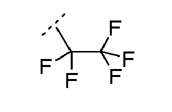 | O | 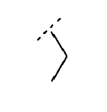 | H | H |
| 7-55 | 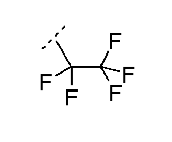 | O | 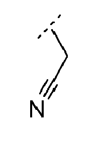 | H | H |
| 7-56 | 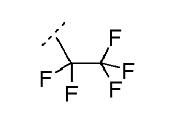 | O | 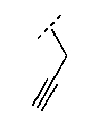 | H | H |
| 7-57 | 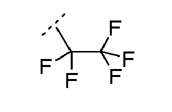 | O | 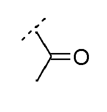 | H | H |
| 7-58 | 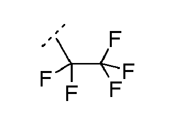 | O | 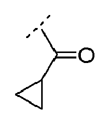 | H | H |
| 7-59 | 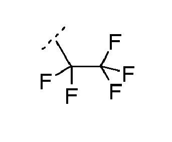 | O | 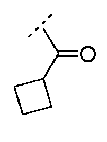 | H | H |
| 7-60 | 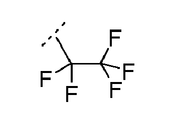 | O | 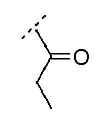 | H | H |
| 7-61 | 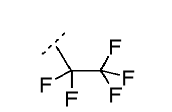 | O | 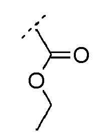 | H | H |
| 7-62 | 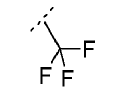 | O | 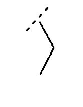 | H | H |
| 7-63 | 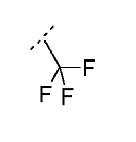 | O | 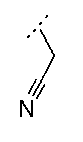 | H | H |
| 7-64 | 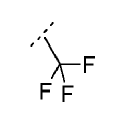 | O | 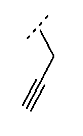 | H | H |
| 7-65 | 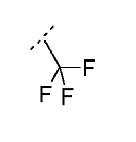 | O | 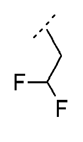 | H | H |
| 7-66 | 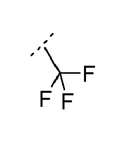 | O | 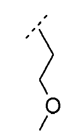 | H | H |
| 7-67 | 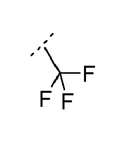 | O | H | 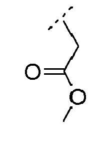 | H |
| 7-68 | 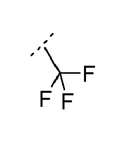 | O | H | 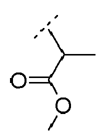 | H |
| 7-69 | 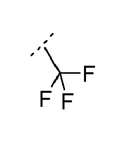 | O | 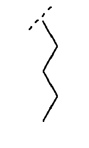 | H | H |
| 7-70 | 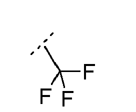 | O | 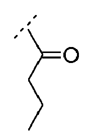 | H | H |
| 7-71 | 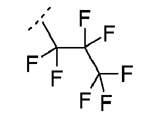 | O | 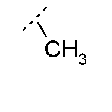 | H | H |
| 7-72 | 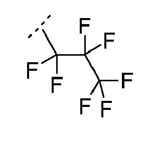 | O | 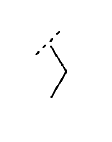 | H | H |
| 7-73 | 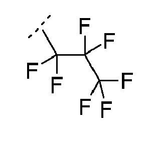 | O | 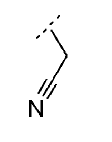 | H | H |
| 7-74 | 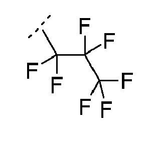 | O | 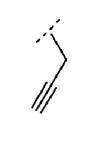 | H | H |
| 7-75 | 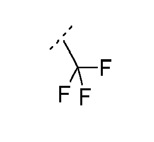 | O | 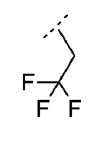 | H | H |
| 7-76 | 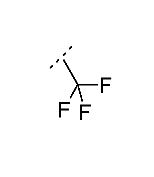 | O | 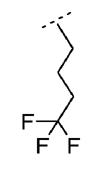 | H | H |
| 7-77 | 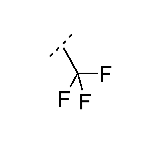 | O | 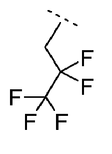 | H | H |
| 7-78 | 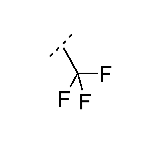 | O | 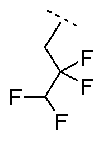 | H | H |
| 7-79 | 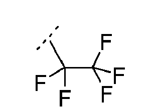 | O | 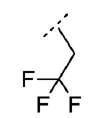 | H | H |
| 7-80 | 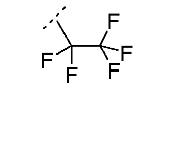 | O | 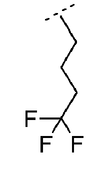 | H | H |
| 7-81 | 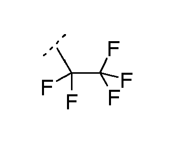 | O | 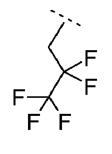 | H | H |
| 7-82 | 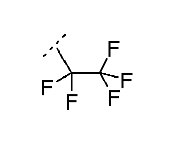 | O | 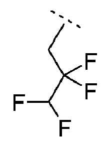 | H | H |
| 7-83 | 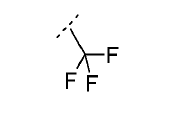 | O | H | 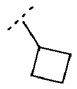 | H |
| 7-84 | 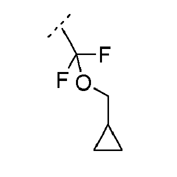 | O | H | H | H |
| 7-85 | 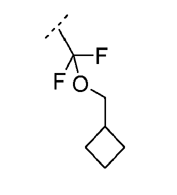 | O | H | H | H |
| 7-86 | 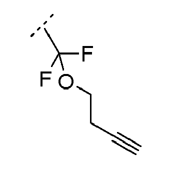 | O | H | H | H |
| 7-87 | 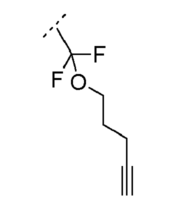 | O | H | H | H |
| 7-88 | 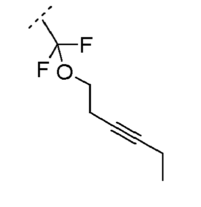 | O | H | H | H |
| 7-89 | 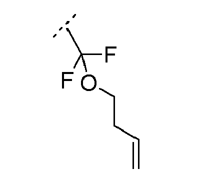 | O | H | H | H |
| 7-90 | 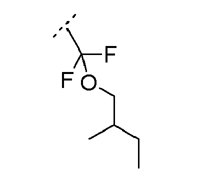 | O | H | H | H |
| 7-91 | 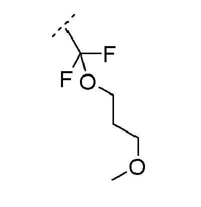 | O | H | H | H |
| 7-92 | 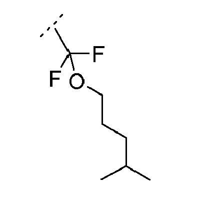 | O | H | H | H |
| 7-93 | 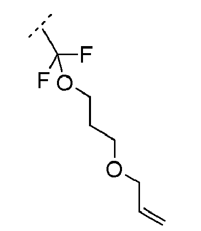 | O | H | H | H |
| 7-94 | 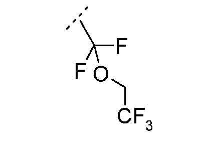 | O | H | H | H |
| 7-95 | 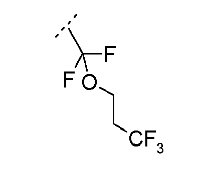 | O | H | H | H |
| 7-96 | 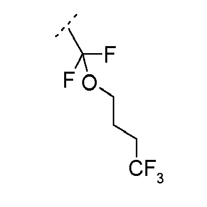 | O | H | H | H |
| 7-97 | 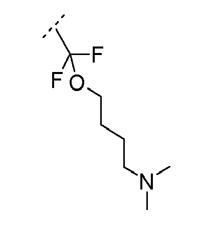 | O | H | H | H |
| 7-98 | 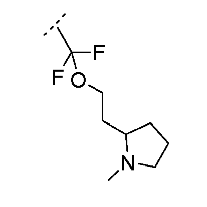 | O | H | H | H |
| 7-99 | 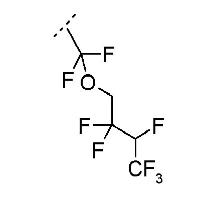 | O | H | H | H |
| 7-100 | 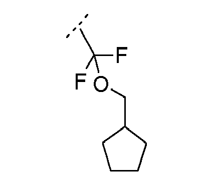 | O | H | H | H |
| 7-101 | 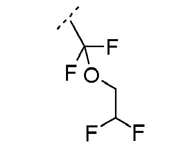 | O | H | H | H |
| 7-102 | 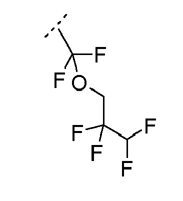 | O | H | H | H |
| 7-103 | 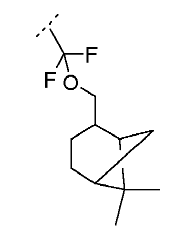 | O | H | H | H |

The present invention accordingly provides for the use of one or more compounds selected from the group consisting of fluoroalkyl-substituted 2-amidobenzimidazoles of the formula (I) or agriculturally acceptable salts thereof, with active agrochemical ingredients in accordance with the definition below to be applied on plants, on seeds from which they grow or on the locus in which they grow in their normal habitat and in absence of any kind of extraordinary environmental conditions (with "absence of any kind of extraordinary environmental conditions" is to be understood in the context of the present invention to mean that plants or seeds are not exposed to extraordinary environmental conditions such as extreme drought, cold and hot conditions, osmotic stress, waterlogging, elevated soil salinity, elevated exposure to minerals, ozone conditions, strong light conditions, limited availability of nitrogen nutrients or limited availability of phosphorus nutrients, particularly extraordinary environmental conditions beyond normal environmental fluctuations that may occur under normal plant growing conditions) for inducing growth regulating responses which result in superior growth of treated plants, certain parts of the plants or, more generally, crop yield.

The present invention further provides a spray solution for treatment of plants, comprising an amount of at least one compound selected from the group consisting of fluoroalkyl-substituted 2-amidobenzimidazoles of the formula (I), effective for growth regulating responses which result in superior growth of treated plants in the absence of any kind of extraordinary environmental conditions such as extreme drought, cold and hot conditions, osmotic stress, waterlogging, elevated soil salinity, elevated exposure to minerals, ozone conditions, strong light conditions, limited availability of nitrogen nutrients or limited availability of phosphorus nutrients, particularly extraordinary environmental conditions beyond normal environmental fluctuations that may occur under normal plant growing conditions).

In one embodiment, for example, the compounds used in accordance with the invention, the fluoroalkyl-substituted 2-amidobenzimidazoles, may be applied by spray application to appropriate plants or parts of plants to be treated. The inventive compounds (I) are used as envisaged in accordance with the invention preferably with a dosage between 0.00005 and 3 kg/ha, more preferably between 0.0001 and 2 kg/ha, especially preferably between 0.0005 and 1 kg/ha. If, in the context of the present invention, abscisic acid is used simultaneously with fluoroalkyl-substituted 2-amidobenzimidazoles, for example in the context of a combined preparation or formulation, abscisic acid is preferably added in a dosage between 0.0001 and 3 kg/ha, more preferably between 0.001 and 2 kg/ha, especially preferably between 0.006 and 0.25 kg/ha.

The terms "growth regulating response", "plant growth regulation" or "growth promotion" are understood in the context of the present invention to mean various kinds of advantages for plants. Such advantageous properties are manifested, for example, in the following improved plant characteristics: improved root growth with regard to surface area and depth, increased stolon and tiller formation, stronger and more productive stolons and tillers, improvement in shoot growth, increased lodging resistance, increased shoot base diameter, increased leaf area, higher yields of nutrients and constituents, for example carbohydrates, fats, oils, proteins, vitamins, minerals, essential oils, dyes, fibers, better fiber quality, earlier or later flowering, increased number of flowers, reduced content of toxic products such as mycotoxins, reduced content of residues or disadvantageous constituents of any kind, or better digestibility, improved storage stability of the harvested material, improved water absorption and photosynthesis performance, advantageous plant properties, for example acceleration of ripening, more homogeneous ripening, greater attractiveness to beneficial animals, improved pollination, or other advantages well known to a person skilled in the art.

More particularly, the inventive use exhibits the advantages described in spray application to plants and plant parts. Combinations of the corresponding fluoroalkyl-substituted 2-amidobenzimidazoles of the formula (I) with substances including insecticides, attractants, acaricides, fungicides, nematicides, herbicides, growth regulators, safeners, substances which influence plant maturity, and bactericides can likewise be employed in the context of the present invention. In addition, the combined use of corresponding fluoroalkyl-substituted 2-amidobenzimidazoles of the formula (I) with genetically modified cultivars with a view to improved plant growth is likewise possible.

In the context of the present invention, a good effect on plant growth is understood to mean, without limitation,
- at least an emergence improved by generally 3%, especially more than 5%, preferably more than 10%,
- at least a yield enhanced by generally 3%, especially more than 5%, preferably more than 10%,
- at least a root development improved by generally 3%, especially more than 5%, preferably more than 10%,
- at least a shoot size rising by generally 3%, especially more than 5%, preferably more than 10%,
- at least a leaf area increased by generally 3%, especially more than 5%, preferably more than 10%,
- at least a photosynthesis performance improved by generally 3%, especially more than 5%, preferably more than 10%, and/or
- at least a flower development improved by generally 3%, especially more than 5%, preferably more than 10%,

it being possible for the effects to manifest themselves individually or else in any combination of two or more effects.

The present invention further provides a spray solution for treatment of plants growing in the absence extraordinary environmental conditions (with "absence of any kind of extraordinary environmental conditions" is to be understood in the context of the present invention to mean that plants or seeds are not exposed to extraordinary environmental conditions such as extreme drought, cold and hot conditions, osmotic stress, waterlogging, elevated soil salinity, elevated exposure to minerals, ozone conditions, strong light conditions, limited availability of nitrogen nutrients or limited availability of phosphorus nutrients, particularly extraordinary environmental conditions beyond normal environmental fluctuations that may occur under normal plant growing conditions)comprising an amount, effective for enhancement of plant growth, of one or more compounds of the formula (I). The spray solution may comprise other customary constituents, such as solvents, formulation aids, especially water. Further constituents may include active agrochemical ingredients described below.

The present invention further provides for the use of corresponding spray solutions for increasing growth of plants growing in the absence of extraordinary environmental conditions (with "absence of any kind of extraordinary environmental conditions" is to be understood in the context of the present invention to mean that plants or seeds are not exposed to extraordinary environmental conditions such as extreme drought, cold and hot conditions, osmotic stress, waterlogging, elevated soil salinity, elevated exposure to minerals, ozone conditions, strong light conditions, limited availability of nitrogen nutrients or limited availability of phosphorus nutrients, particularly extraordinary environmental conditions beyond normal environmental fluctuations that may occur under normal plant growing conditions). The remarks which follow apply both to the inventive use of the compounds of the formula (I) per se and to the corresponding spray solutions.

In accordance with the invention, it has additionally been found that the application, to plants or in their environment, of the compounds of the formula (I) in combination with at least one fertilizer as defined below is possible.

Fertilizers which can be used in accordance with the invention together with the compounds of the formula (I) elucidated in detail above are generally organic and inorganic nitrogen-containing compounds, for example ureas, urea/formaldehyde condensation products, amino acids, ammonium salts and ammonium nitrates, potassium salts (preferably chlorides, sulfates, nitrates), salts of phosphoric acid and/or salts of phosphorous acid (preferably potassium salts and ammonium salts). In this context, particular mention should be made of the NPK fertilizers, i.e. fertilizers which contain nitrogen, phosphorus and potassium, calcium ammonium nitrate, i.e. fertilizers which additionally contain calcium, or ammonium nitrate sulfate (formula (NH₄)₂SO₄ NH₄NO₃), ammonium phosphate and ammonium sulfate. These fertilizers are generally known to the person skilled in the art; see also, for example, Ullmann's Encyclopedia of Industrial Chemistry, 5th edition, vol. A 10, pages 323 to 431, Verlagsgesellschaft, Weinheim, 1987.

The fertilizers may also contain salts of micronutrients (preferably calcium, sulfur, boron, manganese, magnesium, iron, boron, copper, zinc, molybdenum and cobalt) and phytohormones (for example vitamin B1 and indole-3-acetic acid) or mixtures thereof. Fertilizers used in accordance with the invention may also contain further salts, such as monoammonium phosphate (MAP), diammonium phosphate (DAP), potassium sulfate, potassium chloride, magnesium sulfate. Suitable amounts of the secondary nutrients, or trace elements, are amounts of 0.5 to 5% by weight, based on the overall fertilizer. Further possible ingredients are crop protection compositions, insecticides or fungicides, growth regulators or mixtures thereof. This will be explained in more detail below.

The fertilizers can be used, for example, in the form of powders, granules, prills or compactates. However, the fertilizers can also be used in liquid form, dissolved in an aqueous medium. In this case, it is also possible to use dilute aqueous ammonia as the nitrogen fertilizer. Further possible constituents of fertilizers are described, for example, in Ullmann's Encyclopedia of Industrial Chemistry, 5th edition, 1987, Vol. A 10, pages 363 to 401, DE-A 41 28 828, DE-A 19 05 834 and DE-A 196 31 764. The general composition of the fertilizers which, in the context of the present invention, may take the form of straight and/or compound fertilizers, for example composed of nitrogen, potassium or phosphorus, may vary within a wide range. In general, a content of 1 to 30% by weight of nitrogen (preferably 5 to 20% by weight), 1 to 20% by weight of potassium (preferably 3 to 15% by weight) and a content of 1 to 20% by weight of phosphorus (preferably 3 to 10% by weight) is advantageous. The microelement content is typically in the ppm range, preferably in the range from 1 to 1000 ppm.
In the context of the present invention, the fertilizer and the compounds of the formula (I) may be administered simultaneously, i.e. synchronously. However, it is also possible first to apply the fertilizer and then a compound of the formula (I), or first to apply a compound of the formula (I) and then the fertilizer. In the case of nonsynchronous application of a compound of the formula (I) and the fertilizer, the application in the context of the present invention is, however, effected in a functional relationship, especially within a period of generally 24 hours, preferably 18 hours, more preferably 12 hours, specifically 6 hours, more specifically 4 hours, even more specifically within 2 hours. In very particular embodiments of the present invention, the inventive compound of the formula (I) and the fertilizer are applied within a time frame of less than 1 hour, preferably less than 30 minutes, more preferably less than 15 minutes.

The active ingredients for use in accordance with the invention, if appropriate in combination with fertilizers, can preferably be employed in the following plants, the enumeration which follows being nonlimiting.

Preferred plants are those from the group of the useful plants, ornamentals, turfs, commonly used trees employed as ornamentals in the public and domestic sectors, and forestry trees. Forestry trees include trees for the production of timber, cellulose, paper and products made from parts of the trees. The term "useful plants" as used here refers to crop plants which are employed as plants for obtaining foods, animal feeds, fuels or for industrial purposes.

The useful plants include, for example, the following types of plants: triticale, durum (hard wheat), turf, vines, cereals, for example wheat, barley, rye, oats, hops, rice, corn and millet/sorghum; beet, for example sugar beet and fodder beet; fruits, for example pome fruit, stone fruit and soft fruit, for example apples, pears, plums, peaches, almonds, cherries and berries, for example strawberries, raspberries, blackberries; legumes, for example beans, lentils, peas and soybeans; oil crops, for example oilseed rape, mustard, poppies, olives, sunflowers, coconuts, castor oil plants, cacao beans and peanuts; cucurbits, for example pumpkin/squash, cucumbers and melons; fiber plants, for example cotton, flax, hemp and jute; citrus fruit, for example oranges, lemons, grapefruit and tangerines; vegetables, for example spinach, lettuce, asparagus, cabbage species, carrots, onions, tomatoes, potatoes and bell peppers; Lauraceae, for example avocado, Cinnamonum, camphor, or also plants such as tobacco, nuts, coffee, eggplant, sugarcane, tea, pepper, grapevines, hops, bananas, latex plants and ornamentals, for example flowers, shrubs, deciduous trees and coniferous trees. This enumeration does not constitute a limitation.

The following plants are considered to be particularly suitable target crops for the application of the inventive method: oats, rye, triticale, durum, cotton, eggplant, turf, pome fruit, stone fruit, soft fruit, corn, wheat, barley, cucumber, tobacco, vines, rice, cereals, pear, pepper, beans, soybeans, oilseed rape, tomato, bell pepper, melons, cabbage, potatoes and apples.

Examples of trees which can be improved in accordance with the inventive method include: Abies sp., Eucalyptus sp., Picea sp., Pinus sp., Aesculus sp., Platanus sp., Tilia sp., Acer sp., Tsuga sp., Fraxinus sp., Sorbus sp., Betula sp., Crataegus sp., Ulmus sp., Quercus sp., Fagus sp., Salix sp., Populus sp..

Preferred trees which can be improved in accordance with the inventive method include: from the tree species Aesculus: A. hippocastanum, A. pariflora, A. carnea; from the tree species Platanus: P. aceriflora, P. occidental is, P. racemosa; from the tree species Picea: P. abies; from the tree species Pinus: P. radiate, P. ponderosa, P. contorta, P. sylvestre, P. elliottii, P. montecola, P. albicaulis, P. resinosa, P. palustris, P. taeda, P. flexilis, P. jeffregi, P. baksiana, P. strobes; from the tree species Eucalyptus: E. grandis, E. globulus, E. camadentis, E. nitens, E. obliqua, E. regnans, E. pilularus.

Particularly preferred trees which can be improved in accordance with the inventive method include: from the tree species Pinus: P. radiate, P. ponderosa, P. contorta, P. sylvestre, P. strobes; from the tree species Eucalyptus: E. grandis, E. globulus and E. camadentis.

Particularly preferred trees which can be improved in accordance with the inventive method include: horse chestnut, Platanaceae, linden tree, maple tree.

The present invention can also be applied to any turf grasses, including cool-season turf grasses and warm-season turf grasses. Examples of cool-season turf grasses are bluegrasses (Poa spp.), such as Kentucky bluegrass (Poa pratensis L.), rough bluegrass (Poa trivialis L.), Canada bluegrass (Poa compressa L.), annual bluegrass (Poa annua L.), upland bluegrass (Poa glaucantha Gaudin), wood bluegrass (Poa nemoralis L.) and bulbous bluegrass (Poa bulbosa L.); bentgrasses (Agrostis spp.) such as creeping bentgrass (Agrostis palustris Huds.), colonial bentgrass (Agrostis tenuis Sibth.), velvet bentgrass (Agrostis canina L.), South German Mixed Bentgrass (Agrostis spp. including Agrostis tenius Sibth., Agrostis canina L., and Agrostis palustris Huds.), and redtop (Agrostis alba L.);

fescues (Festuca spp.), such as red fescue (Festuca rubra L. spp. rubra), creeping fescue (Festuca rubra L.), chewings fescue (Festuca rubra commutata Gaud.), sheep fescue (Festuca ovina L.), hard fescue (Festuca longifolia Thuill.), hair fescue (Festuca capillata Lam.), tall fescue (Festuca arundinacea Schreb.) and meadow fescue (Festuca elanor L.);

ryegrasses (Lolium spp.), such as annual ryegrass (Lolium multiflorum Lam.), perennial ryegrass (Lolium perenne L.) and italian ryegrass (Lolium multiflorum Lam.);

and wheatgrasses (Agropyron spp.), such as fairway wheatgrass (Agropyron cristatum (L.) Gaertn.), crested wheatgrass (Agropyron desertorum (Fisch.) Schult.) and western wheatgrass (Agropyron smithii Rydb.).

Examples of further cool-season turfgrasses are beachgrass (Ammophila breviligulata Fern.), smooth bromegrass (Bromus inermis Leyss.), cattails such as Timothy (Phleum pratense L.), sand cattail (Phleum subulatum L.), orchardgrass (Dactylis glomerata L.), weeping alkaligrass (Puccinellia distans (L.) Parl.) and crested dog's-tail (Cynosurus cristatus L.).

Examples of warm-season turfgrasses are Bermudagrass (Cynodon spp. L. C. Rich), zoysiagrass (Zoysia spp. Willd.), St. Augustine grass (Stenotaphrum secundatum Walt Kuntze), centipedegrass (Eremochloa ophiuroides Munro Hack.), carpetgrass (Axonopus affinis Chase), Bahia grass (Paspalum notatum Flugge), Kikuyugrass (Pennisetum clandestinum Hochst. ex Chiov.), buffalo grass (Buchloe dactyloids (Nutt.) Engelm.), Blue gramma (Bouteloua gracilis (H.B.K.) Lag. ex Griffiths), seashore paspalum (Paspalum vaginatum Swartz) and sideoats grama (Bouteloua curtipendula (Michx. Torr.). Cool-season turfgrasses are generally preferred for the use in accordance with the invention. Especially preferred are bluegrass, bentgrass and redtop, fescues and ryegrasses. Bentgrass is especially preferred.

Particular preference is given in accordance with the invention to treating plants of the plant cultivars which are in each case commercially available or in use. Plant cultivars are understood to mean plants which have new properties ("traits") and which have been obtained by conventional breeding, by mutagenesis or with the aid of recombinant DNA techniques. Crop plants may accordingly be plants which can be obtained by conventional breeding and optimization methods or by biotechnological and genetic engineering methods or combinations of these methods, including the transgenic plants and including the plant varieties which can and cannot be protected by plant breeders' rights.

The inventive treatment method can thus also be used for the treatment of genetically modified organisms (GMOs), e.g. plants or seeds. Genetically modified plants (or transgenic plants) are plants in which a heterologous gene has been stably integrated into the genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example antisense technology, cosuppression technology or RNAi technology [RNA interference]). A heterologous gene that is located in the genome is also called a transgene. A transgene that is defined by its particular location in the plant genome is called a transformation or transgenic event.

The inventive treatment method can further be used for the treatment of genetically modified organisms (GMOs), e.g. plants or seeds in which a heterologous gene has been transiently introduced e.g. using viral vectors.

Plants and plant varieties which are preferably treated according to the invention include all plants which have genetic material which imparts particularly advantageous, useful traits to these plants (whether obtained by breeding and/or biotechnological means).

Plants and plant varieties which may also be treated according to the invention are those plants characterized by enhanced yield characteristics. Enhanced yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can also be affected by improved plant architecture (under stress and non-stress conditions), including early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content, protein content, oil content and composition, nutritional value, reduction in anti-nutritional compounds, improved processability and better storage stability.

Plants that may likewise be treated according to the invention are hybrid plants that already express the characteristics of heterosis, or hybrid vigor, which results in generally higher yield, vigor, health and resistance toward biotic and abiotic stress factors. Such plants are typically made by crossing an inbred male-sterile parent line (the female parent) with another inbred male-fertile parent line (the male parent). Hybrid seed is typically harvested from the male-sterile plants and sold to growers. Male-sterile plants can sometimes (e.g. in corn) be produced by detasseling (i.e. the mechanical removal of the male reproductive organs or male flowers) but, more typically, male sterility is the result of genetic determinants in the plant genome. In that case, and especially when seed is the desired product to be harvested from the hybrid plants, it is typically useful to ensure that male fertility in hybrid plants, which contain the genetic determinants responsible for male sterility, is fully restored. This can be accomplished by ensuring that the male parents have appropriate fertility restorer genes which are capable of restoring the male fertility in hybrid plants that contain the genetic determinants responsible for male sterility. Genetic determinants for male sterility may be located in the cytoplasm. Examples of cytoplasmic male sterility (CMS) were for instance described for Brassica species (WO 1992/005251, WO 1995/009910, WO 1998/27806, WO 2005/002324, WO 2006/021972 and US 6,229,072). However, genetic determinants for male sterility can also be located in the nuclear genome. Male-sterile plants can also be obtained by plant biotechnology methods such as genetic engineering. A particularly useful means of obtaining male-sterile plants is described in WO 89/10396 in which, for example, a ribonuclease such as a barnase is selectively expressed in the tapetum cells in the stamens. Fertility can then be restored by expression in the tapetum cells of a ribonuclease inhibitor such as barstar (e.g. WO 1991/002069).

Plants or plant varieties (obtained by plant biotechnology methods such as genetic engineering) which may also be treated according to the invention are herbicide-tolerant plants, i.e. plants made tolerant to one or more given herbicides. Such plants can be obtained either by genetic transformation, or by selection of plants containing a mutation imparting such herbicide tolerance.

Herbicide-tolerant plants are for example glyphosate-tolerant plants, i.e. plants made tolerant to the herbicide glyphosate or salts thereof. For example, glyphosate-tolerant plants can be obtained by transforming the plant with a gene encoding the enzyme 5-enolpyruvylshikimate-3-phosphate synthase (EPSPS). Examples of such EPSPS genes are the AroA gene (mutant CT7) of the bacterium Salmonella typhimurium (Comai et al., Science (1983), 221, 370-371), the CP4 gene of the bacterium Agrobacterium sp. (Barry et al., Curr. Topics Plant Physiol. (1992), 7, 139-145), the genes encoding a petunia EPSPS (Shah et al., Science (1986), 233, 478-481), a tomato EPSPS (Gasser et al., J. Biol. Chem. (1988), 263, 4280-4289) or an Eleusine EPSPS (WO 2001/66704). It can also be a mutated EPSPS, as described, for example, in EP-A 0837944, WO 2000/066746, WO 2000/066747 or WO 2002/026995. Glyphosate-tolerant plants can also be obtained by expressing a gene that encodes a glyphosate oxidoreductase enzyme as described in US 5,776,760 and US 5,463,175. Glyphosate-tolerant plants can also be obtained by expressing a gene that encodes a glyphosate acetyltransferase enzyme as described, for example, in WO 2002/036782, WO 2003/092360, WO 2005/012515 and WO 2007/024782. Glyphosate-tolerant plants can also be obtained by selecting plants containing naturally occurring mutations of the above-mentioned genes as described, for example, in WO 2001/024615 or WO 2003/013226. Plants expressing EPSPS genes that confer glyphosate tolerance are described in e.g. US Patent Application Nos 11/517,991, 10/739,610, 12/139,408, 12/352,532, 11/312,866, 11/315,678, 12/421,292, 11/400, 598, 11 /651, 752, 11 /681, 285, 11 /605, 824, 12/468,205, 11 /760, 570, 11/762,526, 11/769,327, 11/769,255, 11/943801 or 12/362,774. Plants comprising other genes that confer glyphosate tolerance, such as decarboxylase genes, are described in e.g. US patent applications 11/588,811, 11/185,342, 12/364,724, 11 /185, 560 or 12/423, 926.

Other herbicide-resistant plants are for example plants which have been made tolerant to herbicides inhibiting the enzyme glutamine synthase, such as bialaphos, phosphinothricin or glufosinate. Such plants can be obtained by expressing an enzyme detoxifying the herbicide or a mutant glutamine synthase enzyme that is resistant to inhibition e.g. described in US Patent Application No 11/760,602. One such efficient detoxifying enzyme is, for example, an enzyme encoding a phosphinothricin acetyltransferase (such as the bar or pat protein from Streptomyces species for example). Plants expressing an exogenous phosphinothricin acetyltransferase have been described, for example, in US 5,561,236; US 5,648,477; US 5,646,024; US 5,273,894; US 5,637,489; US 5,276,268; US 5,739,082; US 5,908,810 and US 7,112,665.

Further herbicide-tolerant plants are also plants that have been made tolerant to the herbicides inhibiting the enzyme hydroxyphenylpyruvatedioxygenase (HPPD). Hydroxyphenylpyruvatedioxygenases are enzymes that catalyze the reaction in which para-hydroxyphenylpyruvate (HPP) is transformed into homogentisate. Plants tolerant to HPPD inhibitors can be transformed with a gene encoding a naturally occurring resistant HPPD enzyme such as an HPPD enzyme from non-plant organisms, such as described in WO 2011 /076877, WO 2011 /076882, WO2011/076892, WO 2011/076885, W02011/076889, or HPPD enzyme from a monocot plant, such as Avena sativa or Zea mays, or having at least 98 % sequence identity to an enzyme of Avena sativa or Zea mays, or an HPPD enzyme as described in WO/2011/076885, WO2011/076892, WO/2011/076877, WO/2011/076882, WO/2011/076889, or a gene encoding a mutated or chimeric HPPD enzyme according to WO 1996/038567, WO 1999/024585 and WO 1999/024586 WO 2009/144079, WO 2002/046387, WO/2011/068567, WO/2010/085705, or US 6,768,044. Tolerance to HPPD inhibitors can also be obtained by transforming plants with genes encoding certain enzymes enabling the formation of homogentisate despite the inhibition of the native HPPD enzyme by the HPPD inhibitor. Such plants and genes are described in WO 1999/034008 and WO 2002/36787. Tolerance of plants to HPPD inhibitors can also be improved by transforming plants with a gene encoding a prephenate dehydrogenase enzyme in addition to a gene encoding an HPPD-tolerant enzyme, as described in WO 2004/024928.

Further herbicide-resistant plants are plants that have been made tolerant to acetolactate synthase (ALS) inhibitors. Known ALS inhibitors include, for example, sulfonylurea, imidazolinone, triazolopyrimidines, pyrimidinyl oxy(thio)benzoates, and/or sulfonylaminocarbonyltriazolinone herbicides. Different mutations in the ALS enzyme (also known as acetohydroxy acid synthase, AHAS) are known to confer tolerance to different herbicides and groups of herbicides, as described, for example, in Tranel and Wright, Weed Science (2002), 50, 700-712, and also in US 5,605,011, US 5,378,824, US 5,141,870 and US 5,013,659. The production of sulfonylurea-tolerant plants and imidazolinone-tolerant plants has been described in US 5,605,011; US 5,013,659; US 5,141,870; US 5,767,361; US 5,731,180; US 5,304,732; US 4,761,373; US 5,331,107; US 5,928,937; and US 5,378,824; and also in the international publication WO 1996/033270. Further imidazolinone-tolerant plants have also been described, for example in WO 2004/040012, WO 2004/106529, WO 2005/020673, WO 2005/093093, WO 2006/007373, WO 2006/015376, WO 2006/024351 and WO 2006/060634. Further sulfonylurea- and imidazolinone-tolerant plants have also been described, for example in WO 2007/024782, and US Patent Application No 61/288958.

Other plants tolerant to imidazolinone and/or sulfonylurea can be obtained by induced mutagenesis, by selection in cell cultures in the presence of the herbicide or by mutation breeding, as described, for example, for soybeans in US 5,084,082, for rice in WO 1997/41218, for sugar beet in US 5,773,702 and WO 1999/057965, for lettuce in US 5,198,599 or for sunflower in WO 2001/065922.

Plants or plant varieties (obtained by plant biotechnology methods such as genetic engineering) which may also be treated according to the invention are insect-resistant transgenic plants, i.e. plants made resistant to attack by certain target insects. Such plants can be obtained by genetic transformation, or by selection of plants containing a mutation imparting such insect resistance.

In the present context, the term "insect-resistant transgenic plant" includes any plant containing at least one transgene comprising a coding sequence encoding:
1) an insecticidal crystal protein from Bacillus thuringiensis or an insecticidal portion thereof, such as the insecticidal crystal proteins compiled by Crickmore et al., Microbiology and Molecular Biology Reviews (1998), 62, 807-813, updated by Crickmore et al. (2005) in the Bacillus thuringiensis toxin nomenclature (online at: http://www.lifesci.sussex.ac.uk/Home/Neil_Crickmore/Bt/), or insecticidal portions thereof, for example proteins of the Cry protein classes Cry1Ab, Cry1Ac, Cry1 F, Cry2Ab, Cry3Ae or Cry3Bb or insecticidal portions thereof (e.g. EP 1999141 and W02007/107302) or such proteins encoded by synthetic genes as described e.g; in US Patent Application No 12/249,016 or
2) a crystal protein from Bacillus thuringiensis or a portion thereof which is insecticidal in the presence of a second crystal protein other than Bacillus thuringiensis or a portion thereof, such as the binary toxin made up of the Cy34 and Cy35 crystal proteins (Moellenbeck et al., Nat. Biotechnol. (2001), 19, 668-72; Schnepf et al., Applied Environm. Microb. (2006), 71, 1765-1774); or
3) a hybrid insecticidal protein comprising parts of two different insecticidal crystal proteins from Bacillus thuringiensis, such as a hybrid of the proteins of 1) above or a hybrid of the proteins of 2) above, for example the Cry1A.105 protein produced by corn event MON98034 (WO 2007/027777); or
4) a protein of any one of points 1) to 3) above wherein some, particularly 1 to 10, amino acids have been replaced by another amino acid to obtain a higher insecticidal activity to a target insect species, and/or to expand the range of target insect species affected, and/or because of changes induced in the encoding DNA during cloning or transformation, such as the Cry3Bb1 protein in corn events MON863 or MON88017, or the Cry3A protein in corn event MIR604; or
5) an insecticidal secreted protein from Bacillus thuringiensis or Bacillus cereus, or an insecticidal portion thereof, such as the vegetative insecticidal proteins (VIPs) listed under the following link, for example proteins from the VIP3Aa protein class: http://www.lifesci.sussex.ac.uk/Home/Neil_Crickmore/Bt/vip.html or
6) a secreted protein from Bacillus thuringiensis or Bacillus cereus which is insecticidal in the presence of a second secreted protein from Bacillus thuringiensis or B. cereus, such as the binary toxin made up of the VIP1A and VIP2A proteins (WO 1994/21795); or
7) a hybrid insecticidal protein comprising parts from different secreted proteins from Bacillus thuringiensis or Bacillus cereus, such as a hybrid of the proteins in 1) above or a hybrid of the proteins in 2) above; or
8) a protein of any one of points 1) to 3) above wherein some, particularly 1 to 10, amino acids have been replaced by another amino acid to obtain a higher insecticidal activity to a target insect species, and/or to expand the range of target insect species affected, and/or because of changes induced in the encoding DNA during cloning or transformation (while still encoding an insecticidal protein), such as the VIP3Aa protein in cotton event COT 102.

Of course, insect-resistant transgenic plants, as used herein, also include any plant comprising a combination of genes encoding the proteins of any one of the above classes 1 to 8. In one embodiment, an insect-resistant plant contains more than one transgene encoding a protein of any one of the above classes 1 to 8, to expand the range of target insect species affected or to delay insect resistance development to the plants, by using different proteins insecticidal to the same target insect species but having a different mode of action, such as binding to different receptor binding sites in the insect.

An "insect-resistant transgenic plant", as used herein, further includes any plant containing at least one transgene comprising a sequence producing upon expression a double-stranded RNA which upon ingestion by a plant insect pest inhibits the growth of this insect pest, as described e.g. in WO 2007/080126, WO 2006/129204, WO 2007/074405, WO 2007/080127 and WO 2007/035650.

Examples of nematode resistant plants are described in e.g. US Patent Application Nos 11/765,491, 11/765,494, 10/926,819, 10/782,020, 12/032,479, 10/783,417, 10/782, 096, 11/657, 964, 12/192, 904, 11 /396, 808, 12/166,253, 12/166,239, 12/166,124, 12/166,209, 11/762,886, 12/364,335, 11/763,947, 12/252,453, 12/209,354, 12/491,396 or 12/497,221.

Plants or plant varieties (obtained by plant biotechnology methods such as genetic engineering) which may also be treated according to the invention are tolerant to abiotic stress factors. Such plants can be obtained by genetic transformation, or by selection of plants containing a mutation imparting such stress resistance. Particularly useful stress-tolerant plants include the following:
a. plants which contain a transgene capable of reducing the expression and/or the activity of the poly(ADP-ribose)polymerase (PARP) gene in the plant cells or plants, as described in WO 2000/004173 or EP 04077984.5 or EP 06009836.5;
b. plants which contain a stress tolerance-enhancing transgene capable of reducing the expression and/or the activity of the PARG encoding genes of the plants or plant cells, as described, for example, in WO 2004/090140;
c. plants which contain a stress tolerance-enhancing transgene coding for a plant-functional enzyme of the nicotinamide adenine dinucleotide salvage biosynthesis pathway, including nicotinamidase, nicotinate phosphoribosyltransferase, nicotinic acid mononucleotide adenyltransferase, nicotinamide adenine dinucleotide synthetase or nicotinamide phosphoribosyltransferase, as described, for example, in EP 04077624.7 or WO 2006/133827 or PCT/EP07/002433.

Plants or plant varieties (obtained by plant biotechnology methods such as genetic engineering) which may also be treated according to the invention show altered quantity, quality and/or storage stability of the harvested product and/or altered properties of specific ingredients of the harvested product such as, for example:
1) Transgenic plants which synthesize a modified starch which is altered with respect to its chemophysical traits, in particular the amylose content or the amylose/amylopectin ratio, the degree of branching, the average chain length, the distribution of the side chains, the viscosity behavior, the gel resistance, the grain size and/or grain morphology of the starch in comparison to the synthesized starch in wild-type plant cells or plants, such that this modified starch is better suited for certain applications. These transgenic plants synthesizing a modified starch are described, for example, in EP 0571427, WO 1995/004826, EP 0719338, WO 1996/15248, WO 1996/19581, WO 1996/27674, WO 1997/11188, WO 1997/26362, WO 1997/32985, WO 1997/42328, WO 1997/44472, WO 1997/45545, WO 1998/27212, WO 1998/40503, WO 99/58688, WO 1999/58690, WO 1999/58654, WO 2000/008184, WO 2000/008185, WO 2000/28052, WO 2000/77229, WO 2001/12782, WO 2001/12826, WO 2002/101059, WO 2003/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 2000/22140, WO 2006/063862, WO 2006/072603, WO 2002/034923, EP 06090134.5, EP 06090228.5, EP 06090227.7, EP 07090007.1, EP 07090009.7, WO 2001/14569, WO 2002/79410, WO 2003/33540, WO 2004/078983, WO 2001/19975, WO 1995/26407, WO 1996/34968, WO 1998/20145, WO 1999/12950, WO 1999/66050, WO 1999/53072, US 6,734,341, WO 2000/11192, WO 1998/22604, WO 1998/32326, WO 2001/98509, WO 2001/98509, WO 2005/002359, US 5,824,790, US 6,013,861, WO 1994/004693, WO 1994/009144, WO 1994/11520, WO 1995/35026 and WO 1997/20936.
2) Transgenic plants which synthesize non-starch carbohydrate polymers or which synthesize non-starch carbohydrate polymers with altered properties in comparison to wild-type plants without genetic modification. Examples are plants which produce polyfructose, especially of the inulin and levan type, as described in EP 0663956, WO 1996/001904, WO 1996/021023, WO 1998/039460 and WO 1999/024593, plants which produce alpha-1,4-glucans, as described in WO 1995/031553, US 2002/031826, US 6,284,479, US 5,712,107, WO 1997/047806, WO 1997/047807, WO 1997/047808 and WO 2000/14249, plants which produce alpha-1,6-branched alpha-1,4-glucans, as described in WO 2000/73422, and plants which produce alternan, as described in WO 2000/047727, EP 06077301.7, US 5,908,975 and EP 0728213.
3) Transgenic plants which produce hyaluronan, as described, for example, in WO 2006/032538, WO 2007/039314, WO 2007/039315, WO 2007/039316, JP 2006/304779 and WO 2005/012529.
4) 4) transgenic plants or hybrid plants, such as onions with characteristics such as 'high soluble solids content', 'low pungency' (LP) and/or `long storage' (LS), as described in US Patent Appl. No. 12/020,360 and 61/054,026

Plants or plant varieties (obtained by plant biotechnology methods such as genetic engineering) which may also be treated according to the invention are plants, such as cotton plants, with altered fiber characteristics. Such plants can be obtained by genetic transformation, or by selection of plants containing a mutation imparting such altered fiber characteristics and include:
a) plants, such as cotton plants, which contain an altered form of cellulose synthase genes, as described in WO 1998/000549;
b) plants, such as cotton plants, which contain an altered form of rsw2 or rsw3 homologous nucleic acids, as described in WO 2004/053219;
c) plants, such as cotton plants, with an increased expression of sucrose phosphate synthase, as described in WO 2001/017333;
d) plants, such as cotton plants, with an increased expression of sucrose synthase, as described in WO 02/45485;
e) plants, such as cotton plants, wherein the timing of the plasmodesmatal gating at the basis of the fiber cell is altered, for example through downregulation of fiber-selective β-1,3-glucanase, as described in WO 2005/017157;
f) plants, such as cotton plants, which have fibers with altered reactivity, for example through the expression of the N-acetylglucosaminetransferase gene including nodC and chitin synthase genes, as described in WO 2006/136351.

Plants or plant cultivars (obtained by plant biotechnology methods such as genetic engineering) which may also be treated according to the invention are plants, such as oilseed rape or related Brassica plants, with altered oil profile characteristics. Such plants can be obtained by genetic transformation or by selection of plants containing a mutation imparting such altered oil characteristics and include:
a) plants, such as oilseed rape plants, which produce oil having a high oleic acid content, as described, for example, in US 5,969,169, US 5,840,946 or US 6,323,392 or US 6, 063, 947;
b) plants, such as oilseed rape plants, which produce oil having a low linolenic acid content, as described in US 6,270,828, US 6,169,190 or US 5,965,755;
c) plants, such as oilseed rape plants, which produce oil having a low level of saturated fatty acids, as described, for example, in US 5,434,283 or US Patent Application No 12/668303

Plants or plant cultivars (that can be obtained by plant biotechnology methods such as genetic engineering) which may also be treated according to the invention are plants, such as oilseed rape or related Brassica plants, with altered seed shattering characteristics. Such plants can be obtained by genetic transformation, or by selection of plants contain a mutation imparting such altered seed shattering characteristics and include plants such as oilseed rape plants with delayed or reduced seed shattering as described in US Patent Appl. No. 61/135,230, WO09/068313 and WO10/006732.

Particularly useful transgenic plants which may be treated according to the invention are plants which comprise one or more genes which encode one or more toxins and are the transgenic plants available under the following trade names: YIELD GARD® (for example corn, cotton, soybeans), KnockOut® (for example corn), BiteGard® (for example corn), BT-Xtra® (for example corn), Bollgard® (cotton), Nucotn® (cotton), Nucotn 33B® (cotton), NatureGard® (for example corn), Protecta®, Agrisure® (corn), Herculex® (corn), MaizeGard ® (corn), MaxGard™(corn), TwinLink® (cotton), VIPCot® (cotton), Widestrike™ (cotton) and NewLeaf® (potato). Examples of herbicide-tolerant plants which may be mentioned are corn varieties, cotton varieties and soybean varieties which are available under the following trade names: Roundup Ready® (tolerance to glyphosate, for example corn, cotton, soybeans), Glytol ® (tolerance to glyphosate, cotton) Liberty Link® (tolerance to phosphinothricin, for example oilseed rape, cotton, soybean), IMI® (tolerance to imidazolinone), Optimum™ Gat™ (tolerance to sulfonylurea and glyphosate) and SCS® (tolerance to sulfonylurea, for example corn). Herbicide-resistant plants (plants bred in a conventional manner for herbicide tolerance) which may be mentioned include the varieties sold under the name Clearfield® (for example corn)..Further transgenic plant varieties having improved characteristics are sold under trade names including InVigor® (canola), Amflora® (potatoes) Mavera® (corn). Varieties combining different events may be sold under tradenames including SmartStax®.

Particularly useful transgenic plants which may be treated according to the invention are plants containing transformation events, or a combination of transformation events, and that are listed for example in the databases for various national or regional regulatory agencies including Event 1143-14A (cotton, insect control, not deposited, described in WO2006/128569); Event 1143-51B (cotton, insect control, not deposited, described in WO2006/128570); Event 1445 (cotton, herbicide tolerance, not deposited, described in US2002120964 or WO2002/034946); Event 17053 (rice, herbicide tolerance, deposited as PTA-9843, described in WO2010/117737); Event 17314 (rice, herbicide tolerance, deposited as PTA-9844, described in WO2010/117735); Event 281-24-236 (cotton, insect control - herbicide tolerance, deposited as PTA-6233, described in WO2005/103266 or US2005216969); Event 3006-210-23 (cotton, insect control - herbicide tolerance, deposited as PTA-6233, described in US2007143876 or WO2005/103266); Event 3272 (corn, quality trait, deposited as PTA-9972, described in WO2006098952 or US2006230473); Event 40416 (corn, insect control - herbicide tolerance, deposited as ATCC PTA-11508, described in WO2011/075593); Event 43A47 (corn, insect control - herbicide tolerance, deposited as ATCC PTA-11509, described in WO2011/075595); Event 5307 (corn, insect control, deposited as ATCC PTA-9561, described in WO2010/077816); Event ASR-368 (bent grass, herbicide tolerance, deposited as ATCC PTA-4816, described in US2006162007 or WO2004053062); Event B16 (corn, herbicide tolerance, not deposited, described in US2003126634); Event BPS-CV127-9 (soybean, herbicide tolerance, deposited as NCIMB No. 41603, described in WO2010/080829); Event CE43-67B (cotton, insect control, deposited as DSM ACC2724, described in US2009217423 or WO2006/128573); Event CE44-69D (cotton, insect control, not deposited, described in US20100024077); Event CE44-69D (cotton, insect control, not deposited, described in WO2006/128571); Event CE46-02A (cotton, insect control, not deposited, described in WO2006/128572); Event COT102 (cotton, insect control, not deposited, described in US2006130175 or W02004039986); Event COT202 (cotton, insect control, not deposited, described in US2007067868 or WO2005054479); Event COT203 (cotton, insect control, not deposited, described in WO2005/054480); Event DAS40278 (corn, herbicide tolerance, deposited as ATCC PTA-10244, described in WO2011/022469); Event DAS-59122-7 (corn, insect control - herbicide tolerance, deposited as ATCC PTA 11384 , described in US2006070139); Event DAS-59132 (corn, insect control - herbicide tolerance, not deposited, described in WO2009/100188); Event DAS68416 (soybean, herbicide tolerance, deposited as ATCC PTA-10442, described in WO2011/066384 or WO2011/066360); Event DP-098140-6 (corn, herbicide tolerance, deposited as ATCC PTA-8296, described in US2009137395 or WO2008/112019); Event DP-305423-1 (soybean, quality trait, not deposited, described in US2008312082 or W02008/054747); Event DP-32138-1 (corn, hybridization system, deposited as ATCC PTA-9158, described in US20090210970 or W02009/103049); Event DP-356043-5 (soybean, herbicide tolerance, deposited as ATCC PTA-8287, described in US20100184079 or WO2008/002872); Event EE-1 (brinjal, insect control, not deposited, described in WO2007/091277); Event FI117 (corn, herbicide tolerance, deposited as ATCC 209031, described in US2006059581 or WO1998/044140); Event GA21 (corn, herbicide tolerance, deposited as ATCC 209033, described in US2005086719 or WO1998/044140); Event GG25 (corn, herbicide tolerance, deposited as ATCC 209032, described in US2005188434 or WO1998/044140); Event GHB119 (cotton, insect control - herbicide tolerance, deposited as ATCC PTA-8398, described in WO2008/151780); Event GHB614 (cotton, herbicide tolerance, deposited as ATCC PTA-6878, described in US2010050282 or WO2007/017186); Event GJ11 (corn, herbicide tolerance, deposited as ATCC 209030, described in US2005188434 or WO1998/044140); Event GM RZ13 (sugar beet, virus resistance , deposited as NCIMB-41601, described in WO2010/076212); Event H7-1 (sugar beet, herbicide tolerance, deposited as NCIMB 41158 or NCIMB 41159, described in US2004172669 or WO2004/074492); Event JOPLIN1 (wheat, disease tolerance, not deposited, described in US2008064032); Event LL27 (soybean, herbicide tolerance, deposited as NCIMB41658, described in WO2006/108674 or US2008320616); Event LL55 (soybean, herbicide tolerance, deposited as NCIMB 41660, described in WO2006/108675 or US2008196127); Event LLcotton25 (cotton, herbicide tolerance, deposited as ATCC PTA-3343, described in WO2003013224 or US2003097687); Event LLRICE06 (rice, herbicide tolerance, deposited as ATCC-23352, described in US6468747 or WO2000/026345); Event LLRICE601 (rice, herbicide tolerance, deposited as ATCC PTA-2600, described in US20082289060 or WO2000/026356); Event LY038 (corn, quality trait, deposited as ATCC PTA-5623, described in US2007028322 or WO2005061720); Event MIR162 (corn, insect control, deposited as PTA-8166, described in US2009300784 or WO2007/142840); Event MIR604 (corn, insect control, not deposited, described in US2008167456 or WO2005103301); Event MON15985 (cotton, insect control, deposited as ATCC PTA-2516, described in US2004-250317 or WO2002/100163); Event MON810 (corn, insect control, not deposited, described in US2002102582); Event MON863 (corn, insect control, deposited as ATCC PTA-2605, described in WO2004/011601 or US2006095986); Event MON87427 (corn, pollination control, deposited as ATCC PTA-7899, described in W02011/062904); Event MON87460 (corn, stress tolerance, deposited as ATCC PTA-8910, described in W02009/111263 or US20110138504); Event MON87701 (soybean, insect control, deposited as ATCC PTA-8194, described in US2009130071 or W02009/064652); Event MON87705 (soybean, quality trait - herbicide tolerance, deposited as ATCC PTA-9241, described in US20100080887 or WO2010/037016); Event MON87708 (soybean, herbicide tolerance, deposited as ATCC PTA9670, described in W02011/034704); Event MON87754 (soybean, quality trait, deposited as ATCC PTA-9385, described in W02010/024976); Event MON87769 (soybean, quality trait, deposited as ATCC PTA-8911, described in US20110067141 or W02009/102873); Event MON88017 (corn, insect control - herbicide tolerance, deposited as ATCC PTA-5582, described in US2008028482 or W02005/0591 03); Event MON88913 (cotton, herbicide tolerance, deposited as ATCC PTA-4854, described in W02004/072235 or US2006059590); Event MON89034 (corn, insect control, deposited as ATCC PTA-7455, described in W02007/140256 or US2008260932); Event MON89788 (soybean, herbicide tolerance, deposited as ATCC PTA-6708, described in US2006282915 or W02006/130436); Event MS11 (oilseed rape, pollination control - herbicide tolerance, deposited as ATCC PTA-850 or PTA-2485, described in W02001/031042); Event MS8 (oilseed rape, pollination control - herbicide tolerance, deposited as ATCC PTA-730, described in W02001/041558 or US2003188347); Event NK603 (corn, herbicide tolerance, deposited as ATCC PTA-2478, described in US2007-292854); Event PE-7 (rice, insect control, not deposited, described in W02008/114282); Event RF3 (oilseed rape, pollination control - herbicide tolerance, deposited as ATCC PTA-730, described in W02001/041558 or US2003188347); Event RT73 (oilseed rape, herbicide tolerance, not deposited, described in W02002/036831 or US2008070260); Event T227-1 (sugar beet, herbicide tolerance, not deposited, described in W02002/44407 or US2009265817); Event T25 (corn, herbicide tolerance, not deposited, described in US2001029014 or W02001/051654); Event T304-40 (cotton, insect control - herbicide tolerance, deposited as ATCC PTA-8171, described in US2010077501 or W02008/122406); Event T342-142 (cotton, insect control, not deposited, described in W02006/128568); Event TC1507 (corn, insect control - herbicide tolerance, not deposited, described in US2005039226 or W02004/099447); Event VIP1034 (corn, insect control - herbicide tolerance, deposited as ATCC PTA-3925., described in W02003/052073), Event 32316 (corn,insect control-herbicide tolerance,deposited as PTA-11507, described in WO2011/084632), Event 4114 (corn, insect control-herbicide tolerance, deposited as PTA-11506, described in WO2011/084621).

The compounds of the formula (I) to be used in accordance with the invention can be converted to customary formulations, such as solutions, emulsions, wettable powders, water- and oil-based suspensions, powders, dusts, pastes, soluble powders, soluble granules, granules for broadcasting, suspoemulsion concentrates, natural compounds impregnated with active ingredient, synthetic substances impregnated with active ingredient, fertilizers, and also microencapsulations in polymeric substances. In the context of the present invention, it is especially preferred when the inventive compounds of the formula (I) are used in the form of a spray formulation.

The present invention therefore additionally also relates to a spray formulation for enhancing the growth of plants in substantial absence of extraordinary environmental conditions. A spray formulation is described in detail hereinafter:

The formulations for spray application are produced in a known manner, for example by mixing the compounds of the formula (I) for use in accordance with the invention with extenders, i.e. liquid solvents and/or solid carriers, optionally with use of surfactants, i.e. emulsifiers and/or dispersants and/or foam formers. Further customary additives, for example customary extenders and solvents or diluents, dyes, wetting agents, dispersants, emulsifiers, antifoams, preservatives, secondary thickeners, stickers, gibberellins and also water, can optionally also be used. The formulations are prepared either in suitable equipment or else before or during application.

The auxiliaries used may be those substances which are suitable for imparting, to the composition itself and/or to preparations derived therefrom (for example spray liquors), particular properties such as particular technical properties and/or else special biological properties. Useful typical auxiliaries include: extenders, solvents and carriers.

Suitable extenders are, for example, water, polar and nonpolar organic chemical liquids, for example from the classes of the aromatic and nonaromatic hydrocarbons (such as paraffins, alkylbenzenes, alkylnaphthalenes, chlorobenzenes), the alcohols and polyols (which may optionally also be substituted, etherified and/or esterified), the ketones (such as acetone, cyclohexanone), esters (including fats and oils) and (poly)ethers, the unsubstituted and substituted amines, amides, lactams (such as N-alkylpyrrolidones) and lactones, the sulfones and sulfoxides (such as dimethyl sulfoxide).

If the extender used is water, it is also possible to use, for example, organic solvents as auxiliary solvents. Useful liquid solvents are essentially: aromatics such as xylene, toluene or alkylnaphthalenes, chlorinated aromatics and chlorinated aliphatic hydrocarbons such as chlorobenzenes, chloroethylenes or methylene chloride, aliphatic hydrocarbons such as cyclohexane or paraffins, for example petroleum fractions, mineral and vegetable oils, alcohols such as butanol or glycol and also their ethers and esters, ketones such as acetone, methyl ethyl ketone, methyl isobutyl ketone or cyclohexanone, strongly polar solvents such as dimethyl sulfoxide, and also water.

It is possible to use dyes such as inorganic pigments, for example iron oxide, titanium oxide and Prussian Blue, and organic dyes such as alizarin dyes, azo dyes and metal phthalocyanine dyes, and trace nutrients such as salts of iron, manganese, boron, copper, cobalt, molybdenum and zinc.

Useful wetting agents which may be present in the formulations usable in accordance with the invention are all substances which promote wetting and which are conventionally used for the formulation of active agrochemical ingredients. Preference is given to using alkyl naphthalenesulfonates, such as diisopropyl or diisobutyl naphthalenesulfonates.

Useful dispersants and/or emulsifiers which may be present in the formulations usable in accordance with the invention are all nonionic, anionic and cationic dispersants conventionally used for the formulation of active agrochemical ingredients. Usable with preference are nonionic or anionic dispersants or mixtures of nonionic or anionic dispersants. Suitable nonionic dispersants are especially ethylene oxide/propylene oxide block polymers, alkylphenol polyglycol ethers and tristryrylphenol polyglycol ether, and the phosphated or sulfated derivatives thereof. Suitable anionic dispersants are especially lignosulfonates, salts of polyacrylic acid and arylsulfonate/formaldehyde condensates.

Antifoams which may be present in the formulations usable in accordance with the invention are all foam-inhibiting substances conventionally used for the formulation of active agrochemical ingredients. Usable with preference are silicone antifoams and magnesium stearate.

Preservatives which may be present in the formulations usable in accordance with the invention are all substances usable for such purposes in agrochemical compositions. Examples include dichlorophene and benzyl alcohol hemiformal.

Secondary thickeners which may be present in the formulations usable in accordance with the invention are all substances usable for such purposes in agrochemical compositions. Preference is given to cellulose derivatives, acrylic acid derivatives, xanthan, modified clays and finely divided silica.

Stickers which may be present in the formulations usable in accordance with the invention include all customary binders usable in seed-dressing products. Preferred examples include polyvinylpyrrolidone, polyvinyl acetate, polyvinyl alcohol and tylose. Gibberellins which may be present in the formulations usable in accordance with the invention may preferably be gibberellins A1, A3 (= gibberellic acid), A4 and A7; particular preference is given to using gibberellic acid. The gibberellins are known (cf. R. Wegler "Chemie der Pflanzenschutz- und Schädlingsbekampfungsmittel" [Chemistry of Crop Protection Compositions and Pesticides], vol. 2, Springer Verlag, 1970, p. 401-412).

Further additives may be fragrances, mineral or vegetable, optionally modified oils, waxes and nutrients (including trace nutrients), such as salts of iron, manganese, boron, copper, cobalt, molybdenum and zinc. Additionally present may be stabilizers, such as cold stabilizers, antioxidants, light stabilizers or other agents which improve chemical and/or physical stability.

The formulations contain generally between 0.01 and 98% by weight, preferably between 0.5 and 90%, of the compound of the formula (I).

The active ingredient when used according to present invention may be present in its commercially available formulations and in the use forms, prepared from these formulations, in a mixture with other active ingredients, such as insecticides, attractants, sterilants, bactericides, acaricides, nematicides, fungicides, growth regulators, herbicides, safeners, fertilizers or semiochemicals.

Preferred times for the application of compounds of the formula (I) for regulating plant growth are treatments of the soil, stems and/or leaves with the approved application rates.

The compounds of the formula (I) when used according to present invention may generally additionally be present in their commercial formulations and in the use forms prepared from these formulations in mixtures with other active ingredients, such as insecticides, attractants, sterilants, acaricides, nematicides, fungicides, growth regulators, substances which influence plant maturity, safeners or herbicides. Particularly suitable mixing partners are, for example, the active ingredients of the different classes, specified below in groups, without any preference resulting from the sequence thereof:
Fungicides:
   F1) nucleic acid synthesis inhibitors, for example benalaxyl, benalaxyl-M, bupirimate, chiralaxyl, clozylacon, dimethirimol, ethirimol, furalaxyl, hymexazole, metalaxyl, metalaxyl-M, ofurace, oxadixyl, oxolinic acid;
   F2) mitosis and cell division inhibitors, for example benomyl, carbendazim, diethofencarb, fuberidazole, fluopicolid, pencycuron, thiabendazole, thiophanate-methyl, zoxamide and chloro-7-(4-methylpiperidin-1-yl)-6-(2,4,6-trifluorophenyl)-[1,2,4]triazolo[1,5-a]pyrimidine;
   F3) respiratory chain complex I/II inhibitors, for example diflumetorim, bixafen, boscalid, carboxin, diflumethorim, fenfuram, fluopyram, flutolanil, furametpyr, mepronil, oxycarboxin, penflufen, penthiopyrad, thifluzamid, N-[-(1,3-dimethylbutyl)phenyl]-5-fluoro-1,3-dimethyl-1H-pyrazole-4-carboxamide, isopyrazam, sedaxan, 3-(difluoromethyl)-1-methyl-N-(3',4',5'-trifluorobiphenyl-2-yl)-1H-pyrazole-4-carboxamide, 3-(difluoromethyl)-1-methyl-N-[2-(1,1,2,2-tetrafluoroethoxy)phenyl]-1H-pyrazole-4-carboxamide, 3-(difluoromethyl)-N-[4-fluoro-2-(1,1,2,3,3,3-hexafluoropropoxy)phenyl]-1-methyl-1H-pyrazole-4-carboxam ide, N-[1-(2,4-dichlorophenyl)-1-methoxypropan-2-yl]-3-(difluoromethyl)-1-methyl-1H-pyrazole-4-carboxamide and corresponding salts;
   F4) respiratory chain complex III inhibitors, for example amisulbrom, azoxystrobin, cyazofamid, dimoxystrobin, enestrobin, famoxadon, fenamidon, fluoxastrobin, kresoxim-methyl, metominostrobin, orysastrobin, pyraclostrobin, pyribencarb, picoxystrobin, trifloxystrobin, (2E)-2-(2-{[6-(3-chloro-2-methylphenoxy)-5-fluoropyrimidin-4-yl]oxy}phenyl)-2-(methoxyimino)-N-methylethanamide, (2E)-2-(ethoxyimino)-N-methyl-2-(2-{[({(1E)-1-[3-(trifluoromethyl)-phenyl]ethylidenelamino)oxy]methyl}phenyl)ethanamide and corresponding salts, (2E)-2-(methoxyimino)-N-methyl-2-{2-[(E)-({1-[3-(trifluoromethyl)phenyl]ethoxy}-imino)methyl]phenyl}ethanamide, (2E)-2-{2-[({[(1E)-1-(3-{[(E)-1-fluoro-2-phenylethenyl]oxy}phenyl)ethylidene]amino}oxy)methyl]phenyl}-2-(methoxyimino)-N-methylethanamide, (2E)-2-{2-[({[(2E,3E)-4-(2,6-dichlorophenyl)but-3-en-2-ylidene]amino}oxy)methyl]phenyl}-2-(methoxyimino)-N-methylethanamide, 2-chloro-N-(1,1,3-trimethyl-2,3-dihydro-1H-inden-4-yl)pyridine-3-carboxamide, 5-methoxy-2-methyl-4-(2-{[({(1E)-1-[3-(trifluoromethyl)phenyl]ethylidene}amino)oxy]methyl}phenyl)-2,4-dihydro-3H-1,2,4-triazol-3-one, 2-methyl {2-[({cyclopropyl[(4-methoxyphenyl)-imino]methyl}sulfanyl)methyl]phenyl}-3-methoxyacrylate, N-(3-ethyl-3,5,5-trimethylcyclohexyl)-3-(formylamino)-2-hydroxybenzamide and corresponding salts;
   F5) decouplers, for example dinocap, fluazinam;
   F6) ATP production inhibitors, for example fentin acetate, fentin chloride, fentin hydroxide, silthiofam
   F7) amino acid and protein biosynthesis inhibitors, for example andoprim, blasticidin-S, cyprodinil, kasugamycin, kasugamycin hydrochloride hydrate, mepanipyrim, pyrimethanil
   F8) signal transduction inhibitors, for example fenpiclonil, fludioxonil, quinoxyfen
   F9) lipid and membrane synthesis inhibitors, for example chlozolinate, iprodione, procymidone, vinclozolin, ampropylfos, potassium-ampropylfos, edifenphos, iprobenfos (IBP), isoprothiolane, pyrazophos, tolclofos-methyl, biphenyl, iodocarb, propamocarb, propamocarb hydrochloride
   F10) ergosterol biosynthesis inhibitors, for example fenhexamid, azaconazole, bitertanol, bromuconazole, diclobutrazole, difenoconazole, diniconazole, diniconazole-M, etaconazole, fenbuconazole, fluquinconazole, flusilazole, flutriafol, furconazole, furconazole-cis, hexaconazole, imibenconazole, ipconazole, metconazole, myclobutanil, paclobutrazole, penconazole, propiconazole, prothioconazole, simeconazole, spiroxamine, tebuconazole, triadimefon, triadimenol, triticonazole, uniconazole, voriconazole, imazalil, imazalil sulfate, oxpoconazole, fenarimol, flurprimidol, nuarimol, pyrifenox, triforin, pefurazoat, prochloraz, triflumizole, viniconazole, aldimorph, dodemorph, dodemorph acetate, fenpropimorph, tridemorph, fenpropidin, naftifin, pyributicarb, terbinafin, 1-(4-chlorophenyl)-2-(1H-1,2,4-triazol-1-yl)cycloheptanol, methyl 1-(2,2-dimethyl-2,3-dihydro-1H-inden-1-yl)-1H-imidazole-5-carboxylate, N'-{5-(difluoromethyl)-2-methyl-4-[3-(trimethyl-silyl)propoxy]phenyl}-N-ethyl-N-methylimidoformamide, N-ethyl-N-methyl-N'-{2-methyl-5-(trifluoromethyl)-4-[3-(trimethylsilyl)propoxy]phenyl}imidoformamide and O-{1-[(4-methoxyphenoxy)methyl]-2,2-dimethylpropyl}-1H-imidazole-1-carbothioate;
   F11) cell wall synthesis inhibitors, for example benthiavalicarb, bialaphos, dimethomorph, flumorph, iprovalicarb, polyoxins, polyoxorim, validamycin A
   F12) melanine biosynthesis inhibitors, for example capropamide, diclocymet, fenoxanil, phthalide, pyroquilon, tricyclazole
   F13) resistance induction, for example acibenzolar-S-methyl, probenazole, tiadinil, isotianil
   F14) multisite, for example captafol, captan, chlorothalonil, copper salts such as: copper hydroxide, copper naphthenate, copper oxychloride, copper sulfate, copper oxide, oxine-copper and Bordeaux mixture, dichlofluanid, dithianon, dodine, dodine free base, ferbam, folpet, fluorofolpet, guazatine, guazatine acetate, iminoctadine, iminoctadine albesilate, iminoctadine triacetate, mancopper, mancozeb, maneb, metiram, metiram zinc, propineb, sulfur and sulfur preparations containing calcium polysulfide, thiram, tolylfluanid, zineb, ziram
   F15) unknown mechanism, for example amibromdol, benthiazole, bethoxazin, capsimycin, carvone, chinomethionat, chloropicrin, cufraneb, cyflufenamid, cymoxanil, dazomet, debacarb, diclomezine, dichlorophen, dicloran, difenzoquat, difenzoquat methyl sulfate, diphenylamine, ethaboxam, ferimzone, flumetover, flusulfamide, fluopicolid, fluoroimid, fosatyl-Al, hexachlorobenzene, 8-hydroxyquinoline sulfate, iprodione, irumamycin, isotianil, methasulfocarb, metrafenone, methyl isothiocyanate, mildiomycin, natamycin, nickel dimethyl dithiocarbamate, nitrothal-isopropyl, octhilinone, oxamocarb, oxyfenthiin, pentachlorophenol and salts, 2-phenylphenol and salts, piperalin, propanosine-sodium, proquinazid, pyrrolnitrin, quintozene, tecloftalam, tecnazene, triazoxide, trichlamide, zarilamid and 2,3,5,6-tetrachloro-4-(methylsulfonyl)pyridine, N-(4-chloro-2-nitrophenyl)-N-ethyl-4-methylbenzenesulfonamide, 2-amino-4-methyl-N-phenyl-5-thiazolecarboxamide, 2-chloro-N-(2,3-dihydro-1,1,3-trimethyl-1H-inden-4-yl)-3-pyridinecarboxamide, 3-[5-(4-chlorophenyl)-2,3-dimethylisoxazolidin-3-yl]pyridine, cis-1-(4-chlorophenyl)-2-(1H-1,2,4-thazol-1-yl)cycloheptanol, 2,4-dihydro-5-methoxy-2-methyl-4-[[[[1-[3-(trifluoromethyl)phenyl]ethylidene]amino]oxy]methyl]phenyl]-3H-1,2,3-triazol-3-one (185336-79-2), methyl 1-(2,3-dihydro-2,2-dimethyl-1H-inden-1-yl)-1H-imidazole-5-carboxylate, 3,4,5-trichloro-2,6-pyridinedicarbonitrile, methyl 2-[[[cyclopropyl[(4-methoxyphenyl)imino]methyl]thio]methyl]-.alpha.-(methoxymethylene)benzacetate, 4-chloro-alpha-propynyloxy-N-[2-[3-methoxy-4-(2-propynyloxy)phenyl]ethyl]benzacetamide, (2S)-N-[2-[4-[[3-(4-chlorophenyl)-2-propynyl]oxy]-3-methoxyphenyl]ethyl]-3-methyl-2-[(methylsulfonyl)amino]butanamide, 5-chloro-7-(4-methylpiperidin-1-yl)-6-(2,4,6-trifluorophenyl)[1,2,4]triazolo[1,5-a]pyrimidine, 5-chloro-6-(2,4,6-trifluorophenyl)-N-[(1R)-1,2,2-trimethylpropyl][1,2,4]triazolo[1,5-a]pyrimidine-7-amine, 5-chloro-N-[(1R)-1,2-dimethylpropyl]-6-(2,4,6-trifluorophenyl)[1,2,4]triazolo[1,5-a]pyrimidine-7-amine, N-[1-(5-bromo-3-chloropyridin-2-yl)ethyl]-2,4-dichloronicotinamide, N-(5-bromo-3-chloropyridin-2-yl)methyl-2,4-dichloronicotinamide, 2-butoxy-6-iodo-3-propylbenzopyranon-4-one, N-{(Z)-[(cyclopropylmethoxy)imino][6-(difluoromethoxy)-2,3-difluorophenyl]-methyl}-2-benzacetamide, N-(3-ethyl-3,5,5-trimethylcyclohexyl)-3-formylamino-2-hydroxybenzamide, 2-[[[[1-[3(1-fluoro-2-phenylethyl)oxy]phenyl]ethylidene]amino]oxy]-methyl]-alpha-(methoxyimino)-N-methyl-alphaE-benzacetamide, N-{2-[3-chloro-5-(trifluoromethyl)pyridin-2-yl]ethyl}-2-(trifluoromethyl)benzamide, N-(3',4'-dichloro-5-fluoro-biphenyl-2-yl)-3-(difluoromethyl)-1-methyl-1H-pyrazole-4-carboxamide, N-(6-methoxy-3-pyridinyl)cyclopropanecarboxamide, 1-[(4-methoxyphenoxy)methyl]-2,2-dimethylpropyl-1H-imidazole-1-carboxylic acid, O-[1-[(4-methoxyphenoxy)methyl]-2,2-dimethylpropyl]-1H-imidazole-1-carbothioic acid, 2-(2-{[6-(3-chloro-2-methylphenoxy)-5-fluoropyrimidin-4-yl]oxy}phenyl)-2-(methoxyimino)-N-methylacetamide.
Bactericides:
   bronopol, dichlorophen, nitrapyrin, nickel dimethyldithiocarbamate, kasugamycin, octhilinone, furancarboxylic acid, oxytetracycline, probenazole, streptomycin, tecloftalam, copper sulfate and other copper preparations.
Insecticides/acaricides/nematicides:
   I1) acetylcholine esterase (AChE) inhibitors, a) from the substance group of the carbamates, for example alanycarb, aldicarb, aldoxycarb, allyxycarb, aminocarb, bendiocarb, benfuracarb, bufencarb, butacarb, butocarboxim, butoxycarboxim, carbaryl, carbofuran, carbosulfan, cloethocarb, dimetilan, ethiofencarb, fenobucarb, fenothiocarb, fenoxycarb, formetanate, furathiocarb, isoprocarb, metam-sodium, methiocarb, methomyl, metolcarb, oxamyl, pirimicarb, promecarb, propoxur, thiodicarb, thiofanox, trimethacarb, XMC, xylylcarb, triazamate, b) from the group of the organophosphates, for example acephate, azamethiphos, azinphos (-methyl, -ethyl), bromophos-ethyl, bromfenvinfos (-methyl), butathiofos, cadusafos, carbophenothion, chlorethoxyfos, chlorfenvinphos, chlormephos, chlorpyrifos (-methyl/-ethyl), coumaphos, cyanofenphos, cyanophos, chlorfenvinphos, demeton-S-methyl, demeton-S-methylsulfone, dialifos, diazinon, dichlofenthion, dichlorvos/DDVP, dicrotophos, dimethoate, dimethylvinphos, dioxabenzofos, disulfoton, EPN, ethion, ethoprophos, etrimfos, famphur, fenamiphos, fenitrothion, fensulfothion, fenthion, flupyrazofos, fonofos, formothion, fosmethilan, fosthiazate, heptenophos, iodofenphos, iprobenfos, isazofos, isofenphos, isopropyl O-salicylate, isoxathion, malathion, mecarbam, methacrifos, methamidophos, methidathion, mevinphos, monocrotophos, naled, omethoate, oxydemeton-methyl, parathion (-methyl/-ethyl), phenthoate, phorate, phosalone, phosmet, phosphamidon, phosphocarb, phoxim, pirimiphos (-methyl/- ethyl), profenofos, propaphos, propetamphos, prothiofos, prothoate, pyraclofos, pyridaphenthion, pyridathion, quinalphos, sebufos, sulfotep, sulprofos, tebupirimfos, temephos, terbufos, tetrachlorvinphos, thiometon, triazophos, triclorfon, vamidothion
   I2) sodium channel modulators / voltage-dependent sodium channel blockers, a) from the group of the pyrethroids, for example acrinathrin, allethrin (d-cis-trans, d-trans), beta-cyfluthrin, bifenthrin, bioallethrin, bioallethrin-S-cyclopentyl isomer, bioethanomethrin, biopermethrin, bioresmethrin, chlovaporthrin, cis-cypermethrin, cis-resmethrin, cis-permethrin, clocythrin, cycloprothrin, cyfluthrin, cyhalothrin, cypermethrin (alpha-, beta-, theta-, zeta-), cyphenothrin, deltamethrin, eflusilanate, empenthrin (1R isomer), esfenvalerate, etofenprox, fenfluthrin, fenpropathrin, fenpyrithrin, fenvalerate, flubrocythrinate, flucythrinate, flufenprox, flumethrin, fluvalinate, fubfenprox, gamma-cyhalothrin, imiprothrin, kadethrin, lambda-cyhalothrin, metofluthrin, permethrin (cis-, trans-), phenothrin (1R-trans isomer), prallethrin, profluthrin, protrifenbute, pyresmethrin, pyrethrin, resmethrin, RU 15525, silafluofen, tau-fluvalinate, tefluthrin, terallethrin, tetramethrin (1R isomer), tralomethrin, transfluthrin, ZXI 8901, pyrethrins (pyrethrum), b) DDT, c) oxadiazines, for example indoxacarb, d) semicarbazones, for example metaflumizone (BAS3201)
   I3) acetylcholine receptor agonists/antagonists, a) from the group of the chloronicotinyls,
      for example acetamiprid, AKD 1022, clothianidin, dinotefuran, imidacloprid, imidaclothiz, nitenpyram, nithiazine, thiacloprid, thiamethoxam, b) nicotine, bensultap, cartap;
   I4) acetylcholine receptor modulators from the group of the spinosyns, for example spinosad
   I5) GABA-controlled chloride channel antagonists, a) from the group of the organochlorines, for example camphechlor, chlorodane, endosulfan, gamma-HCH, HCH, heptachlor, lindane, methoxychlor, b) fiproles, for example acetoprole, ethiprole, fipronil, pyrafluprole, pyriprole, vaniliprole;
   I6) chloride channel activators, for example abamectin, emamectin, emamectin benzoate, ivermectin, lepimectin, milbemycin;
   I7) juvenile hormone mimetics, for example diofenolan, epofenonane, fenoxycarb, hydroprene, kinoprene, methoprene, pyriproxifen, triprene;
   I8) ecdysone agonists/disruptors, for example chromafenozide, halofenozide, methoxyfenozide, tebufenozide;
   I9) chitin biosynthesis inhibitors, for example bistrifluron, chlofluazuron, diflubenzuron, fluazuron, flucycloxuron, flufenoxuron, hexaflumuron, lufenuron, novaluron, noviflumuron, penfluron, teflubenzuron, triflumuron, buprofezin, cyromazine;
   I10) inhibitors of oxidative phosphorylation, a) ATP disruptors, for example diafenthiuron, b) organotin compounds, for example azocyclotin, cyhexatin, fenbutatin oxide;
   I11) decouplers of oxidative phosphorylation by interruption of the H-proton gradient, a) from the group of the pyrroles, for example chlorofenapyr, b) from the class of the dinitrophenols, for example binapacyrl, dinobuton, dinocap, DNOC, meptyldinocap;
   I12) site I electron transport inhibitors, for example METIs, especially, as examples, fenazaquin, fenpyroximate, pyrimidifen, pyridaben, tebufenpyrad, tolfenpyrad or else hydramethylnon, dicofol
   I13) site II electron transport inhibitors, for example rotenone
   I14) site III electron transport inhibitors, for example acequinocyl, fluacrypyrim
   I15) microbial disruptors of the insect gut membrane, for example Bacillus thuringiensis subspecies israelensis, Bacillus sphaericus, Bacillus thuringiensis subspecies aizawai, Bacillus thuringiensis subspecies kurstaki, Bacillus thuringiensis subspecies tenebrionis, and BT plant proteins, for example Cry1Ab, Cry1Ac, Cry1Fa, Cry2Ab, mCry3A, Cry3Ab, Cry3Bb, Cry34/35Ab1
   I16) lipid synthesis inhibitors, a) from the group of the tetronic acids, for example spirodiclofen, spiromesifen, b) from the class of the tetramic acids, for example spirotetramat, cis-3-(2,5-dimethylphenyl)-4-hydroxy-8-methoxy-1-azaspiro[4.5]dec-3-en-2-one
   I17) octopaminergic agonists, for example amitraz
   I18) inhibitors of magnesium-stimulated ATPase, for example propargite
   I19) nereistoxin analogs, for example thiocyclam hydrogen oxalate, thiosultap-sodium
   I20) ryanodine receptor agonists, a) from the group of the benzenedicarboxamides, for example flubendiamide, b) from the group of the anthranilamides, for example rynaxypyr (3-bromo-N-{4-chloro-2-methyl-6-[(methylamino)carbonyl]phenyl}-1-(3-chloropyridin-2-yl)-1H-pyrazole-5-carboxamide), cyazypyr (ISO-proposed) (3-bromo-N-{4-cyano-2-methyl-6-[(methylamino)carbonyl]phenyl}-1-(3-chloropyridin-2-yl)-1H-pyrazole-5-carboxamide) (known from WO 2004067528) and 3-bromo-N-{2-bromo-4-chloro-6-[(1-cyclopropylethyl)carbamoyl]phenyl}-1-(3-chloropyridin-2-yl)-1H-pyrazole-5-carboxamide (known from W02005/077934) or methyl 2-[3,5-dibromo-2-({[3-bromo-1-(3-chloropyridin-2-yl)-1H-pyrazol-5-yl]carbonyl}amino)benzoyl]-1,2-dimethylhydrazinecarboxylate (known from W02007/043677)
   I21) biologics, hormones or pheromones, for example azadirachtin, Bacillus spec., Beauveria spec., codlemone, Metarrhizium spec., Paecilomyces spec., thuringiensin, Verticillium spec.
   I22) active ingredients with unknown or nonspecific mechanisms of action, a) fumigants, for example aluminum phosphide, methyl bromide, sulfuryl fluoride, b) antifeedants, for example cryolite, flonicamide, pymetrozine, c) mite growth inhibitors, for example clofentezine, etoxazole, hexythiazox, d) amidoflumet, benclothiaz, benzoximate, bifenazate, bromopropylate, buprofezin, chinomethionat, chlorodimeform, chlorobenzilate, chloropicrin, clothiazoben, cycloprene, cyflumetofen, dicyclanil, fenoxacrim, fentrifanil, flubenzimine, flufenerim, flutenzin, gossyplure, hydramethylnone, japonilure, metoxadiazone, petroleum, piperonyl butoxide, potassium oleate, pyridalyl, sulfluramid, tetradifon, tetrasul, triarathene, verbutin and the following known active compounds: 4-{[(6-bromopyrid-3-yl)methyl](2-fluoroethyl)amino}furan-2(5H)-one (known from WO 2007/115644), 4-{[(6-fluoropyrid-3-yl)methyl](2,2-difluoroethyl)amino}furan-2(5H)-one (known from WO 2007/115644), 4-{[(2-chloro-1,3-thiazol-5-yl)methyl](2-fluoroethyl)amino}furan-2(5H)-one (known from WO 2007/115644), 4-{[(6-chloropyrid-3-yl)methyl](2-fluoroethyl)amino}furan-2(5H)-one (known from WO 2007/115644), 4-{[(6-chloropyrid-3-yl)methyl](2,2-difluoroethyl)amino}furan-2(5H)-one (known from WO 2007/115644), 4-{[(6-chloro-5-fluoropyrid-3-yl)methyl](methyl)amino}furan-2(5H)-one (known from WO 2007/115643), 4-{[(5,6-dichloropyrid-3-yl)methyl](2-fluoroethyl)amino}furan-2(5H)-one (known from WO 2007/115646), 4-{[(6-chloro-5-fluoropyrid-3-yl)methyl](cyclopropyl)amino}furan-2(5H)-one (known from WO 2007/115643), 4-{[(6-chloropyrid-3-yl)methyl](cyclopropyl)amino}furan-2(5H)-one (known from EP0539588), 4-{[(6-chloropyrid-3-yl)methyl](methyl)amino}furan-2(5H)-one (known from EP0539588), [1-(6-chloropyridin-3-yl)ethyl](methyl)oxido-λ⁴-sulfanylidenecyanamide (known from WO 2007/149134) and the diastereomers thereof {[(1*R*)-1-(6-chloropyridin-3-yl)ethyl](methyl)oxido-lambda⁶-sulfanylidene}cyanamide and {[(1*S*)-1-(6-chloropyridin-3-yl)ethyl](methyl)oxido-lambda⁶-sulfanylidene}cyanamide (likewise known from WO 2007/149134) and sulfoxaflor (likewise known from WO 2007/149134), 1-[2-fluoro-4-methyl-5-[(2,2,2-trifluoroethyl)sulfinyl]phenyl]-3-(trifluoromethyl)-1H-1,2,4-triazol-5-amine (known from WO 2006/043635), [(3S,4aR,12R,12aS,12bS)-3-[(cyclopropylcarbonyl)oxy]-6,12-dihydroxy-4,12b-dimethyl-11-oxo-9-(pyridin-3-yl)-1,3,4,4a,5,6,6a, 12,12a, 12b-decahydro-2H,11H-benzo[f]pyrano[4,3-b]chromen-4-yl]methyl cyclopropane-carboxylate (known from WO 2006/129714), 2-cyano-3-(difluoromethoxy)-N,N-dimethylbenzenesulfonamide (known from WO2006/056433), 2-cyano-3-(difluoromethoxy)-N-methylbenzenesulfonamide (known from WO2006/100288), 2-cyano-3-(difluoromethoxy)-N-ethylbenzenesulfonamide (known from WO2005/035486), 4-(difluoromethoxy)-N-ethyl-N-methyl-1,2-benzothiazole-3-amine 1,1-dioxide (known from WO2007/057407), N-[1-(2,3-dimethylphenyl)-2-(3,5-dimethylphenyl)ethyl]-4,5-dihydro-1,3-thiazole-2-amine (known from WO2008/104503), {1'-[(2E)-3-(4-chlorophenyl)prop-2-en-1-yl]-5-fluorospiro[indole-3,4'-piperidin]-1(2H)-yl}(2-chloropyridin-4-yl)methanone (known from WO2003106457), 3-(2,5-dimethylphenyl)-4-hydroxy-8-methoxy-1,8-diazaspiro[4.5]dec-3-en-2-one (known from WO2009049851), 3-(2,5-dimethylphenyl)-8-methoxy-2-oxo-1,8-diazaspiro[4.5]dec-3-en-4-yl ethyl carbonate (known from WO2009049851), 4-(but-2-yn-1-yloxy)-6-(3,5-dimethylpiperidin-1-yl)-5-fluoropyrimidine (known from WO2004099160), (2,2,3,3,4,4,5,5-octafluoropentyl)(3,3,3-trifluoropropyl)malononitrile (known from WO2005063094), (2,2,3,3,4,4,5,5-octafluoropentyl)(3,3,4,4,4-pentafluorobutyl)malononitrile (known from WO2005063094), 8-[2-(cyclopropylmethoxy)-4-(trifluoromethyl)phenoxy]-3-[6-(trifluoromethyl)pyridazin-3-yl]-3-azabicyclo[3.2.1]octane (known from WO2007040280 / 282), 2-ethyl-7-methoxy-3-methyl-6-[(2,2,3,3-tetrafluoro-2,3-dihydro-1,4-benzodioxin-6-yl)oxy]quinolin-4-yl methyl carbonate (known from JP2008110953), 2-ethyl-7-methoxy-3-methyl-6-[(2,2,3,3-tetrafluoro-2,3-dihydro-1,4-benzodioxin-6-yl)oxy]quinolin-4-yl acetate (known from JP2008110953), PF1364 (Chemical Abstracts No. 1204776-60-2, known from JP2010018586), 5-[5-(3,5-dichlorophenyl)-5-(trifluoromethyl)-4,5-dihydro-1,2-oxazol-3-yl]-2-(1H-1,2,4-triazol-1-yl)benzonitrile (known from WO2007075459), 5-[5-(2-chloropyridin-4-yl)-5-(trifluoromethyl)-4,5-dihydro-1,2-oxazol-3-yl]-2-(1H-1,2,4-triazol-1-yl)benzonitrile (known from WO2007075459), 4-[5-(3,5-dichlorophenyl)-5-(trifluoromethyl)-4,5-dihydro-1,2-oxazol-3-yl]-2-methyl-N-{2-oxo-2-[(2,2,2-trifluoroethyl)amino]ethyl}benzamide (known from WO2005085216).
Safeners are preferably selected from the group consisting of:
   S1) compounds of the formula (S1) 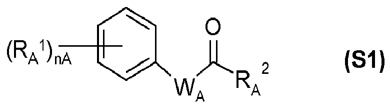 where the symbols and indices are each defined as follows:
      - n_{A}: is a natural number from 0 to 5, preferably 0 to 3;
      - R_{A}¹: is halogen, (C₁-C₄)-alkyl, (C₁-C₄)-alkoxy, nitro or (C₁-C₄)-haloalkyl; 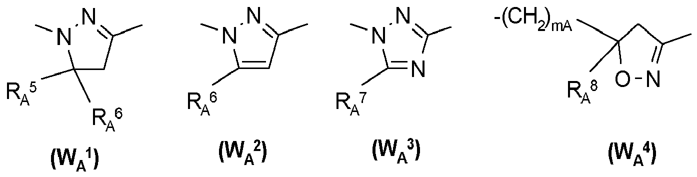
      - W_{A}: is an unsubstituted or substituted divalent heterocyclic radical from the group consisting of partially unsaturated or aromatic five-membered heterocycles having 1 to 3 hetero ring atoms from the group of N and O, where at least one nitrogen atom and at most one oxygen atom is present in the ring, preferably a radical from the group consisting of (W_{A}¹) to (W_{A}⁴),
      - m_{A}: is 0 or 1;
      - R_{A}²: is OR_{A}³, SR_{A}³ or NR_{A}³R_{A}⁴ or a saturated or unsaturated 3- to 7-membered heterocycle having at least one nitrogen atom and up to 3 heteroatoms, preferably from the group consisting of O and S, which is attached via the nitrogen atom to the carbonyl group in (S1) and which is unsubstituted or substituted by radicals from the group consisting of (C₁-C₄)-alkyl, (C₁-C₄)-alkoxy and optionally substituted phenyl, preferably a radical of the formula OR_{A}³, NHR_{A}⁴ or N(CH₃)₂, in particular of the formula OR_{A}³;
      - R_{A}³: is hydrogen or an unsubstituted or substituted aliphatic hydrocarbyl radical, preferably having a total of 1 to 18 carbon atoms;
      - R_{A}⁴: is hydrogen, (C₁-C₆)-alkyl, (C₁-C₆)-alkoxy or substituted or unsubstituted phenyl;
      - R_{A}⁵: is H, (C₁-C₈)-alkyl, (C₁-C₈)-haloalkyl, (C₁-C₄)-alkoxy-(C₁-C₈)-alkyl, cyano or COOR_{A}⁹ where R_{A}⁹ is hydrogen, (C₁-C₈)-alkyl, (C₁-C₈)-haloalkyl, (C₁-C₄)-alkoxy-(C₁-C₄)-alkyl, (C₁-C₆)-hydroxyalkyl, (C₃-C₁₂)-cycloalkyl or tri-(C₁-C₄)-alkylsilyl;
      - R_{A}⁶, R_{A}⁷, R_{A}⁸: are the same or different and are each hydrogen, (C₁-C₈)-alkyl, (C₁-C₈)-haloalkyl, (C₃-C₁₂)-cycloalkyl or substituted or unsubstituted phenyl;
      preferably:
      a) compounds of the type of the dichlorophenylpyrazoline-3-carboxylic acid (S1^{a}), preferably compounds such as 1-(2,4-dichlorophenyl)-5-(ethoxycarbonyl)-5-methyl-2-pyrazoline-3-carboxylic acid, ethyl 1-(2,4-dichlorophenyl)-5-(ethoxycarbonyl)-5-methyl-2-pyrazoline-3-carboxylate (S1-1) ("mefenpyr-diethyl"), and related compounds, as described in WO-A-91/07874;
      b) derivatives of dichlorophenylpyrazolecarboxylic acid (S1^{b}), preferably compounds such as ethyl 1-(2,4-dichlorophenyl)-5-methylpyrazole-3-carboxylate (S1-2), ethyl 1-(2,4-dichlorophenyl)-5-isopropylpyrazole-3-carboxylate (S1-3), ethyl 1-(2,4-dichlorophenyl)-5-(1,1-dimethylethyl)pyrazole-3-carboxylate (S1-4) and related compounds, as described in EP-A-333 131 and EP-A-269 806;
      c) derivatives of 1,5-diphenylpyrazole-3-carboxylic acid (S1^{c}), preferably compounds such as ethyl 1-(2,4-dichlorophenyl)-5-phenylpyrazole-3-carboxylate (S1-5), methyl 1-(2-chlorophenyl)-5-phenylpyrazole-3-carboxylate (S1-6) and related compounds, as described, for example, in EP-A-268554;
      d) compounds of the triazolecarboxylic acid type (S1^{d}), preferably compounds such as fenchlorazole(-ethyl), i.e. ethyl
         1-(2,4-dichlorophenyl)-5-trichloromethyl-(1H)-1,2,4-triazole-3-carboxylate (S1-7), and related compounds as described in EP-A-174 562 and EP-A-346 620;
      e) compounds of the 5-benzyl- or 5-phenyl-2-isoxazoline-3-carboxylic acid or of the 5,5-diphenyl-2-isoxazoline-3-carboxylic acid type (S1^{e}), preferably compounds such as ethyl 5-(2,4-dichlorobenzyl)-2-isoxazoline-3-carboxylate (S1-8) or ethyl 5-phenyl-2-isoxazoline-3-carboxylate (S1-9) and related compounds as described in WO-A-91/08202, or 5,5-diphenyl-2-isoxazolinecarboxylic acid (S1-10) or ethyl 5,5-diphenyl-2-isoxazoline-3-carboxylate (S1-11) ("isoxadifen-ethyl") or n-propyl 5,5-diphenyl-2-isoxazoline-3-carboxylate (S1-12) or ethyl 5-(4-fluorophenyl)-5-phenyl-2-isoxazoline-3-carboxylate (S1-13), as described in patent application WO-A-95/07897.
   S2) Quinoline derivatives of the formula (S2), 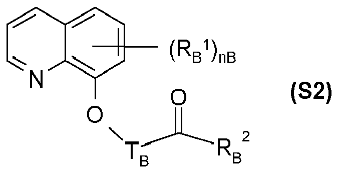 where the symbols and indices are each defined as follows:
      - R_{B}¹: is halogen, (C₁-C₄)-alkyl, (C₁-C₄)-alkoxy, nitro or (C₁-C₄)-haloalkyl;
      - n_{B}: is a natural number from 0 to 5, preferably 0 to 3;
      - R_{B}²: is OR_{B}³, SR_{B}³ or NR_{B}³R_{B}⁴ or a saturated or unsaturated 3- to 7-membered heterocycle having at least one nitrogen atom and up to 3 heteroatoms, preferably from the group consisting of O and S, which is attached via the nitrogen atom to the carbonyl group in (S2) and which is unsubstituted or substituted by radicals from the group consisting of (C₁-C₄)-alkyl, (C₁-C₄)-alkoxy and optionally substituted phenyl, preferably a radical of the formula OR_{B}³, NHR_{B}⁴ or N(CH₃)₂, in particular of the formula OR_{B}³;
      - R_{B}³: is hydrogen or an unsubstituted or substituted aliphatic hydrocarbyl radical, preferably having a total of 1 to 18 carbon atoms;
      - R_{B}⁴: is hydrogen, (C₁-C₆)-alkyl, (C₁-C₆)-alkoxy or substituted or unsubstituted phenyl;
      - T_{B}: is a (C₁- or C₂)-alkanediyl chain which is unsubstituted or substituted by one or two (C₁-C₄)-alkyl radicals or by [(C₁-C₃)-alkoxy]carbonyl;
      preferably:
      a) compounds of the 8-quinolinoxyacetic acid type (S2^{a}), preferably 1-methylhexyl (5-chloro-8-quinolinoxy)acetate ("cloquintocet-mexyl") (S2-1), 1,3-dimethylbut-1-yl (5-chloro-8-quinolinoxy)acetate (S2-2), 4-allyloxybutyl (5-chloro-8-quinolinoxy)acetate (S2-3), 1-allyloxyprop-2-yl (5-chloro-8-quinolinoxy)acetate (S2-4), ethyl (5-chloro-8-quinolinoxy)acetate (S2-5), methyl (5-chloro-8-quinolinoxy)acetate (S2-6), allyl (5-chloro-8-quinolinoxy)acetate (S2-7), 2-(2-propylideneiminoxy)-1-ethyl (5-chloro-8-quinolinoxy)acetate (S2-8), 2-oxoprop-1-yl (5-chloro-8-quinolinoxy)acetate (S2-9) and related compounds, as described in EP-A-86 750, EP-A-94 349 and EP-A-191 736 or EP-A-0 492 366, and also (5-chloro-8-quinolinoxy)acetic acid (S2-10), hydrates and salts thereof, for example the lithium, sodium, potassium, calcium, magnesium, aluminum, iron, ammonium, quaternary ammonium, sulfonium or phosphonium salts thereof, as described in WO-A-2002/34048;
      b) compounds of the (5-chloro-8-quinolinoxy)malonic acid type (S2^{b}), preferably compounds such as diethyl (5-chloro-8-quinolinoxy)malonate, diallyl (5-chloro-8-quinolinoxy)malonate, methyl ethyl (5-chloro-8-quinolinoxy)malonate and related compounds as described in EP-A-0 582 198.
   S3) Compounds of the formula (S3) 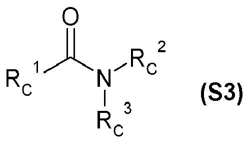 where the symbols and indices are each defined as follows:
      - R_{C}¹: is (C₁-C₄)-alkyl, (C₁-C₄)-haloalkyl, (C₂-C₄)-alkenyl, (C₂-C₄)-haloalkenyl, (C₃-C₇)-cycloalkyl, preferably dichloromethyl;
      - R_{C}², R_{C}³: are the same or different and are each hydrogen, (C₁-C₄)-alkyl, (C₂-C₄)-alkenyl, (C₂-C₄)-alkynyl, (C₁-C₄)-haloalkyl, (C₂-C₄)-haloalkenyl, (C₁-C₄)-alkylcarbamoyl-(C₁-C₄)-alkyl, (C₂-C₄)-alkenylcarbamoyl-(C₁-C₄)-alkyl, (C₁-C₄)-alkoxy-(C₁-C₄)-alkyl, dioxolanyl-(C₁-C₄)-alkyl, thiazolyl, furyl, furylalkyl, thienyl, piperidyl, substituted or unsubstituted phenyl, or R_{c}² and R_{c}³ together form a substituted or unsubstituted heterocyclic ring, preferably an oxazolidine, thiazolidine, piperidine, morpholine, hexahydropyrimidine or benzoxazine ring; preferably: active ingredients of the dichloroacetamide type, which are frequently used as pre-emergence safeners (soil-acting safeners), for example "dichlormid" (N,N-diallyl-2,2-dichloroacetamide) (S3-1), "R-29148" (3-dichloroacetyl-2,2,5-trimethyl-1,3-oxazolidine) from Stauffer (S3-2), "R-28725" (3-dichloroacetyl-2,2-dimethyl-1,3-oxazolidine) from Stauffer (S3-3), "benoxacor"(4-dichloroacetyl-3,4-dihydro-3-methyl-2H-1,4-benzoxazine) (S3-4), "PPG-1292" (N-allyl-N-[(1,3-dioxolan-2-yl)methyl]dichloroacetamide) from PPG Industries (S3-5), "DKA-24" (N-allyl-N-[(allylaminocarbonyl)methyl]dichloroacetamide) from Sagro-Chem (S3-6), "AD-67" or "MON 4660" (3-dichloroacetyl-1-oxa-3-azaspiro[4,5]decane) from Nitrokemia or Monsanto (S3-7), "TI-35" (1-dichloroacetylazepane) from TRI-Chemical RT (S3-8), "diclonon" (dicyclonone) or "BAS145138" or "LAB145138" (S3-9) ((RS)-1-dichloroacetyl-3,3,8a-trimethylperhydropyrrolo[1,2-a]pyrimidin-6-one) from BASF, "furilazole" or "MON 13900" ((RS)-3-dichloroacetyl-5-(2-furyl)-2,2-dimethyloxazolidine) (S3-10); and the (R) isomer thereof (S3-11).
   S4) N-Acylsulfonamides of the formula (S4) and salts thereof 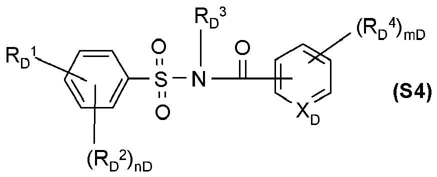 where the symbols and indices are each defined as follows:
      - X_{D}: is CH or N;
      - R_{D}¹: is CO-NR_{D}⁵R_{D}⁶ or NHCO-R_{D}⁷;
      - R_{D}²: is halogen, (C₁-C₄)-haloalkyl, (C₁-C₄)-haloalkoxy, nitro, (C₁-C₄)-alkyl, (C₁-C₄)-alkoxy, (C₁-C₄)-alkylsulfonyl, (C₁-C₄)-alkoxycarbonyl or (C₁-C₄)-alkylcarbonyl;
      - R_{D}³: is hydrogen, (C₁-C₄)-alkyl, (C₂-C₄)-alkenyl or (C₂-C₄)-alkynyl;
      - R_{D}⁴: is halogen, nitro, (C₁-C₄)-alkyl, (C₁-C₄)-haloalkyl, (C₁-C₄)-haloalkoxy, (C₃-C₆)-cycloalkyl, phenyl, (C₁-C₄)-alkoxy, cyano, (C₁-C₄)-alkylthio, (C₁-C₄)-alkylsulfinyl, (C₁-C₄)-alkylsulfonyl, (C₁-C₄)-alkoxycarbonyl or (C₁-C₄)-alkylcarbonyl;
      - R_{D}⁵: is hydrogen, (C₁-C₆)-alkyl, (C₃-C₆)-cycloalkyl, (C₂-C₆)-alkenyl, (C₂-C₆)-alkynyl, (C₅-C₆)-cycloalkenyl, phenyl or 3- to 6-membered heterocyclyl containing v_{D} heteroatoms from the group of nitrogen, oxygen and sulfur, where the seven latter radicals are substituted by v_{D} substituents from the group of halogen, (C₁-C₆)-alkoxy, (C₁-C₆)-haloalkoxy, (C₁-C₂)-alkylsulfinyl, (C₁-C₂)-alkylsulfonyl, (C₃- C₆)-cycloalkyl, (C₁-C₄)-alkoxycarbonyl, (C₁-C₄)-alkylcarbonyl and phenyl, and in the case of cyclic radicals also (C₁-C₄)-alkyl and (C₁-C₄)-haloalkyl;
      - R_{D}⁶: is hydrogen, (C₁-C₆)-alkyl, (C₂-C₆)-alkenyl or (C₂-C₆)-alkynyl, where the three latter radicals are substituted by v_{D} radicals from the group consisting of halogen, hydroxy, (C₁-C₄)-alkyl, (C₁-C₄)-alkoxy and (C₁-C₄)-alkylthio, or
      - R_{D}⁵ and R_{D}⁶: together with the nitrogen atom bearing them form a pyrrolidinyl or piperidinyl radical;
      - R_{D}⁷: is hydrogen, (C₁-C₄)-alkylamino, di-(C₁-C₄)-alkylamino, (C₁-C₆)-alkyl, (C₃-C₆)-cycloalkyl, where the 2 latter radicals are substituted by v_{D} substituents from the group of halogen, (C₁-C₄)-alkoxy, (C₁-C₆)-haloalkoxy and (C₁-C₄)-alkylthio, and in the case of cyclic radicals also (C₁-C₄)-alkyl and (C₁-C₄)-haloalkyl;
      - n_{D}: is 0, 1 or 2;
      - m_{D}: is 1 or 2;
      - v_{D}: is 0, 1, 2 or 3;
      among these, preference is given to compounds of the N-acylsulfonamide type, for example of the formula (S4^{a}) below, which are known, for example, from WO-A-97/45016 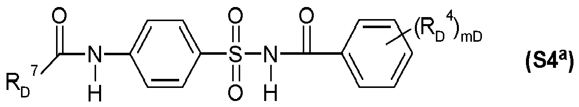 in which
      - R_{D}⁷: is (C₁-C₆)-alkyl, (C₃-C₆)-cycloalkyl, where the 2 latter radicals are substituted by v_{D} substituents from the group consisting of halogen, (C₁-C₄)-alkoxy, (C₁-C₆)-haloalkoxy and (C₁-C₄)-alkylthio and, in the case of cyclic radicals, also (C₁-C₄)-alkyl and (C₁-C₄)-haloalkyl;
      - R_{D}⁴: is halogen, (C₁-C₄)-alkyl, (C₁-C₄)-alkoxy, CF₃;
      - m_{D}: is 1 or 2;
      - v_{D}: is 0, 1, 2 or 3;
      and also to acylsulfamoylbenzamides, for example of the formula (S4^{b}) below, which are known, for example, from WO-A-99/16744, 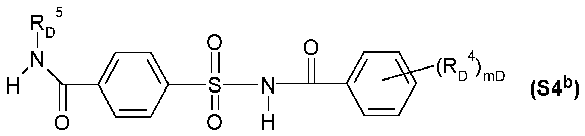 for example those in which
      - R_{D}⁵ =: cyclopropyl and (R_{D}⁴) = 2-OMe ("cyprosulfamide", S4-1),
      - R_{D}⁵ =: cyclopropyl and (R_{D}⁴) = 5-Cl-2-OMe (S4-2),
      - R_{D}⁵ =: ethyl and (R_{D}⁴) = 2-OMe (S4-3),
      - R_{D}⁵ =: isopropyl and (R_{D}⁴) = 5-Cl-2-OMe (S4-4) and
      - R_{D}⁵ =: isopropyl and (R_{D}⁴) = 2-OMe (S4-5);
      and to compounds of the N-acylsulfamoylphenylurea type, of the formula (S4^{c}), which are known, for example, from EP-A-365484, 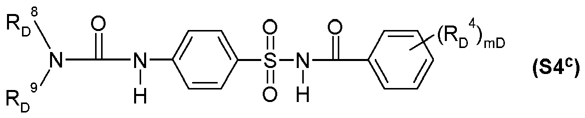 in which
      - R_{D}⁸ and R_{D}⁹: are each independently hydrogen, (C₁-C₈)-alkyl, (C₃-C₈)-cycloalkyl, (C₃-C₆)-alkenyl, (C₃-C₆)-alkynyl,
      - R_{D}⁴: is halogen, (C₁-C₄)-alkyl, (C₁-C₄)-alkoxy, CF₃,
      - m_{D}: is 1 or 2;
      for example
      1-[4-(N-2-methoxybenzoylsulfamoyl)phenyl]-3-methylurea,
      1-[4-(N-2-methoxybenzoylsulfamoyl)phenyl]-3,3-dimethylurea,
      1-[4-(N-4,5-dimethylbenzoylsulfamoyl)phenyl]-3-methylurea.
   S5) Active ingredients from the class of the hydroxyaromatics and the aromatic-aliphatic carboxylic acid derivatives (S5), for example ethyl 3,4,5-triacetoxybenzoate, 3,5-dimethoxy-4-hydroxybenzoic acid, 3,5-dihydroxybenzoic acid, 4-hydroxysalicylic acid, 4-fluorosalicyclic acid, 2-hydroxycinnamic acid, 2,4-dichlorocinnamic acid, as described in WO-A-2004/084631, WO-A-2005/015994, WO-A-2005/016001.
   S6) Active ingredients from the class of the 1,2-dihydroquinoxalin-2-ones (S6), for example 1-methyl-3-(2-thienyl)-1,2-dihydroquinoxalin-2-one, 1-methyl-3-(2-thienyl)-1,2-dihydroquinoxaline-2-thione, 1-(2-aminoethyl)-3-(2-thienyl)-1,2-dihydroquinoxalin-2-one hydrochloride, 1-(2-methylsulfonylaminoethyl)-3-(2-thienyl)-1,2-dihydroquinoxalin-2-one, as described in WO-A-2005/112630.
   S7) Compounds of the formula (S7), as described in WO-A-1998/38856, 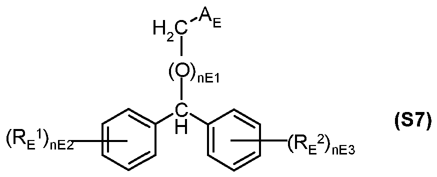 where the symbols and indices are each defined as follows:
      - R_{E}1, R_{E}²: are each independently halogen, (C₁-C₄)alkyl, (C₁-C₄)alkoxy, (C₁-C₄)haloalkyl, (C₁-C₄)alkylamino, di-(C₁-C₄)alkylamino, nitro;
      - A_{E}: is COOR_{E}³ or COSR_{E}⁴
      - R_{E}³, R_{E}⁴: are each independently hydrogen, (C₁-C₄)alkyl, (C₂-C₆)alkenyl, (C₂-C₄)alkynyl, cyanoalkyl, (C₁-C₄)haloalkyl, phenyl, nitrophenyl, benzyl, halobenzyl, pyridinylalkyl and alkylammonium,
      - n_{E}1: is 0 or 1;
      - n_{E}², n_{E}³: are each independently 0, 1 or 2,
      preferably diphenylmethoxyacetic acid, ethyl diphenylmethoxyacetate, methyl diphenylmethoxyacetate (CAS reg. no. 41858-19-9) (S7-1).
   S8) Compounds of the formula (S8), as described in WO-A-98/27049, in which
      - X_{F}: is CH or N,
      - n_{F}: if X_{F}=N is an integer from 0 to 4 and if X_{F}=CH is an integer from 0 to 5,
      - R_{F}¹: is halogen, (C₁-C₄)-alkyl, (C₁-C₄)-haloalkyl, (C₁-C₄)-alkoxy, (C₁-C₄)-haloalkoxy, nitro, (C₁-C₄)-alkylthio, (C₁-C₄)-alkylsulfonyl, (C₁-C₄)-alkoxycarbonyl, optionally substituted phenyl, optionally substituted phenoxy,
      - R_{F}²: is hydrogen or (C₁-C₄)-alkyl,
      - R_{F}³: is hydrogen, (C₁-C₈)-alkyl, (C₂-C₄)-alkenyl, (C₂-C₄)-alkynyl or aryl, where each of the carbon-containing radicals mentioned above is unsubstituted or substituted by one or more, preferably by up to three, identical or different radicals from the group consisting of halogen and alkoxy; or salts thereof,
      preferably compounds in which
      - X_{F}: is CH,
      - n_{F}: is an integer from 0 to 2,
      - R_{F}¹: is halogen, (C₁-C₄)-alkyl, (C₁-C₄)-haloalkyl, (C₁-C₄)-alkoxy, (C₁-C₄)-haloalkoxy,
      - R_{F}²: is hydrogen or (C₁-C₄)-alkyl,
      - R_{F}³: is hydrogen, (C₁-C₈)-alkyl, (C₂-C₄)-alkenyl, (C₂-C₄)-alkynyl or aryl, where each of the aforementioned carbon-containing radicals is unsubstituted or substituted by one or more, preferably by up to three, identical or different radicals from the group consisting of halogen and alkoxy; or salts thereof.
   S9) Active ingredients from the class of the 3-(5-tetrazolylcarbonyl)-2-quinolones (S9), for example 1,2-dihydro-4-hydroxy-1-ethyl-3-(5-tetrazolylcarbonyl)-2-quinolone (CAS reg. no.: 219479-18-2), 1,2-dihydro-4-hydroxy-1-methyl-3-(5-tetrazolylcarbonyl)-2-quinolone (CAS reg. no.: 95855-00-8), as described in WO-A-1999/000020.
   S10) Compounds of the formula (S10^{a}) or (S10^{b})
      as described in WO-A-2007/023719 and WO-A-2007/023764 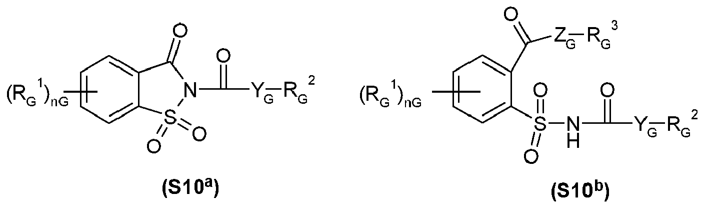 in which
      - R_{G}¹: is halogen, (C₁-C₄)-alkyl, methoxy, nitro, cyano, CF₃, OCF₃
      - Y_{G}, Z_{G}: are each independently O or S,
      - n_{G}: is an integer from 0 to 4,
      - R_{G}²: is (C₁-C₁₆)-alkyl, (C₂-C₆)-alkenyl, (C₃-C₆)-cycloalkyl, aryl; benzyl, halobenzyl,
      - R_{G}³: is hydrogen or (C₁-C₆)-alkyl.
   S11) Active ingredients of the oxyimino compound type (S11), which are known as seed-dressing compositions, for example "oxabetrinil" ((Z)-1,3-dioxolan-2-yl-methoxyimino(phenyl)acetonitrile) (S11-1), which is known as a seed-dressing safener for millet against damage by metolachlor, "fluxofenim" (1-(4-chlorophenyl)-2,2,2-trifluoro-1-ethanone O-(1,3-dioxolan-2-ylmethyl) oxime) (S11-2), which is known as a seed-dressing safener for millet against damage by metolachlor, and "cyometrinil" or "CGA-43089" ((Z)-cyanomethoxy-imino(phenyl)acetonitrile) (S11-3), which is known as a seed-dressing safener for millet against damage by metolachlor.
   S12) Active ingredients from the class of the isothiochromanones (S12), for example methyl [(3-oxo-1H-2-benzothiopyran-4(3H)-ylidene)methoxy]acetate (CAS reg. no.: 205121-04-6) (S12-1) and related compounds from WO-A-1998/13361.
   S13) One or more compounds from group (S13): "naphthalic anhydride" (1,8-naphthalenedicarboxylic anhydride) (S13-1), which is known as a seed-dressing safener for corn against damage by thiocarbamate herbicides, "fenclorim" (4,6-dichloro-2-phenylpyrimidine) (S13-2), which is known as a safener for pretilachlor in sown rice, "flurazole" (benzyl 2-chloro-4-trifluoromethyl-1,3-thiazole-5-carboxylate) (S13-3), which is known as a seed-dressing safener for millet against damage by alachlor and metolachlor, "CL 304415" (CAS reg. no. 31541-57-8) (4-carboxy-3,4-dihydro-2H-1-benzopyran-4-acetic acid) (S13-4) from American Cyanamid, which is known as a safener for corn against damage by imidazolinones, "MG 191" (CAS reg. no. 96420-72-3) (2-dichloromethyl-2-methyl-1,3-dioxolane) (S13-5) from Nitrokemia, which is known as a safener for corn, "MG-838" (CAS reg. no. 133993-74-5) (2-propenyl 1-oxa-4-azaspiro[4.5]decane-4-carbodithioate) (S13-6) from Nitrokemia, "disulfoton" (O,O-diethyl S-2-ethylthioethyl phosphorodithioate) (S13-7), "dietholate" (O,O-diethyl O-phenylphosphorothioate) (S13-8), "mephenate" (4-chlorophenyl methyl carbamate) (S13-9).
   S14) Active ingredients which, in addition to herbicidal action against harmful plants, also have safener action on crop plants such as rice, for example "dimepiperate" or "MY-93" (S-1-methyl-1-phenylethylpiperidine-1-carbothioate), which is known as a safener for rice against damage by the herbicide molinate, "daimuron" or "SK 23" (1-(1-methyl-1-phenylethyl)-3-p-tolylurea), which is known as a safener for rice against damage by the herbicide imazosulfuron, "cumyluron" = "JC-940" (3-(2-chlorophenylmethyl)-1-(1-methyl-1-phenylethyl)urea, see JP-A-60087254), which is known as a safener for rice against damage by some herbicides, "methoxyphenon" or "NK 049" (3,3'-dimethyl-4-methoxybenzophenone), which is known as a safener for rice against damage by some herbicides, "CSB" (1-bromo-4-(chloromethylsulfonyl)benzene) from Kumiai, (CAS reg. no. 54091-06-4), which is known as a safener against damage by some herbicides in rice.
   S15) Compounds of the formula (S15) or tautomers thereof
      as described in WO-A-2008/131861 and WO-A-2008/131860 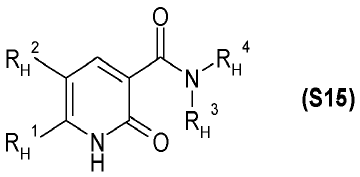 in which
      - R_{H}¹: is a (C₁-C₆)haloalkyl radical and
      - R_{H}²: is hydrogen or halogen and
      - R_{H}³, R_{H}⁴: are each independently hydrogen, (C₁-C₁₆)alkyl, (C₂-C₁₆)alkenyl or (C₂-C₁₆)alkynyl, where each of the 3 latter radicals is unsubstituted or substituted by one or more radicals from the group of halogen, hydroxyl, cyano, (C₁-C₄)alkoxy, (C₁-C₄)haloalkoxy, (C₁-C₄)alkylthio, (C₁-C₄)alkylamino, di[(C₁-C₄)alkyl]amino, [(C₁-C₄)alkoxy]carbonyl, [(C₁-C₄)haloalkoxy]carbonyl, (C₃-C₆)cycloalkyl which is unsubstituted or substituted, phenyl which is unsubstituted or substituted, and heterocyclyl which is unsubstituted or substituted, or (C₃-C₆)cycloalkyl, (C₄-C₆)cycloalkenyl, (C₃-C₆)cycloalkyl which is fused on one side of the ring to a 4- to 6-membered saturated or unsaturated carbocyclic ring, or (C₄-C₆)cycloalkenyl which is fused on one side of the ring to a 4- to 6-membered saturated or unsaturated carbocyclic ring, where each of the 4 latter radicals is unsubstituted or substituted by one or more radicals from the group of halogen, hydroxyl, cyano, (C₁-C₄)alkyl, (C₁-C₄)haloalkyl, (C₁-C₄)alkoxy, (C₁-C₄)haloalkoxy, (C₁-C₄)alkylthio, (C₁-C₄)alkylamino, di[(C₁-C₄)alkyl]amino, [(C₁-C₄)alkoxy]carbonyl, [(C₁-C₄)haloalkoxy]carbonyl, (C₃-C₆)cycloalkyl which is unsubstituted or substituted, phenyl which is unsubstituted or substituted, and heterocyclyl which is unsubstituted or substituted,
      or
      - R_{H}³: is (C₁-C₄)-alkoxy, (C₂-C₄)alkenyloxy, (C₂-C₆)alkynyloxy or (C₂-C₄)haloalkoxy and
      - R_{H}⁴: is hydrogen or (C₁-C₄)-alkyl or
      - R_{H}³ and R_{H}⁴: together with the directly bonded nitrogen atom are a four- to eight-membered heterocyclic ring which, in addition to the nitrogen atom, may also contain further ring heteroatoms, preferably up to two further ring heteroatoms from the group of N, O and S, and which is unsubstituted or substituted by one or more radicals from the group of halogen, cyano, nitro, (C₁-C₄)alkyl, (C₁-C₄)haloalkyl, (C₁-C₄)alkoxy, (C₁-C₄)haloalkoxy and (C₁-C₄)alkylthio.
   S16) Active ingredients which are used primarily as herbicides but also have safener action on crop plants, for example (2,4-dichlorophenoxy)acetic acid (2,4-D), (4-chlorophenoxy)acetic acid, (R,S)-2-(4-chloro-o-tolyloxy)propionic acid (mecoprop), 4-(2,4-dichlorophenoxy)butyric acid (2,4-DB), (4-chloro-o-tolyloxy)acetic acid (MCPA), 4-(4-chloro-o-tolyloxy)butyric acid, 4-(4-chlorophenoxy)butyric acid, 3,6-dichloro-2-methoxybenzoic acid (dicamba), 1-(ethoxycarbonyl)ethyl 3,6-dichloro-2-methoxybenzoate (lactidichlor-ethyl).
Substances which influence plant maturity:
   Usable combination partners for the compounds according to formula (I) when used according to present invention in mixture formulations or in a tankmix are, for example, known active ingredients based on inhibition of, for example, 1-aminocyclopropane-1-carboxylate synthase, 1-aminocyclopropane-1-carboxylate oxidase and the ethylene receptors, e.g. ETR1, ETR2, ERS1, ERS2 or EIN4, as described, for example, in Biotechn. Adv. 2006, 24, 357-367; Bot. Bull. Acad. Sin. 199, 40, 1-7 or Plant Growth Reg. 1993, 13, 41-46 and literature cited therein.
   Examples of known substances which influence plant maturity and can be combined with the inventive compounds include the active ingredients which follow (the compounds are designated by the "common name" according to the International Organization for Standardization (ISO) or by the chemical name or by the code number) and always encompass all use forms, such as acids, salts, esters and isomers, such as stereoisomers and optical isomers. By way of example, one use form and in some cases a plurality of use forms are mentioned:
   rhizobitoxine, 2-aminoethoxyvinylglycine (AVG), methoxyvinylglycine (MVG), vinylglycine, aminooxyacetic acid, sinefungin, S-adenosylhomocysteine, 2-keto-4-methyl thiobutyrate, 2-(methoxy)-2-oxoethyl (isopropylidene)aminooxyacetate, 2-(hexyloxy)-2-oxoethyl (isopropylidene)aminooxyacetate, 2-(isopropyloxy)-2-oxoethyl (cyclohexylidene)aminooxyacetate, putrescine, spermidine, spermine, 1,8-diamino-4-aminoethyloctane, L-canaline, daminozide, methyl 1-aminocyclopropyl-1-carboxylate, N-methyl-1-aminocyclopropyl-1-carboxylic acid, 1-aminocyclopropyl-1-carboxamide, substituted 1-aminocyclopropyl-1-carboxylic acid derivatives as described in DE3335514, EP30287, DE2906507 or US5123951, 1-aminocyclopropyl-1-hydroxamic acid, 1-methylcyclopropene, 3-methylcyclopropene, 1-ethylcyclopropene, 1-n-propylcyclopropene, 1-cyclopropenylmethanol, carvone, eugenol, sodium cycloprop-1-en-1-ylacetate, sodium cycloprop-2-en-1-ylacetate, sodium 3-(cycloprop-2-en-1-yl)propanoate, sodium 3-(cycloprop-1-en-1-yl)propanoate, jasmonic acid, methyl jasmonate, ethyl jasmonate.
Substances which influence plant health and germination:
   Usable combination partners for the inventive compounds in mixture formulations or in a tankmix are, for example, known active ingredients that influence plant health or germination. Examples of known substances influencing plant health and germination and can be combined with the inventive compounds include the active ingredients which follow (the compounds are designated by the "common name" according to the International Organization for Standardization (ISO) or by the chemical name or by the code number) and always encompass all use forms, such as acids, salts, esters and isomers, such as stereoisomers and optical isomers. By way of example, one use form and in some cases a plurality of use forms are mentioned): sarcosine, phenyl alanine, tryptophan, N'-methyl-1-phenyl-1-N,N-diethylaminomethanesulfonamide, Apiogalacturonane as described in WO2010017956, 4-oxo-4-[(2-phenylethyl)amino]butanoic acid, 4-{[2-(1H-indole-3-yl)ethyl]amino}-4-oxobutanoic acid, 4-[(3-methylpyridin-2-yl)amino]-4-oxobutanoic acid, allantoine, 5-amino levulinic acid, (2S,3R)-2-(3,4-dihydroxyphenyl)-3,4-dihydro-2H-chromene-3,5,7-triol and structurally related catechines as described in WO2010122956, 2-Hydroxy-4-(methylsulfanyl)butanoic acid, (3E,3αR,8βS)-3-({[(2R)-4-methyl-5-oxo-2,5-dihydrofuran-2-yl]oxy}methylene)-3,3a,4,8β-tetrahydro-2H-indeno[1,2-b]furan-2-one and related lactons as described in EP2248421, abscisic acid, (2Z,4E)-5-[6-Ethynyl-1-hydroxy-2,6-dimethyl-4-oxocyclohex-2-en-1-yl]-3-methylpenta-2,4-dienoic acid, Methyl-(2Z,4E)-5-[6-ethinyl-1-hydroxy-2,6-dimethyl-4-oxocyclohex-2-en-1-yl]-3-methylpenta-2,4-dienoate
Herbicides or plant growth regulators:
   Usable combination partners for the inventive use of compounds of formula (I) in mixture formulations or in a tankmix are, for example, known active ingredients based on inhibition of, for example, acetolactate synthase, acetyl-CoA carboxylase, cellulose synthase, enolpyruvylshikimate-3-phosphate synthase, glutamine synthetase, p-hydroxyphenylpyruvate dioxygenase, phytoendesaturase, photosystem I, photosystem II, protoporphyrinogen oxidase, gibberellin biosynthesis, as described, for example, in Weed Research 26 (1986) 441-445 or "The Pesticide Manual", 14th edition, The British Crop Protection Council and the Royal Soc. of Chemistry, 2006 and literature cited therein.
      Examples of known herbicides or plant growth regulators which can be combined with the inventive compounds include the active ingredients which follow (the compounds are designated by the "common name" according to the International Organization for Standardization (ISO) or by the chemical name or by the code number) and always encompass all use forms, such as acids, salts, esters and isomers, such as stereoisomers and optical isomers. By way of example, one use form and in some cases a plurality of use forms are mentioned:
      acetochlor, acibenzolar, acibenzolar-S-methyl, acifluorfen, acifluorfen-sodium, aclonifen, alachlor, allidochlor, alloxydim, alloxydim-sodium, ametryne, amicarbazone, amidochlor, amidosulfuron, aminocyclopyrachlor, aminopyralid, amitrole, ammonium sulfamate, ancymidol, anilofos, asulam, atrazine, azafenidin, azimsulfuron, aziprotryne, beflubutamid, benazolin, benazolin-ethyl, bencarbazone, benfluralin, benfuresate, bensulide, bensulfuron, bensulfuron-methyl, bentazone, benzfendizone, benzobicyclon, benzofenap, benzofluor, benzoylprop, bicyclopyrone, bifenox, bilanafos, bilanafos-sodium, bispyribac, bispyribac-sodium, bromacil, bromobutide, bromofenoxim, bromoxynil, bromuron, buminafos, busoxinone, butachlor, butafenacil, butamifos, butenachlor, butralin, butroxydim, butylate, cafenstrole, carbetamide, carfentrazone, carfentrazone-ethyl, chlomethoxyfen, chloramben, chlorazifop, chlorazifop-butyl, chlorbromuron, chlorbufam, chlorfenac, chlorfenac-sodium, chlorfenprop, chlorflurenol, chlorflurenol-methyl, chloridazon, chlorimuron, chlorimuron-ethyl, chlormequat-chloride, chlornitrofen, chlorophthalim, chlorthal-dimethyl, chlortoluron, chlorsulfuron, cinidon, cinidon-ethyl, cinmethylin, cinosulfuron, clethodim, clodinafop, clodinafop-propargyl, clofencet, clomazone, clomeprop, cloprop, clopyralid, cloransulam, cloransulam-methyl, cumyluron, cyanamide, cyanazine, cyclanilide, cycloate, cyclosulfamuron, cycloxydim, cycluron, cyhalofop, cyhalofop-butyl, cyperquat, cyprazine, cyprazole, 2,4-D, 2,4-DB, daimuron/dymron, dalapon, daminozide, dazomet, n-decanol, desmedipham, desmetryn, detosyl-pyrazolate (DTP), diallate, dicamba, dichlobenil, dichlorprop, dichlorprop-P, diclofop, diclofop-methyl, diclofop-P-methyl, diclosulam, diethatyl, diethatyl-ethyl, difenoxuron, difenzoquat, diflufenican, diflufenzopyr, diflufenzopyr-sodium, dimefuron, dikegulac-sodium, dimefuron, dimepiperate, dimethachlor, dimethametryn, dimethenamid, dimethenamid-P, dimethipin, dimetrasulfuron, dinitramine, dinoseb, dinoterb, diphenamid, dipropetryn, diquat, diquat-dibromide, dithiopyr, diuron, DNOC, eglinazine-ethyl, endothal, EPTC, esprocarb, ethalfluralin, ethametsulfuron, ethametsulfuron-methyl, ethephon, ethidimuron, ethiozin, ethofumesate, ethoxyfen, ethoxyfen-ethyl, ethoxysulfuron, etobenzanid, F-5331, i.e. N-[2-chloro-4-fluoro-5-[4-(3-fluoropropyl)-4,5-dihydro-5-oxo-1H-tetrazol-1-yl]phenyl]ethanesulfonamide, F-7967, i.e. 3-[7-chloro-5-fluoro-2-(trifluoromethyl)-1H-benzimidazol-4-yl]-1-methyl-6-(trifluoromethyl)pyrimidine-2,4(1H,3H)-dione, fenoprop, fenoxaprop, fenoxaprop-P, fenoxaprop-ethyl, fenoxaprop-P-ethyl, fenoxasulfone, fentrazamide, fenuron, flamprop, flamprop-M-isopropyl, flamprop-M-methyl, flazasulfuron, florasulam, fluazifop, fluazifop-P, fluazifop-butyl, fluazifop-P-butyl, fluazolate, flucarbazone, flucarbazone-sodium, flucetosulfuron, fluchloralin, flufenacet (thiafluamide), flufenpyr, flufenpyr-ethyl, flumetralin, flumetsulam, flumiclorac, flumiclorac-pentyl, flumioxazin, flumipropyn, fluometuron, fluorodifen, fluoroglycofen, fluoroglycofen-ethyl, flupoxam, flupropacil, flupropanate, flupyrsulfuron, flupyrsulfuron-methyl-sodium, flurenol, flurenol-butyl, fluridone, flurochloridone, fluroxypyr, fluroxypyr-meptyl, flurprimidol, flurtamone, fluthiacet, fluthiacet-methyl, fluthiamide, fomesafen, foramsulfuron, forchlorfenuron, fosamine, furyloxyfen, gibberellic acid, glufosinate, glufosinate-ammonium, glufosinate-P, glufosinate-P-ammonium, glufosinate-P-sodium, glyphosate, glyphosate-isopropylammonium, H-9201, i.e. O-(2,4-dimethyl-6-nitrophenyl) O-ethyl isopropylphosphoramidothioate, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e. 1-(dimethoxyphosphoryl)ethyl (2,4-dichlorophenoxy)acetate, imazamethabenz, imazamethabenz-methyl, imazamox, imazamox-ammonium, imazapic, imazapyr, imazapyr-isopropylammonium, imazaquin, imazaquin-ammonium, imazethapyr, imazethapyr-ammonium, imazosulfuron, inabenfide, indanofan, indaziflam, indoleacetic acid (IAA), 4-indol-3-ylbutyric acid (IBA), iodosulfuron, iodosulfuron-methyl-sodium, ioxynil, ipfencarbazone, isocarbamid, isopropalin, isoproturon, isouron, isoxaben, isoxachlortole, isoxaflutole, isoxapyrifop, KUH-043, i.e. 3-({[5-(difluoromethyl)-1-methyl-3-(trifluoromethyl)-1H-pyrazol-4-yl]methyl}sulfonyl)-5,5-dimethyl-4,5-dihydro-1,2-oxazole, karbutilate, ketospiradox, lactofen, lenacil, linuron, maleic hydrazide, MCPA, MCPB, MCPB-methyl, -ethyl and - sodium, mecoprop, mecoprop-sodium, mecoprop-butotyl, mecoprop-P-butotyl, mecoprop-P-dimethylammonium, mecoprop-P-2-ethylhexyl, mecoprop-P-potassium, mefenacet, mefluidide, mepiquat-chloride, mesosulfuron, mesosulfuron-methyl, mesotrione, methabenzthiazuron, metam, metamifop, metamitron, metazachlor, metazasulfuron, methazole, methiopyrsulfuron, methiozolin, methoxyphenone, methyldymron, 1-methylcyclopropene, methyl isothiocyanate, metobenzuron, metobromuron, metolachlor, S-metolachlor, metosulam, metoxuron, metribuzin, metsulfuron, metsulfuron-methyl, molinate, monalide, monocarbamide, monocarbamide dihydrogensulfate, monolinuron, monosulfuron, monosulfuron ester, monuron, MT-128, i.e. 6-chloro-N-[(2E)-3-chloroprop-2-en-1-yl]-5-methyl-N-phenylpyridazine-3-amine, MT-5950, i.e. N-[3-chloro-4-(1-methylethyl)phenyl]-2-methylpentanamide, NGGC-011, naproanilide, napropamide, naptalam, NC-310, i.e. 4-(2,4-dichlorobenzoyl)-1-methyl-5-benzyloxypyrazole, neburon, nicosulfuron, nipyraclofen, nitralin, nitrofen, nitrophenolate-sodium (isomer mixture), nitrofluorfen, nonanoic acid, norflurazon, orbencarb, orthosulfamuron, oryzalin, oxadiargyl, oxadiazon, oxasulfuron, oxaziclomefone, oxyfluorfen, paclobutrazole, paraquat, paraquat dichloride, pelargonic acid (nonanoic acid), pendimethalin, pendralin, penoxsulam, pentanochlor, pentoxazone, perfluidone, pethoxamid, phenisopham, phenmedipham, phenmedipham-ethyl, picloram, picolinafen, pinoxaden, piperophos, pirifenop, pirifenop-butyl, pretilachlor, primisulfuron, primisulfuron-methyl, probenazole, profluazole, procyazine, prodiamine, prifluraline, profoxydim, prohexadione, prohexadione-calcium, prohydrojasmone, prometon, prometryn, propachlor, propanil, propaquizafop, propazine, propham, propisochlor, propoxycarbazone, propoxycarbazone-sodium, propyrisulfuron, propyzamide, prosulfalin, prosulfocarb, prosulfuron, prynachlor, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, secbumeton, sethoxydim, siduron, simazine, simetryn, SN-106279, i.e. methyl (2R)-2-({7-[2-chloro-4-(trifluoromethyl)phenoxy]-2-naphthyl}oxy)propanoate, sulcotrione, sulfallate (CDEC), sulfentrazone, sulfometuron, sulfometuron-methyl, sulfosate (glyphosate-trimesium), sulfosulfuron, SYN-523, SYP-249, i.e. 1-ethoxy-3-methyl-1-oxobut-3-en-2-yl 5-[2-chloro-4-(trifluoromethyl)phenoxy]-2-nitrobenzoate, SYP-300, i.e. 1-[7-fluoro-3-oxo-4-(prop-2-yn-1-yl)-3,4-dihydro-2H-1,4-benzoxazin-6-yl]-3-propyl-2-thioxoimidazolidine-4,5-dione, tebutam, tebuthiuron, tecnazene, tefuryltrione, tembotrione, tepraloxydim, terbacil, terbucarb, terbuchlor, terbumeton, terbuthylazine, terbutryne, thenylchlor, thiafluamide, thiazafluron, thiazopyr, thidiazimin, thidiazuron, thiencarbazone, thiencarbazone-methyl, thifensulfuron, thifensulfuron-methyl, thiobencarb, tiocarbazil, topramezone, tralkoxydim, triallate, triasulfuron, triaziflam, triazofenamide, tribenuron, tribenuron-methyl, trichloroacetic acid (TCA), triclopyr, tridiphane, trietazine, trifloxysulfuron, trifloxysulfuron-sodium, trifluralin, triflusulfuron, triflusulfuron-methyl, trimeturon, trinexapac, trinexapac-ethyl, tritosulfuron, tsitodef, uniconazole, uniconazole-P, vernolate, ZJ-0862, i.e. 3,4-dichloro-N-{2-[(4,6-dimethoxypyrimidin-2-yl)oxy]benzyl}aniline, and the following compounds:

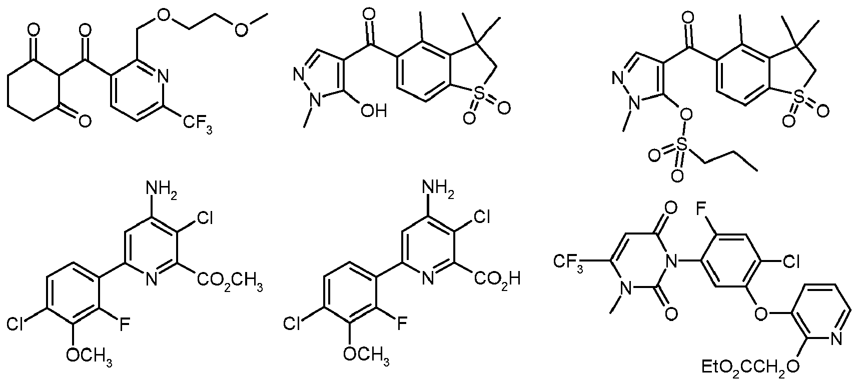

The invention is to be illustrated by the biological examples which follow, but without restricting it thereto.

### Biological experiments:

### Growth conditions

Arabidopsis (Arabidopsis thaliana - ecotype columbia [Col-0]) were grown in sterile in-vitro conditions on 0.5 Murashige-Skoog (Murashige and Skoog, 1962) with 1.2% glucose and 0.8% plant agar, grown in 80-100µE light, at 22-23°C and a long day regime (16h/8h) avoiding any kind of extraordinary environmental conditions. Compound 1-14 was added to the growth media to a final concentration of 42.5 nM, unless otherwise indicated.

### Growth analysis and statistics

Photographs of full non destructed plants were taken at the indicated time points and used to measure the total leaf area and rosette diameter with the ImageJ software, this data was subsequently used to calculate the leaf area of the plants. Plant fresh weight was measured by weighing pooled seedlings from each replicate plate at the end of the experiment. Statistical analyses were performed using linear-mixed models using the gls() and Ime() functions implemented in the nlme R package. Where applicable, experiment, block and plate effects were included as random effects and contrasts of interest were made based on treatment, stress and genotype.

ImageJ is a public domain, Java-based image processing program (cf. Collins TJ, BioTechniques 2007, 43 (1 Suppl), 25-30 and Eliceiri K, Rueden C, Photochem Photobiol 2005, 81 (5), 1116-22. ImageJ can be run as an online applet, a downloadable application, or on any computer with a Java 5 or later virtual machine. Downloadable distributions are available for Microsoft Windows, Mac OS, Mac OS X, Linux, and the Sharp Zaurus PDA. The source code for ImageJ is freely available. The nlme R package is a freely available language and environment for statistical computing and graphics which provides a wide variety of statistical and graphical techniques (http://www.r-project.org/).

Fluoroalkyl-substituted 2-amidobenzimidazole "1-14" (see Table 1) improves plant growth and size on plants growing in the absence of any kind of extraordinary environmental conditions. Arabidopsis plants were grown at on agar plates containing MS growth medium in the presence or absence of "1-14", as indicated in the methods. Plant total leaf area was compared after 14 days of growth by analyzing photographs of the individual plates. Statistical analysis was performed using a mixed model and leaf area was significantly increased by the addition of "1-14" (Table B1).

**Table B1. Treatment of leaves with Compound "1-14"**

| | Treatment means | | | |
|---|---|---|---|---|
| Phenotype | "1-14" | Control | Effect [abs.] | Effect [%] |
| Leaf area 14 days | 61.78 | 58.61 | 3.16 | 5.12 |

Similar results are also achieved with further compounds of the formula (I), also in the case of application to different plant species.

## Claims

1. The use of one or more fluoroalkyl-substituted 2-amidobenzimidazoles of formula (I) or agriculturally acceptable salts thereof in an effective plant growth regulating amount, 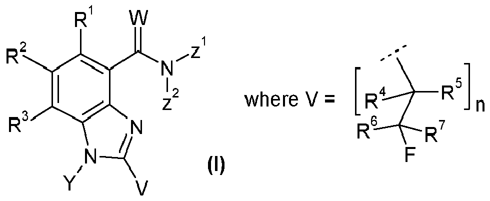 for the application to plants, to the seeds from which they grow or to the locus in which they grow in their normal habitat and in the absence of extraordinary environmental conditions for growth and/or yield increase
where
R¹, R², R³ are each independently H, halogen, branched or unbranched alkyl, cycloalkyl, alkenyl, alkynyl, aryl, arylalkyl, heteroaryl, alkoxyalkyl, alkylthio, fluoroalkylthio, haloalkyl, alkoxy, orhaloalkoxy;
R⁴ is H, unbranched alkyl, halogen, haloalkyl, branched alkyl, unbranched alkenyl, branched alkenyl, cycloalkyl, alkoxy, haloalkoxy, cycloalkylalkoxy, alkynylalkoxy, alkenylalkoxy, alkenyloxyalkoxy, alkyloxyalkoxy, alkylaminoalkoxy, bisalkylaminoalkoxy, or cycloalkylaminoalkoxy;
R⁵ is H, unbranched alkyl, halogen, haloalkyl, branched alkyl, cycloalkyl, cycloalkenyl, alkoxy, or haloalkoxy;
R⁶ is H, unbranched alkyl, halogen, haloalkyl, branched alkyl, cycloalkyl, cycloalkenyl, alkoxy, haloalkoxy, cycloalkylalkoxy, alkynylalkoxy, alkenylalkoxy, alkenyloxyalkoxy, alkyloxyalkoxy, alkylaminoalkoxy, bisalkylaminoalkoxy, or cycloalkylaminoalkoxy;
R⁷ is H, unbranched alkyl, halogen, haloalkyl, branched alkyl, cycloalkyl, cycloalkenyl, alkoxy, haloalkoxy, cycloalkylalkoxy, alkynylalkoxy, alkenylalkoxy, alkenyloxyalkoxy, alkyloxyalkoxy, alkylaminoalkoxy, bisalkylaminoalkoxy, or cycloalkylaminoalkoxy;
and
n is 0, 1, 2, 3, 4, 5, or 6;
W is oxygen, or sulfur;
Y is H, unbranched or branched alkyl, cycloalkyl, cycloalkylalkyl, cycloalkenyl, cyanoalkyl, unbranched or branched alkenylalkyl, branched or unbranched haloalkyl, alkynylalkyl, arylalkyl, heteroarylalkyl, alkylcarbonyl, cycloalkylcarbonyl, arylcarbonyl, arylalkylcarbonyl, alkoxycarbonyl, alkylsulfonyl, cycloalkylsulfonyl, arylsulfonyl, heteroarylsulfonyl, alkoxycarbonylcarbonyl, arylalkoxycarbonylcarbonyl, alkylaminothiocarbonyl, alkylaminocarbonyl, or alkoxyalkyl;
Z¹ is H, unbranched or branched alkyl, cycloalkyl, halogen, unbranched or branched alkylalkenyl, branched or unbranched haloalkyl, alkynyl, alkenyl, cyanoalkyl, arylalkyl, heteroarylalkyl, alkylcarbonyl, alkoxycarbonyl, alkylsulfonyl, arylsulfonyl, cycloalkylsulfonyl, alkylsulfinyl, arylsulfinyl, cycloalkylsulfinyl, or alkoxycarbonylalkyl;
and
Z² is H, unbranched or branched alkyl, cycloalkyl, unbranched or branched alkylalkenyl, branched or unbranched haloalkyl, alkynyl, alkenyl, cyanoalkyl, arylalkyl, heteroarylalkyl, alkylcarbonyl, or alkoxycarbonyl;
or Z¹ and Z² together are part of an optionally substituted sulfilimine or amidine group or form an iminophosphorane.

2. The use as claimed in claim 1, where, in formula (I),
R¹, R², R³ are each independently H, fluorine, chlorine, bromine, iodine, branched or unbranched (C₁-C₆)-alkyl, (C₃-C₇)-cycloalkyl, unbranched (C₂-C₆)-alkenyl, branched (C₃-C₆)-alkenyl, (C₂-C₆)-alkynyl, aryl, heteroaryl, aryl-(C₁-C₆)-alkyl, (C₁-C₆)-alkoxy-(C₁-C₆)-alkyl, (C₁-C₆)-alkylthio, (C₁-C₆)-fluoroalkylthio, (C₁-C₆)-haloalkyl, (C₁-C₆)-alkoxy, or (C₁-C₆)-haloalkoxy;
R⁴ is H, unbranched (C₁-C₆)-alkyl, fluorine, chlorine, bromine, iodine, (C₁-C₆)-haloalkyl, branched (C₃-C₆)-alkyl, unbranched (C₂-C₆)-alkenyl, branched (C₃-C₆)-alkenyl, (C₃-C₇)-cycloalkyl, (C₁-C₈)-alkoxy, (C₁-C₆)-alkylthio, (C₁-C₆)-haloalkoxy, (C₃-C₇)-cycloalkyl-(C₁-C₆)-alkoxy, (C₂-C₆)-alkynyl-(C₁-C₆)-alkoxy, (C₂-C₆)-alkenyl-(C₁-C₆)-alkoxy, (C₂-C₆)-alkenyloxy-(C₁-C₆)-alkoxy, (C₁-C₆)-alkyloxy-(C₁-C₆)-alkoxy, (C₁-C₆)-alkylamino-(C₁-C₆)-alkoxy, (C₁-C₆)-dialkylamino-(C₁-C₆)-alkoxy, or (C₃-C₇)-cycloalkylamino-(C₁-C₆)-alkoxy;
R⁵ is H, unbranched (C₁-C₆)-alkyl, fluorine, chlorine, bromine, iodine, (C₁-C₆)-haloalkyl, branched (C₃-C₆)-alkyl, (C₃-C₇)-cycloalkyl, or (C₃-C₇)-cycloalkenyl;
R⁶ is H, unbranched (C₁-C₆)-alkyl, fluorine, chlorine, bromine, iodine, (C₁-C₆)-haloalkyl, branched (C₃-C₆)-alkyl, (C₃-C₇)-cycloalkyl, (C₃-C₇)-cycloalkenyl, (C₁-C₆)-alkoxy, (C₁-C₆)-alkylthio, (C₁-C₆)-haloalkoxy, (C₃-C₇)-cycloalkyl-(C₁-C₆)-alkoxy, (C₂-C₆)-alkynyl-(C₁-C₆)-alkoxy, (C₂-C₆)-alkenyl-(C₁-C₆)-alkoxy, (C₂-C₆)-alkenyloxy-(C₁-C₆)-alkoxy, (C₁-C₆)-alkyloxy-(C₁-C₆)-alkoxy, (C₁-C₆)-alkylamino-(C₁-C₆)-alkoxy, (C₁-C₆)-dialkylamino-(C₁-C₆)-alkoxy, or (C₃-C₇)-cycloalkylamino-(C₁-C₆)-alkoxy;
R⁷ is H, unbranched (C₁-C₆)-alkyl, fluorine, chlorine, bromine, iodine, (C₁-C₆)-haloalkyl, branched (C₃-C₆)-alkyl, (C₃-C₇)-cycloalkyl, or (C₃-C₇)-cycloalkenyl;
n is 0, 1, 2, 3, 4, or 5;
W is oxygen, or sulfur;
Y is H, unbranched or branched (C₁-C₈)-alkyl, (C₃-C₇)-cycloalkyl, (C₃-C₇)-cycloalkyl-(C₁-C₆)-alkyl, (C₁-C₈)-cyanoalkyl, (C₃-C₇)-cycloalkenyl, unbranched or branched (C₂-C₆)-alkenyl-(C₁-C₆)-alkyl, (C₁-C₆)-haloalkyl, (C₂-C₆)-alkynyl-(C₁-C₆)-alkyl, aryl-(C₁-C₆)-alkyl, heteroaryl-(C₁-C₆)-alkyl, (C₁-C₆)-alkylcarbonyl, (C₃-C₇)-cycloalkylcarbonyl, arylcarbonyl, aryl-(C₁-C₆)-alkylcarbonyl, (C₁-C₆)-alkoxycarbonyl, (C₁-C₆)-alkylsulfonyl, (C₃-C₇)-cycloalkylsulfonyl, arylsulfonyl, heteroarylsulfonyl, (C₁-C₆)-alkoxycarbonylcarbonyl, aryl-(C₁-C₆)-alkoxycarbonylcarbonyl, (C₁-C₆)-alkylaminothiocarbonyl, (C₁-C₆)-alkylaminocarbonyl, or (C₁-C₆)-alkoxy-(C₁-C₆)-alkyl;
Z¹ is H, (C₁-C₈)-alkyl, (C₃-C₇)-cycloalkyl, chlorine, bromine, (C₂-C₆)-alkenyl-(C₁-C₆)-alkyl, (C₂-C₆)-alkynyl, (C₂-C₆)-alkenyl, (C₁-C₈)-haloalkyl, (C₁-C₈)-cyanoalkyl, heteroaryl-(C₁-C₈)-alkyl, aryl(C₁-C₈)-alkyl, (C₁-C₆)-alkylcarbonyl, (C₁-C₆)-alkoxycarbonyl, (C₁-C₆)-alkylsulfonyl, arylsulfonyl, (C₃-C₇)-cycloalkylsulfonyl, (C₁-C₆)-alkylsulfinyl, arylsulfinyl, (C₃-C₇)-cycloalkylsulfinyl, or (C₁-C₆)-alkoxycarbonyl-(C₁-C₆)-alkyl;
and
Z² is H, (C₁-C₈)-alkyl, (C₃-C₇)-cycloalkyl, (C₂-C₆)-alkenyl-(C₁-C₆)-alkyl, (C₂-C₆)-alkynyl, (C₂-C₆)-alkenyl, (C₁-C₈)-haloalkyl, (C₁-C₈)- cyanoalkyl, heteroaryl-(C₁-C₈)-alkyl, aryl-(C₁-C₈)-alkyl, (C₁-C₆)-alkylcarbonyl, or (C₁-C₆)-alkoxycarbonyl;
or Z¹ and Z² together form an N-(bis(C₁-C₆)-alkyl)sulfanylidene, N-(aryl-(C₁-C₆)-alkyl)sulfanylidene, N-(bis(C₃-C₇)-cycloalkyl)sulfanylidene, N-((C₁-C₆)-alkyl-(C₃-C₇)-cycloalkyl)sulfanylidene group or an N,N-di-(C₁-C₆)-alkylformylidene group.

3. The use as claimed in claim 1, where, in formula (I),
R¹, R², R³ are each independently H, fluorine, chlorine, bromine, iodine, branched or unbranched (C₁-C₄)-alkyl, (C₃-C₆)-cycloalkyl, (C₂-C₄)-alkenyl, (C₂-C₄)-alkynyl, aryl, heteroaryl, aryl-(C₁-C₄)-alkyl, (C₁-C₄)-alkoxy-(C₁-C₄)-alkyl, (C₁-C₄)-alkylthio, (C₁-C₄)-fluoroalkylthio, (C₁-C₄)-haloalkyl, (C₁-C₄)-alkoxy, or (C₁-C₄)-haloalkoxy;
R⁴ is H, unbranched (C₁-C₄)-alkyl, fluorine, chlorine, bromine, (C₁-C₄)-haloalkyl, branched (C₃-C₆)-alkyl, unbranched (C₂-C₄)-alkenyl, branched (C₃-C₆)-alkenyl, (C₃-C₆)-cycloalkyl, (C₁-C₈)-alkoxy, (C₁-C₄)-alkylthio, (C₁-C₆)-haloalkoxy, (C₃-C₆)-cycloalkyl-(C₁-C₄)-alkoxy, (C₂-C₆)-alkynyl-(C₁-C₄)-alkoxy, (C₂-C₆)-alkenyl-(C₁-C₄)-alkoxy, (C₂-C₆)-alkenyloxy-(C₁-C₄)-alkoxy, (C₁-C₆)-alkyloxy-(C₁-C₄)-alkoxy, (C₁-C₆)-alkylamino-(C₁-C₄)-alkoxy, (C₁-C₆)-dialkylamino-(C₁-C₄)-alkoxy, or (C₃-C₆)-cycloalkylamino-(C₁-C₄)-alkoxy;
R⁵ is H, unbranched (C₁-C₄)-alkyl, fluorine, chlorine, bromine, (C₁-C₄)-haloalkyl, branched (C₃-C₆)-alkyl, (C₃-C₆)-cycloalkyl, or (C₃-C₆)-cycloalkenyl;
R⁶ is H, unbranched (C₁-C₄)-alkyl, fluorine, chlorine, bromine, (C₁-C₄)-haloalkyl, branched (C₃-C₆)-alkyl, (C₃-C₆)-cycloalkyl, (C₃-C₆)-cycloalkenyl, (C₁-C₈)-alkoxy, (C₁-C₄)-alkylthio, (C₁-C₆)-haloalkoxy, (C₃-C₆)-cycloalkyl-(C₁-C₄)-alkoxy, (C₂-C₆)-alkynyl-(C₁-C₄)-alkoxy, (C₂-C₆)-alkenyl-(C₁-C₄)-alkoxy, (C₂-C₆)-alkenyloxy-(C₁-C₄)-alkoxy, (C₁-C₆)-alkyloxy-(C₁-C₄)-alkoxy, (C₁-C₆)-alkylamino-(C₁-C₄)-alkoxy, (C₁-C₆)-dialkylamino-(C₁-C₄)-alkoxy, or (C₃-C₆)-cycloalkylamino-(C₁-C₄)-alkoxy;
R⁷ is H, unbranched (C₁-C₄)-alkyl, fluorine, chlorine, bromine, (C₁-C₄)-haloalkyl, branched (C₃-C₆)-alkyl, (C₃-C₆)-cycloalkyl, or (C₃-C₆)-cycloalkenyl;
n is 0, 1, 2, 3, or 4;
W is oxygen, or sulfur;
Y is H, unbranched or branched (C₁-C₆)-alkyl, (C₃-C₆)-cycloalkyl, (C₃-C₆)-cycloalkyl-(C₁-C₄)-alkyl, (C₃-C₆)-cycloalkenyl, (C₁-C₄)-cyanoalkyl, unbranched or branched (C₂-C₄)-alkenyl-(C₁-C₄)-alkyl, (C₁-C₄)-haloalkyl, (C₂-C₄)-alkynyl-(C₁-C₄)-alkyl, aryl-(C₁-C₄)-alkyl, heteroaryl-(C₁-C₄)-alkyl, (C₁-C₅)-alkylcarbonyl, (C₃-C₆)-cycloalkylcarbonyl, arylcarbonyl, aryl-(C₁-C₄)-alkylcarbonyl, (C₁-C₄)-alkoxycarbonyl, (C₁-C₄)-alkylsulfonyl, (C₃-C₆)-cycloalkylsulfonyl, arylsulfonyl, heteroarylsulfonyl, (C₁-C₄)-alkoxycarbonylcarbonyl, aryl-(C₁-C₄)-alkoxycarbonylcarbonyl, (C₁-C₄)-alkylaminothiocarbonyl, (C₁-C₄)-alkylaminocarbonyl, or (C₁-C₄)-alkoxy-(C₁-C₄)-alkyl;
Z¹ is H, (C₁-C₆)-alkyl, (C₃-C₆)-cycloalkyl, chlorine, bromine, (C₂-C₆)-alkenyl-(C₁-C₄)-alkyl, (C₂-C₆)-alkynyl, (C₂-C₆)-alkenyl, (C₁-C₆)-haloalkyl, (C₁-C₆)-cyanoalkyl, heteroaryl-(C₁-C₆)-alkyl, aryl-(C₁-C₆)-alkyl, (C₁-C₄)-alkylcarbonyl, (C₁-C₄)-alkoxycarbonyl, (C₁-C₄)-alkylsulfonyl, arylsulfonyl, (C₃-C₆)-cycloalkylsulfonyl, (C₁-C₄)-alkylsulfinyl, arylsulfinyl, (C₃-C₆)-cycloalkylsulfinyl, or (C₁-C₄)-alkoxycarbonyl-(C₁-C₄)-alkyl;
and
Z² is H, (C₁-C₆)-alkyl, (C₃-C₆)-cycloalkyl, (C₂-C₆)-alkenyl-(C₁-C₄)-alkyl, (C₂-C₆)-alkynyl, (C₂-C₆)-alkenyl, (C₁-C₆)-haloalkyl, (C₁-C₆)-cyanoalkyl, heteroaryl-(C₁-C₆)-alkyl, aryl-(C₁-C₆)-alkyl, (C₁-C₄)-alkylcarbonyl, or (C₁-C₄)-alkoxycarbonyl;
or Z¹ and Z² together form an N-(bis(C₁-C₅)-alkyl)sulfanylidene, N-(aryl-(C₁-C₅)-alkyl)sulfanylidene, N-(bis(C₃-C₆)-cycloalkyl)sulfanylidene, N-((C₁-C₅)-alkyl-(C₃-C₆)-cycloalkyl)sulfanylidene group or an N,N-di-(C₁-C₄)-alkylformylidene group.

4. The use as claimed in claim 1, where, in formula (I),
R₁, R₂, R₃ are each independently H, F, Cl, Br, I, CH₃, CF₃, OCH₃, or OCF₃;
W is oxygen, or sulfur;
n is 0, 1, 2, 3, or 4;
Y is H, methyl, ethyl, n-propyl, n-butyl, isobutyl, isopropyl, n-pentyl, n-hexyl, methylcarbonyl, ethylcarbonyl, n-propylcarbonyl, tert-butylcarbonyl, cyclopropylcarbonyl, cyclobutylcarbonyl, cyclopentylcarbonyl, cyclohexylcarbonyl, methoxycarbonyl, ethoxycarbonyl, prop-1-yn-3-yl, but-2-yn-3-yl, cyanomethyl, 2,2-difluoroethyl, 2,2,2-trifluoroethyl, 2,2,3,3,3-pentafluoropropyl, 3,3,2,2-tetrafluoropropyl, 4,4,4-trifluorobutyl, or methoxycarbonylmethyl;
V represents fluoroalkyls having 1 to 4 carbon atoms and 1 to 9, preferably 1 to 6, identical or different halogen atoms with at least one fluorine atom, i.e. partly fluorinated alkyl, perfluoroalkyl, partly fluorinated haloalkyl, where any other halogen atoms present are selected from the group of fluorine, chlorine and bromine, preferably trifluoromethyl, pentafluoroethyl, heptafluoropropyl, nonafluorobutyl, chlorodifluoromethyl, bromodifluoromethyl, dichlorofluoromethyl, bromofluoromethyl, 1-fluoroethyl, 2-fluoroethyl, fluoromethyl, difluoromethyl, 2,2-difluoroethyl, 2,2,2-trifluoroethyl, 2,2-dichloro-2-fluoroethyl, 2-chloro-2,2-difluoroethyl, difluoro-tert-butyl, 1-fluorocyclopropyl, 2-fluorocyclopropyl, 2-fluoro-2-chlorocyclopropyl, 2-bromo-1,1,2-trifluoroethyl, 1,1,2,2-tetrafluoroethyl, 1,2,2,2-tetrafluoroethyl, 2-chloro-1,1,2-trifluoroethyl, 2-chloro-1,1,2,2-tetrafluoroethyl, 1,2,2,3,3,3-hexafluoropropyl, 1-methyl-2,2,2-trifluoroethyl, 1-chloro-2,2,2-trifluoroethyl, 1,2,2,3,3,4,4,4-octafluorobutyl, 1-fluoro-1-methylethyl, n-propoxydifluoromethyl, methoxydifluoromethyl, ethoxydifluoromethyl, n-butoxydifluoromethyl, methoxyethoxydifluoromethyl, n-pentoxydifluoromethyl, 2-methylbutoxydifluoromethyl, 4-methylpentoxydifluoromethyl, n-hexyloxydifluoromethyl, isohexyloxydifluoromethyl, allyloxypropoxydifluoromethyl, methoxypropoxydifluoromethyl, cyclopropylmethoxydifluoromethyl, cyclobutylmethoxydifluoromethyl, but-3-yn-1-yloxydifluoromethyl, pent-4-yn-1-yloxydifluoromethyl, hex-3-yn-1-yloxydifluoromethyl, but-3-en-1-yloxydifluoromethyl, 2,2,2-trifluoroethoxydifluoromethyl, 3,3,3-trifluoropropoxydifluoromethyl, 4,4,4-trifluorobutoxydifluoromethyl, 4-dimethylam inobutoxydifluoromethyl, or 2-(1-methylpyrrolidin-2-yl)ethoxydifluoromethyl;
Z¹ is H, chlorine, methyl, ethyl, n-propyl, n-butyl, isobutyl, isopropyl, n-pentyl, n-hexyl, cyclopropyl, cyclobutyl, cyclopentyl, cyclohexyl, prop-1-yn-3-yl, but-2-yn-3-yl, cyanomethyl, prop-1-en-3-yl, but-1-en-4-yl, methylsulfonyl, ethylsulfonyl, cyclopropylsulfonyl, isopropylsulfonyl, n-propylsulfonyl, phenylsulfonyl, p-chlorophenylsulfonyl, m-chlorophenylsulfonyl, m,p-dichlorophenylsulfonyl, p-iodophenylsulfonyl, p-trifluoromethoxyphenylsulfonyl, p-methylphenylsulfonyl; methoxycarbonylmethyl, 1-methoxycarbonylethyl, 2- pyridinylmethyl, 2-pyrimidinylmethyl, 2,2-difluoroethyl, 2,2,2-trifluoroethyl, 2,2,3,3,3-pentafluoropropyl, 3,3,2,2-tetrafluoropropyl, or 4,4,4-trifluorobutyl
and
Z² is H, methyl, ethyl, n-propyl, n-butyl, n-pentyl, n-hexyl, cyclopropyl, cyclobutyl, prop-1-yn-3-yl, but-2-yn-3-yl, cyanomethyl, prop-1-en-3-yl, but-1-en-4-yl, methylcarbonyl, ethylcarbonyl, n-propylcarbonyl, tert-butylcarbonyl, cyclopropylcarbonyl, cyclobutylcarbonyl, cyclopentylcarbonyl, cyclohexylcarbonyl, methoxycarbonyl, ethoxycarbonyl, 2-pyridinylmethyl, 2-pyrimidinylmethyl, 2,2-difluoroethyl, 2,2,2-trifluoroethyl, 2,2,3,3,3-pentafluoropropyl, 3,3,2,2-tetrafluoropropyl, or 4,4,4-trifluorobutyl;
or Z¹ and Z² together are N-(di-n-butylsulfanylidene), N-(di-isopropylsulfanylidene), N-(di-n-propylsulfanylidene), N-(di-n-pentylsulfanylidene), N-(diisobutylsulfanylidene), N-(cyclobutylisopropylsulfanylidene), N-(n-propylisopropylsulfanylidene), N-(cyclopropylisopropylsulfanylidene), N-(isobutylisopropylsulfanylidene), or N,N-dimethylformylidene.

5. A treatment for plants, comprising the application of a nontoxic amount of one or more of the compounds of the formula (I), or salts thereof, as claimed in any of claims 1 to 4 for application to plants, to the seeds from which they grow or to the locus in which they grow in their normal habitat and in the absence of extraordinary environmental conditions for growth and or yield increase.

6. The use of one or more of the fluoroalkyl-substituted 2-amidobenzimidazoles as claimed in any of claims 1 to 4 in spray application to plants, to the seeds from which they grow or to the locus in which they grow in their normal habitat and in the absence of extraordinary environmental conditions in combinations with one or more active ingredients selected from the group consisting of insecticides, attractants, acaricides, fungicides, nematicides, herbicides, growth regulators, safeners, substances which influence plant maturity and bactericides.

7. The use of one or more of the fluoroalkyl-substituted 2-amidobenzimidazoles as claimed in any of claims 1 to 4 in spray application to plants, to the seeds from which they grow or to the locus in which they grow in their normal habitat and in the absence of extraordinary environmental conditions in combinations with fertilizers.

8. The use of one or more of the fluoroalkyl-substituted 2-amidobenzimidazoles as claimed in any of claims 1 to 4 for application to genetically modified varieties, the seeds thereof, or to cultivation areas on which these varieties grow in their normal habitat in their normal habitat and in the absence of extraordinary environmental conditions.

9. The use according to one or more of claims 1 to 8 in which the absence of extraordinary environmental conditions is defined by the absence of extreme drought, cold and hot conditions, osmotic stress, waterlogging, elevated soil salinity, elevated exposure to minerals, ozone conditions, strong light conditions, limited availability of nitrogen nutrients or limited availability of phosphorus nutrients, particularly extraordinary environmental conditions beyond normal environmental fluctuations that may occur under normal plant growing conditions.

10. A method for increasing growth and/or yield of plants growing in their normal habitat in the absence of extraordinary environmental conditions the plants being selected from the group of useful plants, ornamental plants, lawn types and trees, which comprises the application of a sufficient, nontoxic amount of one or more compounds of the fluoroalkyl-substituted 2-amidobenzimidazoles as claimed in any of claims 1 to 4 to the area on which the plants grow.

11. A method according to claim 10 in which the absence of extraordinary environmental conditions is defined by the absence of extreme drought, cold and hot conditions, osmotic stress, waterlogging, elevated soil salinity, elevated exposure to minerals, ozone conditions, strong light conditions, limited availability of nitrogen nutrients or limited availability of phosphorus nutrients, particularly extraordinary environmental conditions beyond normal environmental fluctuations that may occur under normal plant growing conditions.
